(19) Europäisches Patentamt
European Patent Office
Office européen des brevets

(11) EP 2 463 708 B1

(12) # EUROPEAN PATENT SPECIFICATION

(45) Date of publication and mention of the grant of the patent:
**15.01.2014 Bulletin 2014/03**

(51) Int Cl.:
***G02F 1/13363*** *(2006.01)* ***G02F 1/1343*** *(2006.01)*
*G02F 1/1337* *(2006.01)*

(21) Application number: **12001183.8**

(22) Date of filing: **24.10.2011**

(54) **Liquid crystal display device**

Flüssigkristallanzeigevorrichtung

Dispositif d'affichage à cristaux liquides

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2010 JP 2010238742**

(43) Date of publication of application:
**13.06.2012 Bulletin 2012/24**

(62) Document number(s) of the earlier application(s) in accordance with Art. 76 EPC:
**11008513.1 / 2 444 836**

(73) Proprietor: **Optrex Corporation**
**Tokyo 116-0014 (JP)**

(72) Inventors:
- **Kamoshida, Kenta**
  **Tokyo 116-0014 (JP)**
- **Shimada, Takashi**
  **Tokyo 116-0014 (JP)**

(74) Representative: **Müller-Boré & Partner Patentanwälte**
**Grafinger Straße 2**
**81671 München (DE)**

(56) References cited:
**US-A1- 2008 309 858**
**US-A1- 2009 262 288**
**US-A1- 2010 053 508**
**US-A1- 2010 165 265**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 463 708 B1

## Description

TECHNICAL FIELD

The present invention relates to a liquid crystal display device, particularly to an IPS (In Plain Switching) mode liquid crystal display device.

BACKGROUND ART

Patent Document 1 discloses a liquid crystal device whereby light leakage is indistinctive even if a stress is exerted to its display screen. The liquid crystal display device disclosed in Patent Document 1 is in such a construction that NPEC films having negative photoelasticity are provided on both upper and lower sides of a liquid crystal cell of a construction having a liquid crystal layer between glass substrates.

Further, as a liquid crystal display device, an IPS mode liquid crystal display device is known (e.g. Patent Documents 2 and 3). The IPS mode liquid crystal display device is provided with a common electrode and pixel electrodes formed on at least one of a pair of transparent substrates sandwiching a liquid crystal layer and is designed to modulate light transmitted through the liquid crystal layer by an electric field formed in parallel with the transparent substrates between the common electrode and pixel electrodes.

Patent Document 2 discloses a construction of an IPS mode liquid crystal display device wherein a retardation layer is formed on the surface close to the liquid crystal layer, of one substrate. Further, Patent Document 2 discloses a case wherein the retardation layer is a half-wavelength plate.

Patent Document 3 discloses an IPS mode liquid crystal display device of such a construction that an electrically-conductive layer having translucency is disposed on the surface on the side opposite to the liquid crystal layer, of a transparent substrate remote from a back light among the pair of transparent substrates sandwiching the liquid crystal layer. With the liquid crystal display device disclosed in Patent Document 3, by providing such an electrically-conductive layer, incidence of abnormality in display is prevented even in a case where a high electric potential such as static electricity from the exterior is exerted.

Further, Non-Patent Documents 1 and 2 disclose an IPS mode liquid crystal display device provided with a biaxial retardation film.

Further, when a plate member is bent by a stress exerted thereto, one surface of such a member stretches, while the other surface shrinks. At that time, in the interior of the member, a plane is present where the stress is 0 and no stretching or shrinkage takes place. Such a plane is called a neutral plane. Further, when such a neutral plane is orthographically projected so that it becomes one curved line, such a curved line is called a neutral axis. Non-Patent Document 3 discloses a formula to calculate the distance from the surface of the member to the neutral axis (the neutral plane) by using a function of Young's modulus (E(y) disclosed in Non-Patent Document 3) of the member with a variable being the distance from the member surface and a function of the width of the cross-section (b(y) disclosed in Non-Patent Document 3) of the member with a variable being the distance from the member surface. That is, when the distance from the member surface is y, the Young's modulus determined by y is represented by E(y). Further, the width of the cross-section of the member determined by is represented by b(y). It is disclosed that in such a case, the distance (here D) from the surface of the member to the neutral axis is represented by the following formula (1):

$$D=\frac{\int_0^H b(y)\cdot E(y)\cdot y\,dy}{\int_0^H b(y)\cdot E(y)\,dy} \qquad \text{Formula (1)}$$

Patent Document 4 relates to a liquid crystal display. The liquid crystal display includes a first substrate and a second substrate opposite to each other with a liquid crystal layer interposed therebetween, first and second electrodes provided on a side of the first substrate facing the liquid crystal layer to drive the liquid crystal layer, and a reflecting layer provided on a part of the side of the first substrate facing the liquid crystal layer. Each pixel region includes a reflective display region where light incoming from the second substrate is reflected by the reflecting layer toward the second substrate to perform display and a transmissive display region where light incoming from the first substrate is transmitted toward the second substrate to perform display. The liquid crystal layer has horizontal alignment in an initial alignment state. A first polarizing plate is provided on a side of the first substrate opposite the liquid crystal layer, the first polarizing plate having a transmission axis parallel or perpendicular to an alignment direction of the liquid crystal layer in the initial alignment state. A second polarizing plate is provided on a side of the second substrate opposite the liquid crystal layer, the second polarizing plate having a transmission axis perpendicular to the transmission axis of the first polarizing plate. A resin layer is provided on a side of the second substrate facing the liquid crystal layer, the resin layer having a first resin layer provided in the transmissive display region and a second resin layer provided in the reflective display region. The first resin layer is a lambda/2 phase layer giving a phase difference of approximately 1/2 wavelength with respect to visible light, and a slow axis of the first resin layer and the transmission axis of the first polarizing plate are disposed so as to be parallel or perpendicular to each other. The second resin layer is a lambda/2 phase layer giving a phase difference of approximately 1/2 wavelength with respect to visible light, and a slow axis of the second resin layer is set in a direction intersecting the alignment direction of the liquid crystal layer. A step portion is provided between the first substrate and the resin layer in order to make the thickness of the liquid crystal layer in the reflective display region smaller than the thickness of the liquid crystal layer in the transmissive display region. A slope portion having a continuously changing thickness is provided in an end portion of the step portion. The slope portion is disposed in the transmissive display region.

The preamble of claims 1 and 4 is based on this patent document 4.

PRIOR ART DOCUMENTS

PATENT DOCUMENTS

Patent Document 1: JP-A-2006-313263
Patent Document 2: JP-A-2008-116731
Patent Document 3: Japanese Patent No. 2,758,864
Patent Document 4: US 2009/262288 A1

NON-PATENT DOCUMENTS

Non-Patent Document 1: Y. Saitoh, S. Kimura, K. Fukasawa, H. Shimizu, "Optically Compensated In-Plane-Switching-Mode TFT-LCD Panel", SID Symposium Digest of Technical Papers 29, 1998
Non-Patent Document 2: D. Kajita, I. Hiyama, Y. Utsumi, "Optically Compensated IPS-LCD for TV Applications", SID Symposium Digest 2005, pp. 1160-1163,2005
Non-Patent Document 3: "STRESS OF SYNTHETIC CROSS-SECTIONAL MEMBER", [online], [retrieved on September 7, 2010], Internet <http://www.e-sunagawa.net/tei01/TEN/pdf/TENno14.pdf>

DISCLOSURE OF INVENTION

TECHNICAL PROBLEM

In a normally black IPS mode liquid crystal display device, when a stress is exerted, light leakage takes place in a black display state. For example, a liquid display device may be assembled by superposing a normally black IPS mode liquid crystal panel on a back light unit and further superposing a front cover as an upper layer thereof. At that time, if a foreign matter is interposed at the contact portion of the back light unit and the liquid crystal panel, a stress will be formed in the liquid crystal panel, and consequently, light leakage will result in the liquid crystal display device. Fig. 32 is a view which schematically illustrates an example of light leakage caused by formation of such a stress. In Fig. 32, portions shown by dotted patterns represent regions where light leakage takes place, and the white portion enclosed by the dotted patterns represents a region where light leakage is particularly intense. If a foreign matter 105 is interposed between a back light (omitted in Fig. 32) and a liquid crystal panel 101, light leakage will result in the vicinity of the foreign matter 105.

Here, a case where a foreign matter is interposed during the assembling, is exemplified, but there are other modes as modes where a stress is formed in a liquid crystal display device. For example, a liquid crystal display device for a vehicle is required to have vibration resistance. Therefore, it is required to fix such a liquid crystal display device to e.g. an instrument panel. By such fixing, a stress will be formed in the liquid crystal display device. Further, for example, in a case where a liquid crystal display device is used together with a touch panel, a stress is exerted to the touch panel, and consequently, a stress is formed also in the liquid crystal display device. Also, in such cases, light leakage will result in a liquid crystal display device of a normally black IPS mode.

Fig. 33 is a view illustrating light leakage of a liquid crystal display device caused by formation of a stress. Here, in order to simplify the description, a single glass body will be described as a sample 112, but the same applies even when the sample 112 shown in Fig. 33 is replaced by a pair of glass substrates sandwiching a liquid crystal layer. On the respective sides of this sample 112, a polarizing plate to be a polarizer 111 and a polarizing plate to be an analyzer 113 are to be provided. The polarizer 111 and the analyzer 113 are disposed, for example, so that their respective absorption axes 121 and 122 are perpendicular to each other. An angle between the direction of the stress formed in the sample 112 and the absorption axis 121 of the polarizer 111 is represented by φ (Fig. 33(a)). When the quantity of leaked light caused by the stress in the sample is represented by I, the leaked light quantity I satisfies a relation represented by the following formula (2):

$$I \propto \{\sin(2\varphi)\}^2 \times \{\sin(\delta/2)\}^2 \qquad \text{Formula (2)}$$

In the formula (2), δ is the phase difference formed by the photoelastic effect and is represented by the following formula (3):

$$\delta = 2\pi d C \sigma / \lambda \qquad \text{Formula (3)}$$

In the formula (3), d is the thickness of the sample 112, C is the photoelastic coefficient, σ is the main stress difference, λ is the wavelength of light.

From the formula (2), it is evident that when φ becomes ±45°, the leaked light quantity I becomes maximum. Therefore, in a case where bending as exemplified in Fig. 33(b) is exerted to the sample, since φ=0°, the leaked light quantity I becomes minimum i.e. 0. Further, in a case where twisting is exerted to the sample has exemplified in Fig. 33 (c), φ=45°, and the leaked light quantity I becomes maximum.

The present inventors have studied the change in the polarization state of light in a case where a stress is exerted to an IPS mode liquid crystal display device so that φ=45°. Fig. 34 is a view illustrating the change in the polarization state of light passing through a common IPS mode liquid crystal display device. As shown in Fig. 34 (a), transparent substrates 202 and 204 are bonded by an adhesive 205, and a liquid crystal layer 203 is sealed between the transparent substrates 202 and 204. And, on the respective transparent substrates 202 and 204, polarizing plates 201 and 205 are, respectively, disposed on their sides opposite to the liquid crystal layer 203. Further, in this example, the polarizing plate 205 is a polarizing plate on the viewer's side. Further, in Fig. 34(a), it is emphatically shown that the liquid crystal display device is in a deformed state as a stress is exerted thereto. The arrows shown in Fig. 34(a), represent stresses formed in the transparent substrates 202 and 204. In the transparent substrates 202 and 204, stresses directed in opposite directions are formed.

Fig. 34(b) is a schematic view wherein the polarizing plate 201, the transparent substrate 202, the liquid crystal layer 203, the transparent substrate 204 and the polarizing plate 205 were, respectively, viewed from a direction of viewing the display image (from the view's side). The polarizing plates 201 and 205 are disposed so that the respective absorption axes are perpendicular to each other. Further, as mentioned above, in the transparent substrates 202 and 204, stresses directed in opposite directions are formed. Here, the angle between the absorption axis of the polarizing plate 201 and the direction of the stress in the transparent substrate 202 is supposed to be 45°. Further, the liquid crystal display device shown in Fig. 34 is an IPS mode, and the alignment direction in the liquid crystal layer in such a state that no voltage is applied, is the same direction as the absorption axis of the polarizing plate 201. By such a construction, the liquid crystal display device becomes normally black.

Fig. 34(c) shows the change in the polarization state of light entered from the polarizing plate 201 side. Light linearly polarized in various directions is supposed to have entered into the polarizing plate 201. When this light has passed through the polarizing plat 201, the polarization state of the light becomes linear polarization in a direction perpendicular to the absorption axis of the polarizing plate 201. When this linearly polarized light passes through the transparent substrate 202 wherein a stress is formed in a direction at an angle of 45° to the polarization direction, it becomes elliptically polarized light. Further, when this light passes through the liquid crystal layer 203 aligned in a prescribed direction, it becomes a reversely directed elliptically polarized light. When this light passes through the transparent substrate 204 wherein a stress is formed in a direction opposite to the direction in the transparent substrate 202, it becomes closer to circular polarization by the birefringence of the transparent substrate 204. Further, at that time, the direction of the elliptical polarization does not change. As a result, the polarization is elliptical polarization in a state prior to passing through the polarization plate 205, and even in a state where no voltage is applied, there is light which passes through the polarizing plate 205. That is, light leakage results.

Further, the present inventors have carried out a similar study also with respect to a VA (Vertical Alignment) mode liquid crystal display device. Fig. 35 is a view illustrating the change in the polarization state of light which passes through the VA mode liquid crystal display device. Fig. 35(a) is a schematic view in a case where in the same manner as in Fig. 34(b), the polarizing plate 201, the transparent substrate 202, the liquid crystal layer 203a, the transparent substrate 204 and the polarizing plate 205 are, respectively, viewed from the viewer's side. Further, absorption axes of the polarizing plates 201 and 205 and the directions of stresses formed in the transparent substrates 202 and 204 are the same as in the case shown in Fig. 34. However, the VA mode liquid crystal layer 203a becomes vertical alignment.

Fig. 35(b) shows the change in the polarization state of light entered from the polarizing plate 201 side. The polarization state of light after passing through the polarizing plate 201 and the transparent substrate 202 is the same as in the case of the IPS mode. In the VA mode, the liquid crystal layer 203a is in vertical alignment at the time of no application of voltage, and accordingly, the polarization state of elliptically polarized light passed through the transparent substrate 202 does not change even when it passes through the liquid crystal layer 203a. That is, it is the same as the polarization state after passing through the transparent substrate 202. When this light passes through the transparent substrate 204, it becomes the same linearly-polarized light as the light before passing through the transparent substrate 202. Further, the polarization direction of this linearly polarized light is the same as the direction of the absorption axis of the polarizing plate 205, whereby light leakage will not result. That is, in the VA mode, there will be no light leakage caused by the formation of a stress.

It is desired to prevent light leakage caused by a stress, as is likely to happen in a normally black IPS mode liquid crystal display device. Patent Document 1 discloses a liquid crystal display device to prevent light leakage by providing an NPEC film. However, there is a problem that it is difficult to produce such an NPEC film. Further, as compared with a transparent substrate, the thickness of the NPEC film is thin, whereby it is difficult to sufficiently compensate the phase difference formed by photoelasticity of the transparent substrate.

Therefore, it is an object of the present invention to provide a liquid crystal display device capable of preventing light leakage when a stress is exerted during no application of an electric field in a normally black IPS mode.

## SOLUTION TO PROBLEM

The liquid crystal display device according to claims 1 and 4. Preferred developments are defined in the dependent claims.

## ADVANTAGEOUS EFFECTS OF INVENTION

According to the present invention, it is possible to prevent light leakage when a stress is exerted in such a state that no electric field is applied in a normally black IPS mode. In the following description "embodiments 1" and "4" are comparative examples not according to the invention.

## BRIEF DESCRIPTION OF DRAWINGS

Fig. 1 is a schematic view illustrating an example of the liquid crystal display device according to the first embodiment.
Fig. 2 is a schematic view illustrating an effective display region.
Fig. 3 is a schematic view illustrating an example of a common electrode and a pixel electrode.
Fig. 4 is a schematic view illustrating an example of the relation of the alignment direction during no application of an electric field, the slow axis of the retardation layer 7 and the absorption axis of each of the polarizing plates 8 and 9, in the first embodiment.
Fig. 5 is a schematic view illustrating other examples of the relation of the alignment direction during no application of an electric field, the slow axis of the retardation layer 7 and the absorption axis of each of the polarizing plates 8 and 9, in the first embodiment.
Fig. 6 is a schematic view illustrating the change in the polarization state of light passing in the liquid crystal display device.
Fig. 7 is a schematic view illustrating the heights of the boundaries of the glass substrates.
Fig. 8 is a schematic view illustrating an example of the disposition of a half-wavelength plate 7 and a second adhesive 6.
Fig. 9 is a schematic view illustrating an example of disposition of a half-wavelength plate 7 and a second adhesive 6.
Fig. 10 is a schematic view illustrating an example of the relation of the distance between the glass substrates and the thickness of the half-wavelength plate.
Fig. 11 is a schematic view illustrating an example of the construction in a case where a retardation layer 7 is disposed on a first glass substrate 1.
Fig. 12 is a schematic view illustrating examples of the relation of the alignment direction during no application of an electric field, the slow axis of the retardation layer 7 and the absorption axis of each of the polarizing plates 8 and 9.

Fig. 13 is a schematic view illustrating the change in a polarization state of light passing in the liquid crystal display device.

Fig. 14 is a schematic view illustrating an example of the liquid crystal display device according to the second embodiment of the present invention.

Fig. 15 is a schematic view illustrating examples of the relation of the alignment direction during no application of an electric field, the slow axis of the half-wavelength plate 7, the absorption axis of each of the polarizing plates 8 and 9, and the slow axis of the biaxial retardation film 31.

Fig. 16 is a schematic view illustrating an example of the construction in a case where a retardation layer 7 is disposed on the first glass substrate 1.

Fig. 17 is a schematic view illustrating examples of the relation of the alignment direction during no application of an electric field, the slow axis of the half-wavelength plate 7, the absorption axis of each of the polarizing plates 8 and 9, and the slow axis of the biaxial retardation film 31.

Fig. 18 is a schematic view illustrating an example of the liquid crystal display device according to the third embodiment of the present invention.

Fig. 19 is a schematic view illustrating an example of the relation of the alignment direction during no application of an electric field, the slow axis of the half-wavelength plate 7, the absorption axis of each of the polarizing plates 8 and 9, and the slow axis of each of the biaxial retardation films 31a and 31b.

Fig. 20 is a schematic view illustrating an example of the construction in a case where a retardation layer 7 is disposed on the first glass substrate 1.

Fig. 21 is a schematic view illustrating the relation of the alignment direction during no application of an electric field, the slow axis of the half-wavelength plate 7, the absorption axis of each of the polarizing plates 8 and 9, and the slow axis of each of the biaxial retardation films 31 a and 31 b.

Fig. 22 is a schematic view illustrating an example of the liquid crystal display device according to the fourth embodiment.

Fig. 23 is a schematic view illustrating other examples of disposition of the retardation layer 51 in the fourth embodiment.

Fig. 24 is a schematic view showing the relation of the alignment direction during no application of an electric field, the slow axis of the retardation layer, and the absorption axis of each of the polarizing plates 8 and 9, in the fourth embodiment.

Fig. 25 is a schematic view illustrating an example of the change in the polarization state of light passing in the liquid crystal display device.

Fig. 26 is a schematic view illustrating a comparison of the change in a polarization state of transmitted light in a halftone display period as between a case where the retardation layer 51 is provided and a case where it is not provided.

Fig. 27 is a schematic view showing a comparison of the change in a polarization state of transmitted light in a white display period as between a case where the retardation layer 51 is provided and a case where it is not provided.

Fig. 28 is a schematic view illustrating an example of the liquid crystal display device according to the fifth embodiment of the present invention.

Fig. 29 is a schematic view illustrating an example of the relation of the alignment direction during no application of an electric field, the slow axis of the half-wavelength plate 51, the absorption axis of each of the polarizing plates 8 and 9, and the slow axis of the biaxial retardation film 31, in the fifth embodiment.

Fig. 30 is a schematic view illustrating an example of the liquid crystal display device according to the sixth embodiment of the present invention.

Fig. 31 is a schematic view illustrating an example of the relation of the alignment direction during no application of an electric field, the slow axis of the half-wavelength plate 51, the absorption axis of each of the polarizing plates 8 and 9, and the slow axis of each of the biaxial retardation films 31 a and 31 b, in the sixth embodiment.

Fig. 32 is a schematic view illustrating an example of light leakage caused by formation of a stress.

Fig. 33 is a schematic view illustrating light leakage of the liquid crystal display device.

Fig. 34 is a schematic view illustrating the change in a polarization state of light passing in a common IPS mode liquid crystal display device.

Fig. 35 is a schematic view illustrating the change in a polarization state of light passing through a VA mode liquid crystal display device.

DESCRIPTION OF EMBODIMENTS

[EMBODIMENT 1]

Fig. 1 is a schematic view illustrating an example of the liquid crystal display device according to the first embodiment. The liquid crystal display device 15 according to the first embodiment comprises a first transparent substrate 1, a second transparent substrate 2, a third transparent substrate 3, a first adhesive 4, a liquid crystal layer 5, a second adhesive 6, a retardation layer 7, a first polarizing plate 8 and a second polarizing plate 9. Here, description will be made with reference to a case where each of the transparent substrates 1 to 3 is a glass substrate, but each of the transparent substrates 1 to 3 may be a transparent substrate other than a glass substrate. Hereinafter, the respective transparent substrates 1 to 3 will be referred to as glass substrates 1 to 3.

The first and second glass substrates 1 and 2 sandwich the liquid crystal layer 5. Specifically, the first adhesive 4 bonds the first and second glass substrates 1 and 2 along their peripheral portions. And, liquid crystal is filled in a space enclosed by the first and second glass substrates 1 and 2 and the first adhesive 4, and the liquid crystal layer 5 is sealed in this space. At the time of filling liquid crystal between the first and second glass substrates 1 and 2, an inlet to inject liquid crystal may be provided in the first adhesive 4, and after filling liquid crystal, the inlet may be closed. The first adhesive 4 may be called also as a sealing material.

Of the pair of glass substrates 1 and 2 sandwiching the liquid crystal layer 5, the glass substrate on the side opposite to the viewer's side is the first glass substrate 1, and the glass substrate on the viewer's side is the second glass substrate 2.

Further, the liquid crystal display device is a normally black IPS mode liquid crystal display device. Specifically, one of the first and second glass substrates 1 and 2 sandwiching the liquid crystal layer 5 is provided with a common electrode (not shown in Fig. 1) set up commonly for respective pixels and a pixel electrode (not shown in Fig. 1) set up for every pixel, on its liquid crystal layer 5 side.

Fig. 2 is a schematic view illustrating the effective display region of the liquid crystal display device 15. Fig. 2 shows a state wherein the liquid crystal display device 15 is observed from the viewer's side of the display image. Collection of pixels 17 of the liquid crystal display device constitutes the effective display region 16. In each pixel within the effective display region 16, the alignment direction of liquid crystal molecules will change when an electric filed is applied by the common electrode and the pixel electrode.

In this example, a case is exemplified wherein the liquid crystal display device 15 is rectangular as observed from the viewer's side. Further, a case is exemplified wherein, as viewed from the viewer's side, the respective pixels are arranged in a matrix in a plane, and the effective display region 16 also becomes rectangular.

Fig. 3 is a schematic view illustrating an example of a common electrode and a pixel electrode in one pixel. In one pixel, one pixel electrode 22 is set up. On the other hand, the common electrode 21 extends to other pixels and is set up commonly for the respective pixels. In other words, the common electrode 21 is set up over the respective pixels. Further, as shown in Fig. 3, each of the pixel electrode 22 and the common electrode 21 is pectinated, and the mutual pectinated projections are disposed to mesh with each other.

The pixel electrode 22 is connected to a source line (not shown) and a gate line (not shown) via an active element (not shown) such as TFT (Thin Film Transistor). For example, respective pixel electrodes 22 are arranged in a matrix. And, along rows of pixel electrodes 22 arranged in a matrix, gate lines are disposed, and along columns thereof, source lines are disposed. A gate of TFT (not shown) of each pixel electrode 22 is connected to a gate line, a source of TFT is connected to a source line, and a drain is connected to the pixel electrode 22.

When the liquid crystal display device is not operated, no electric field is applied between the pixel electrode 22 and the common electrode 21. At that time, liquid crystal molecules in the liquid crystal layer 5 are aligned in parallel to the first and second glass substrates 1 and 2. The alignment direction at that time is determined by alignment layers (such as alignment films, not shown) formed on the surfaces on the liquid crystal layer side, of the first and second glass substrates 1 and 2. For example, by preliminarily applying rubbing to the alignment films of the first and second glass substrates 1 and 2, liquid crystal molecules will be aligned along the rubbing direction and in parallel with the respective glass substrates 1 and 2. To the respective alignment films of the first and second glass substrates 1 and 2, rubbing treatment may be applied so that the directions will be the same when the pair of glass substrates are disposed to face each other. As a result, in such a state that no electric field is applied, liquid crystal molecules in the vicinity of the first glass substrate 1 and liquid crystal molecules in the vicinity of the second glass substrate 2 will be aligned in the same direction, and liquid crystal molecules of the intermediate layer will be aligned in the same direction.

When driving the liquid crystal display device, the driving device (not shown) sets the common electrode 21 at a predetermined potential. Further, the driving device line-sequentially selects a gate line and sets the selected gate line in a power-on state and other gate lines in a power-off state. Further, the driving device sets the electrode of each source line at a potential corresponding to the luminance of each pixel in the selected row. TFT brings the source and the drain in a conduction state when the gate is set in a power-on state, whereby in each pixel in the row in the selected gate line, the pixel electrode in each column becomes equipotential to the source line of its own column. The pixel electrode 22 and the common electrode 21 are disposed so that the mutual pectinated projections will mesh with each other (Fig. 3). Accordingly, by the pixel electrode 22 and the common electrode 21, an electric field parallel to the first and second glass substrates 1 and 2 is applied, whereby liquid crystal molecules in the liquid crystal layer 5 change their alignment direction from the alignment direction when no electric field is applied. Specifically, they change the alignment direction in a plane parallel to the first and second glass substrates 1 and 2. The amount of such a change depends on the intensity of the electric field parallel to the glass substrates 1 and 2.

The retardation layer 7 is disposed on a surface on the side opposite to the liquid crystal layer 5, of one of the first and second transparent substrates 1 and 2. Fig. 1 illustrates a case where the retardation layer 7 is disposed on a surface on the side opposite to the liquid crystal layer 5, of the second glass substrate 2, but the retardation layer 7 may be disposed on a surface on the side opposite to the liquid crystal layer 5, of the first glass substrate 1. The retardation layer 7 imparts to transmitted light a phase difference corresponding to a half-wavelength of the transmitted light.

The phase difference of this retardation layer 7 is within a range of from 50% to 150% of the retardation of the liquid crystal layer 5. For example, the retardation of the liquid crystal layer 5 may be prescribed so that the phase difference of the retardation layer 7 satisfies such a relation that it is within a range of from 50% to 150% of the retardation of the liquid crystal layer 5. By prescribing the retardation of the liquid crystal layer 5 within such a range, it is possible to further prevent light leakage due to distortion of the glass substrate.

As the retardation layer 7, it is possible to use, for example, a half-wavelength plate. Here, description will be made with reference to a case where the retardation layer 7 is a half-wavelength plate.

The third glass substrate 3 is fixed to one (the second glass substrate 2 in this example) of the first and second glass substrates 1 and 2 which is provided with the half-wavelength plate (retardation layer) 7. At that time, the third glass substrate 3 is fixed to face the glass substrate (second glass substrate 2) which is provided with the half-wavelength 7, via the half-wavelength plate 7 interposed. The thickness of the third glass substrate 3 will be described later.

The third glass substrate 3 and the second glass substrate 2 are bonded by a second adhesive 6. As a result, the third glass substrate 3 is fixed to the second glass substrate 2 which is provided with the half-wavelength plate 7.

Further, the second adhesive 6 bonds at least the third glass substrate 3 and the second glass substrate 2. The third glass substrate 3 and the second glass substrate 2 may support the half-wavelength plate 7 as they sandwich the half-wavelength 7 in the mutually bonded state. Otherwise, by using the second adhesive 6, the half-wavelength plate 7 may be bonded to the second glass substrate 2 or the third glass substrate 3, or to both of them.

As the second adhesive 6, it is preferred to use a photocurable adhesive material. When a comparison is made with a case where a thermosetting type adhesive material is used, by the thermosetting type adhesive, the heat treatment to cure the adhesive may adversely affect the half-wavelength plate (retardation layer) 7. Whereas, in the case of a photocurable adhesive, irradiation with light is carried out as treatment to cure the adhesive material, and no heat treatment is carried out, whereby an influence of the heat to the half-wavelength plate 7 can be avoided. As an example of the thermosetting type adhesive material, a thermosetting resin may be mentioned. As the second adhesive 6, a hard material not to relax a deformation stress (i.e. a material having a high Young's modulus) is preferred so that the third glass substrate 3 follows a deformation of the first or second glass substrate 1 or 2. For example, a material having a Young's modulus of at least 100 MPa is preferred.

Further, as the second adhesive 6, it is preferred to employ the same adhesive material as the first adhesive 4. In such a case, it is not necessary to prepare plural types of adhesive materials, as the adhesive. Accordingly, the process for producing the liquid crystal display device 15 can be made efficient.

On one of the first and second glass substrates 1 and 2 (the first glass substrate 1 in this example) which is provided with no half-wavelength plate 7, a first polarizing plate 8 is formed on its surface on the side opposite to the liquid crystal layer 5.

Further, the third glass substrate 3 has a second polarizing plate 9 on its surface on the side opposite to the half-wavelength plate 7. The second polarizing plate 9 is disposed so that the absorption axis of the second polarizing plate 9 itself is perpendicular to the absorption axis of the first polarizing plate 8.

Further, as shown in Fig. 1, it is preferred to dispose a transparent electrically conductive layer 10 between the third glass substrate 3 and the second polarizing plate 9. By disposing the transparent electrically conductive layer 10, it is possible to prevent electrostatic charge between the third glass substrate 3 and the second polarizing plate 9 thereby to prevent display failure due to electrostatic charge. Further, it is possible to prevent electrostatic charge of an electrode to drive the liquid crystal layer 5. Here, it is preferred to apply a prescribed potential to this transparent electrically conductive layer 10, for example, a potential of 1/2 of the grounding potential or the liquid crystal driving potential.

Now, the relation of the alignment direction of liquid crystal molecules in the liquid crystal layer 5 when no electric field is applied by the pixel electrode 22 and the common electrode 21 (hereinafter referred to as the alignment direction during no application of an electric field), the slow axis of the retardation layer (the half-wavelength plate 7 in this example), and the absorption axes of the respective polarizing plates 8 and 9, will be described. Fig. 4 is a schematic view illustrating an example of the relation of the alignment direction during no application of an electric field, the slow axis of the retardation layer 7 and the absorption axes of the respective polarizing plates 8 and 9. Fig. 4 schematically illustrates the state when the first polarizing plate 8, the first glass substrate 1, the liquid crystal layer 5, the second glass substrate 2, the half-wavelength plate 7, the third glass substrate 3 and the second polarizing plate 9 are observed from the viewer's side. Further, in Fig. 4, the arrows shown in the polarizing plates 8 and 9 represent absorption axes, the arrow shown in the liquid crystal layer 5 represents the alignment direction during no application of an electric field, and the arrow shown in the half-wavelength plate 7 represents the slow axis.

As mentioned above, the absorption axis of the first polarizing plate 8 and the absorption axis of the second polarizing plate 9 are perpendicular to each other (see Fig. 4).

Further, in order to improve the effect to prevent light leakage, it is preferred that the slow axis of the half-wavelength plate 7 is made to be perpendicular or parallel to the alignment direction during no application of an electric field. Fig. 4 illustrates a case where the slow axis of the half-wavelength plate 7 is perpendicular to the alignment direction during no application of an electric field. As illustrated here, it is more preferred to dispose the half-wavelength plate 7 so that the slow axis of the half-wavelength plate 7 is perpendicular to the alignment direction during no application of an electric field. In the case where the slow axis of the half-wavelength plate 7 and the alignment direction during no application of an electric field are perpendicular to each other, it is possible to prevent coloring due to the wavelength dispersion, as compared with a case where the slow axis and the alignment direction during no application of an electric field are parallel to each other. However, even with a construction wherein the slow axis and the alignment direction during no application of an electric field are parallel to each other, it is possible to prevent light leakage when a stress is exerted during no application of an electric field.

Further, it is preferred to satisfy such conditions that the slow axis of the half-wavelength plate 7 is parallel with the absorption axis of the polarizing plate 9, and that the alignment direction during no application of an electric filed is parallel to the absorption axis of the first polarizing plate 8. In Fig. 4, these conditions are satisfied. That is, Fig. 4 illustrates a case where the first polarizing plate 8 and the second polarizing plate 9 are disposed so that the slow axis of the half-wavelength plate 7 becomes parallel to the absorption axis of the second polarizing plate 9, and the alignment direction during no application of an electric field becomes parallel to the absorption axis of the first polarizing plate 8. Also, in the case of satisfying the above conditions, it is possible to prevent coloring due to the wavelength dispersion. However, the above conditions may not be satisfied. However, at least the absorption axes of the first and second polarizing plates 8 and 9 should be perpendicular to each other.

The example shown in Fig. 4 represents a case where the half-wavelength plate 7 is disposed so that the slow axis of the half-wavelength plate 7 is perpendicular to the alignment direction during no application of an electric field, the first polarizing plate 8 is disposed so that the absorption axis of the first polarizing plate 8 is parallel to the alignment direction during no application of an electric field, and the second polarizing plate 9 is disposed so that the absorption axis of the second polarizing plate 9 is parallel to the slow axis of the half-wavelength plate 7. In this case, the absorption axes of the two polarizing plates 8 and 9 are perpendicular to each other.

As mentioned above, such a condition that the slow axis of the half-wavelength plate 7 is parallel to the absorption axis of the second polarizing plate 9, and the alignment direction during no application of an electric field is parallel to the absorption axis of the first polarizing plate 8, may not be satisfied. Further, the slow axis and the alignment direction during no application of an electric field may be parallel to each other. Accordingly, the relation of the alignment direction during no application of an electric field, the slow axis and the absorption axes, is not limited to the case shown in Fig. 4. Fig. 5 is a schematic view illustrating other examples of the relation of the alignment direction during no application of an electric field, the slow axis and the absorption axes.

In an example shown in Fig. 5(a), the half-wavelength plate 7 is disposed so that the slow axis of the half-wavelength plate 7 becomes parallel to the alignment direction during no application of an electric field. And the first polarizing plate 8 is disposed so that the absorption axis of the first polarizing plate 8 becomes parallel to the alignment direction during no application of an electric field. Further, the second polarizing plate 9 is disposed so that the absorption axis of the second polarizing plate 9 becomes perpendicular to the slow axis of the half-wavelength plate 7.

Further, in the example shown in Fig. 5(b), the half-wavelength plate 7 is disposed so that the slow axis of the half-wavelength plate 7 becomes parallel to the alignment direction during no application of an electric filed. And, the first polarizing plate 8 is disposed so that the absorption axis of the first polarizing plate 8 becomes perpendicular to the alignment direction during no application of an electric field. Further, the second polarizing plate 9 is disposed so that the absorption axis of the second polarizing plate 9 becomes parallel to the slow axis of the half-wavelength plate 7.

Further, in the example shown in Fig. 5 (c), the half-wavelength plate 7 is disposed so that the slow axis of the half-wavelength plate 7 becomes perpendicular to the alignment direction during no application of an electric field. And, the first polarizing plate 8 is disposed so that the absorption axis of the first polarizing plate 8 becomes perpendicular to the alignment direction during no application of an electric field. Further, the second polarizing plate 9 is disposed so that the absorption axis of the second polarizing plate 9 becomes perpendicular to the slow axis of the half-wavelength plate 7.

Even in a case where the relation of the alignment direction during no application of an electric field, the slow axis and the absorption axis is as illustrated in Figs. 5(a) to (c), the absorption axes of the first and second polarizing plates 8 and 9 are perpendicular to each other. Further, the slow axis of the half-wavelength plate 7 and the alignment direction during no application of an electric field are perpendicular or parallel to each other.

Now, the change in the polarization state of light entered from the first polarizing plate 8 side will be described. Fig. 6 is a schematic view illustrating the change in the polarization state of light passing in the liquid crystal display device. Fig. 6 illustrates a case where the alignment direction during no application of an electric field, the slow axis and the respective absorption axes become the same relation as shown in Fig. 4. Here, the liquid crystal display device is not driven, and no electric field is formed between the common electrode 21 and each pixel electrode 22. And, in such a state, a force for bending the liquid crystal display device is exerted, and a stress is formed in a direction deviated by 45° from the absorption axis of the first polarizing plate 8. The arrows shown in the first and third glass substrates 1 and 3 represent their respective stress directions. This example represents a case where in the third glass substrate 3, a stress to stretch the third glass substrate 3 is formed, and in the first glass substrate 1, a stress to shrink the first glass substrate 1 is formed.

Further, the first and second glass substrates 1 and 2 are bonded by a first adhesive 4, and the second and third glass substrates 2 and 3 are bonded by a second adhesive 6. Therefore, the liquid crystal display device is considered to be a plyboard. And a neutral plane is present in the second glass substrate 2, and therefore, no stress is formed in the second glass substrate 2. Strictly speaking, reverse stresses are formed on the upper and lower sides of the neutral plane in the second glass substrate 2, but it is regarded that they are balanced out so that no stress is formed in the second glass substrate 2.

Let us assume that light linearly polarized in various directions enters into the first polarizing plate 8. When this light has passed through the first polarizing plate 8, the polarization state of light becomes linear polarization in a direction perpendicular to the absorption axis of the first polarizing plate 8 (see Fig. 6).

The first glass substrate 1 having a photoelastic effect formed by the stress, has a function as a single axis retardation plate. And, the slow axis in the first glass substrate 1 is the same as the direction of the stress. Accordingly, if linearly-polarized light passed through the first polarizing plate 8, has passed through the first glass substrate 1 having a stress formed in a direction at 45° to the polarization direction, it becomes elliptically-polarized light (see Fig. 6).

Further, if this elliptically-polarized light has passed through the liquid crystal layer 5 aligned in the alignment direction during no application of an electric field, it becomes elliptically-polarized light with a reversed rotational direction (see Fig. 6).

Then, this light passes through the second glass substrate 2. No stress is formed in the second glass substrate 2. Accordingly, the polarization state does not change as between before and after passing through the second glass substrate 2, and the passed light is elliptically-polarized light with the same rotational direction as passed through the liquid crystal layer 5.

Then, this elliptically-polarized light passes through the half-wavelength plate 7. The half-wavelength plate 7 lets the polarization state of elliptically-polarized light passing through the half-wavelength plate 7 itself be changed as follows. That is, it lets the long axis of the elliptic polarization be axisymmetrically reversed around the slow axis of the half-wavelength plate 7, and it lets the direction of the elliptic polarization be reversed. Accordingly, the rotational direction of the elliptic polarization of light passed through the half-wavelength plate 7 is reversed to one passed through the second glass substrate 2. That is, the rotational direction of the elliptic polarization of light passed through the half-wavelength plate 7 is the same as the rotational direction of the elliptic polarization after passing through the first glass substrate 1.

In the third glass substrate 3, a stress is formed in a direction deviated by 45° from the absorption axis of the first polarizing plate 8. Accordingly, if the elliptically-polarized light passed through the above half-wavelength plate 7, has passed through the third glass substrate 3, the polarization state of light becomes the same linear polarization as before passing through the first glass substrate 1.

The direction of this linear polarization is parallel to the absorption axis of the second polarizing plate 9. Accordingly, the light passed through the third glass substrate 3 will not pass through the second polarizing plate 9.

Accordingly, light leakage can be prevented in a state where no electric field is applied to the liquid crystal layer 5, so that the entire effective display region becomes a black display. That is, in a normally black liquid crystal display device 15, it is possible to prevent light leakage in a case where a stress is exerted during no application of an electric field. Further, at that time, it is possible to further increase the effect to prevent light leakage by adjusting the phase of the half-wavelength plate 7 to be at least 50% and at most 150% of the retardation of the liquid crystal layer 5.

Now, the thickness of the third glass substrate 8 will be described. Here, it is assumed that the first and second glass substrates 1 and 2 have common thickness, Young's modulus and photoelastic coefficient. And, the thickness of the first and second glass substrates 1 and 2 is represented by $d_1$. The Young's modulus of the first and second glass substrates 1 and 2 is represented by $E_1$. The photoelastic coefficient of the first and second glass substrates 1 and 2 is represented by $C_1$. Further, the thickness of the third glass substrate 3 is represented by $d_3$. The Young's modulus of the third glass substrate 3 is represented by $E_3$. The photoelastic coefficient of the third glass substrate 3 is represented

by $C_3$.

Fig. 7 is a schematic view illustrating the heights of boundaries between the glass substrates, when the height of the surface on the side opposite to the viewer's side, of the first glass substrate is regarded to be 0. A height from the surface (hereinafter referred to as the bottom surface) on the side opposite to the viewer's side, of the first glass substrate is represented by a variable y.

The thickness of each of the first to third glass substrates 1, 2 and 3 is very thick as compared with the thickness of each of the polarizing plates 8 and 9, the thickness of the liquid crystal layer 5, and the distance between the second and third glass substrates, so that the thickness of each of the polarizing plates 8 and 9, the thickness of the liquid crystal layer 5 and the distance between the second and third glass substrates, may be negligible. Accordingly, the height of the boundary of the first and second glass substrates 1 and 2 is $d_1$. Further, the height of the boundary of the second and third glass substrates 2 and 3 is $2d_1$. Further, the height of the surface on the viewer's side of the third glass substrate 3 is $2d_1+d_3$. Further, this height $2d_1+d_3$ is represented by d.

Further, the phase differences in the first to third glass substrates 1, 2 and 3 are represented by $\delta_1$, $\delta_2$ and $\delta_3$, respectively. Here, if the optical compensation condition of the following formula (4) is satisfied, the phase differences in the first to third glass substrates 1, 2 and 3 will be canceled out.

$$\delta_1-\delta_2+\delta_3=0 \qquad \text{Formula (4)}$$

Here, in the formula (4), $\delta_2$ is subtracted, because the direction of the elliptical polarization of light is reversed by the second glass substrate 2. Further, the phase difference formed by a photoelastic effect is represented by the above-mentioned formula (3).

Therefore, if both sides of the formula (4) are multiplied by $\lambda/(2\pi)$, the optical compensation condition may be represented by the following formula (5). Here, $\lambda$ is the wavelength of light.

$$C_1\sigma_1d_1-C_1\sigma_2d_1+C_3\sigma_3d_3=0 \qquad \text{Formula (5)}$$

In the formula (5), $\sigma_1$ is the stress in the first glass substrate 1, $\sigma_2$ is the stress in the second glass substrate 2, and $\sigma_3$ is the stress in the third glass substrate 3.

Here, with respect to an optional glass substrate i among the three glass substrates 1 to 3, the following formula (6) is satisfied.

$$\sigma_i=(\sigma_{i\ \text{upper surface}}+\sigma_{i\ \text{lower surface}})/2 \qquad \text{Formula (6)}$$

In the above formula, $\sigma_{1\ \text{upper surface}}$ is the stress at the upper surface of the glass substrate i, and $\sigma_1$ lower surface is the stress at the lower surface of the glass substrate i. Further, the radius of curvature when bending is formed in the liquid crystal display device by a stress, is represented by $\rho$. Further, the height of the neutral plane is represented by D.

At that time, with respect to the third glass substrate 3, the following formulae (7) and (8) will be satisfied.

$$\sigma_{3\ \text{upper surface}}=E_3(2d_1+d_3-D)/\rho \qquad \text{Formula (7)}$$

$$\sigma_{3\ \text{lower surface}}=E_3(2d_1-D)/\rho \qquad \text{Formula (8)}$$

Accordingly, $\sigma_3$ in the third glass substrate 3 is represented by the following formula (9):

$$\sigma_3=E_3(4d_1+d_3-2D)/2\rho \qquad \text{Formula (9)}$$

Further, with respect to the second glass substrate 2, the following formulae (10) and (11) will be satisfied.

$$\sigma_{2\ \text{upper surface}}=E_1(2d_1-D)/\rho \qquad \text{Formula (10)}$$

$$\sigma_{2\ \text{lower surface}} = E_1(d_1 - D)/\rho \qquad \text{Formula (11)}$$

Accordingly, $\sigma_2$ in the second glass substrate 2 is represented by the following formula (12):

$$\sigma_2 = E_1(3d_1 - 2D)/2\rho \qquad \text{Formula (12)}$$

Further, with respect to the first glass substrate 1, the following formulae (13) and (14) will be satisfied.

$$\sigma_{1\ \text{upper surface}} = E_1(d_1 - D)/\rho \qquad \text{Formula (13)}$$

$$\sigma_{1\ \text{lower surface}} = E_1(-D)/\rho \qquad \text{Formula (14)}$$

Accordingly, $\sigma_1$ in the first glass substrate 1 is represented by the following formula (15):

$$\sigma_1 = E_1(d_1 - 2D)/2\rho \qquad \text{Formula (15)}$$

Further, the height D of the neutral plane is represented by the formula (1). Here, it is assumed that the widths of the respective glass substrates 1 to 3 are equal, even if bending is formed in the liquid crystal display device, the widths of the substrates 1 to 3 will be maintained to be equal. That is, b(y) in the formula (1) is regarded as constant. At that time, the height D of the neutral plane is represented by the following formula (16):

$$D = \frac{\int_0^d E(y)\,y\,dy}{\int_0^d E(y)\,dy} = \frac{\int_0^{2d_1} E_1 y\,dy + \int_{2d_1}^{d} E_3 y\,dy}{\int_0^{2d_1} E_1\,dy + \int_{2d_1}^{d} E_3\,dy} = \frac{4E_1 d_1^2 + 4E_3 d_1 d_3 + E_3 d_3^2}{4E_1 d_1 + 2E_3 d_3} \qquad \text{Formula (16)}$$

When the formulae (9), (12), (15) and (16) are substituted into the formula (5) to solve for $d_3$, $d_3$ will be represented by the following formula (17):

$$d_3 = \frac{d_1}{2}\left\{\sqrt{\left(\frac{C_1}{C_3} - 2\right)^2 + \frac{8C_1E_1}{C_3E_3}} + \frac{C_1}{C_3} - 2\right\} \qquad \text{Formula (17)}$$

That is, if the thickness $d_3$ of the third glass substrate 3 satisfies the formula (17), the phase differences in the respective glass substrates 1, 2 and 3 will be canceled out, whereby it is possible to prevent light leakage.

However, the thickness $d_3$ of the third glass substrate 3 may not satisfy the formula (17). Even if $d_3$ does not satisfy the formula (17), it is possible to suppress light leakage, as compared with a case where the third glass substrate 3 and the half-wavelength plate 7 are not provided. Now, the condition for $d_3$ will be described whereby light leakage can be suppressed as compared with a case where the third glass substrate 3 and the half-wavelength plate 7 are not provided.

The following condition is to be satisfied in order to reduce light leakage as compared with a common construction wherein the second polarizing plate 9 is disposed on the second glass substrate 2 without providing the third glass substrate 3 and the half-wavelength plate 7. That is, the phase difference in the first to third glass substrates in the construction wherein the third glass substrate 3 and the half-wavelength plate 7 are provided, is smaller than the phase difference in the first and second glass substrates 1 and 2 in the construction wherein the third glass substrate 3 and the half-wavelength plate 7 are not provided. Specifically, the following formula (18) is to be satisfied, when the phase differences of the first and second glass substrates 1 and 2 in the construction wherein the third glass substrate 3 and the half-wavelength plate 7 are not provided, are represented by $\delta_1'$ and $\delta_2'$, respectively.

$$\delta_1-\delta_2+\delta_3<|\delta_1'-\delta_2'| \qquad \text{Formula (18)}$$

The phase difference formed by a photoelastic effect is represented by the above-mentioned formula (3), and accordingly, in the same manner as in the case where the formula (4) is modified to the formula (5), both sides of the formula (18) are multiplied by $\lambda/(2\pi)$ to obtain the following formula (19):

$$C_1\sigma_1 d_1-C_1\sigma_2 d_1+C_3\sigma_3 d_3<|C_1\sigma_1' d_1-C_1\sigma_2' d_1| \qquad \text{Formula (19)}$$

In the formula (19), $\sigma_1'$ is the stress in the first glass substrate 1 in the construction wherein the third glass substrate 3 and the half-wavelength plate 7 are not provided, and $\sigma_2'$ is the stress in the second glass substrate 2 in the construction wherein the third glass substrate 3 and the half-wavelength plate 7 are not provided. The above-mentioned formula (6) is satisfied also with respect to an individual glass substrate i of the pair of glass substrates in this construction.

Further, when the height of the neutral plane in the construction wherein the third glass substrate 3 and the half-wavelength plate 7 are not provided, is represented by D', with respect to the second glass substrate 2, the following formulae (20) and (21) will be satisfied.

$$\sigma_{2\ \text{upper surface}}'=E_1(2d_1-D')/\rho \qquad \text{Formula (20)}$$

$$\sigma_{2\ \text{lower surface}}'=E_1(d_1-D')/\rho \qquad \text{Formula (21)}$$

Accordingly, by the formula (6), $\sigma_2'$ is represented by the following formula (22):

$$\sigma_2'=E_1(3d_1-2D')/2\rho \qquad \text{Formula (22)}$$

Likewise, with respect to the first glass substrate 1 in the construction wherein the third glass substrate 3 and the half-wavelength plate 7 are not provided, the following formulae (23) and (24) will be satisfied.

$$\sigma_{1\ \text{upper surface}}'=E_1(d_1-D')/\rho \qquad \text{Formula (23)}$$

$$\sigma_{1\ \text{lower surface}}'=E_1(-D')/\rho \qquad \text{Formula (24)}$$

Accordingly, $\sigma_1'$ is represented by the following formula (25):

$$\sigma_1'=E_1(d_1-2D')/2\rho \qquad \text{Formula (25)}$$

Further, the height D' of the neutral plane in the construction wherein the third glass substrate 3 and the half-wavelength plate 7 are not provided, is represented by the following formula (26). Here, b(y) in the formula (1) is assumed to be constant.

$$D' = \frac{\int_0^{2d_1} E(y)\,y\,dy}{\int_0^{2d_1} E(y)\,dy} = \frac{\int_0^{2d_1} E_1\,y\,dy}{\int_0^{2d_1} E_1\,dy} = d_1 \qquad \text{Formula (26)}$$

When the formulae (9), (12), (15), (22), (25) and (26) are substituted into the formula (7) to solve for $d_3$, $d_3$ will be represented by the following formula (27):

$$d_3 < d_1 \left\{ \sqrt{\left(\frac{C_1}{C_3} - 1\right)^2 + \frac{4C_1E_1}{C_3E_3}} + \frac{C_1}{C_3} - 1 \right\} \qquad \text{Formula (27)}$$

That is, when the thickness $d_3$ of the third glass substrate 3 satisfies the formula (27), it is possible to reduce light leakage as compared with a common construction wherein the third glass substrate 3 and the half-wavelength plate 7 are not provided. And, when $d_3$ satisfies the above-mentioned formula (17), it is possible to particularly well prevent light leakage.

Now, disposition of the half-wavelength plate (retardation layer) 7 and the second adhesive 6 will be described. Fig. 8 is a schematic view illustrating an example of disposition of the half-wavelength plate 7 and the second adhesive 6. As shown in Fig. 8, the region for disposition of the half-wavelength plate 7 is preferably larger than the effective display region 16 and includes the effective display region 16. That is, the half-wavelength plate 7 may be disposed to form an area larger than the effective display region 16 and include the effective display region 16 therein. Or, the region for disposition of the half-wavelength plate 7 may coincide with the effective display region 16. That is, the half-wavelength plate 7 may be formed to have the same area and same shape as the effective display region 16 and disposed to overlay so as to coincide with the effective display region 16. In either case, the half-wavelength plate 7 will be present on the effective display region 16, whereby it is possible to suppress light leakage over the entire display region 16.

Further, the second adhesive 6 is disposed at least in a region outside of each side of the effective display region 16. Further, at that time, the length of the second adhesive 6 disposed along each side in the region outside of each side of the effective display region 16, is at least 1/2 of the length of the side of the effective display region 16 corresponding to such a disposition position. In the example shown in Fig. 8, the second adhesive 6 is disposed at four portions along each side of the effective display region 16, outside of the effective display region 16. In the vicinity of the long side of the effective display region 16, the second adhesive 6 is preferably disposed to satisfy $w_{a2} \geqq w_{a1}/2$ wherein $w_{a1}$ is the length of the long side, and $w_{a2}$ is the length of the second adhesive 6 disposed along the long side (see Fig. 8). Likewise, in the vicinity of the short side of the effective display region 16, the second adhesive 6 is preferably disposed to satisfy $w_{b2} \geqq w_{b1}/2$ wherein $w_{b1}$ is the length of the short side, and $w_{b2}$ is the length of the second adhesive 6 disposed along the short side. By disposing the second adhesive 6 in such a manner, it is possible to certainly fix the third glass substrate 3 to the second glass substrate 2. As a result, when a bending stress is formed in the liquid crystal display device, in the second glass substrate 2, it is possible to cancel the stress on the first glass substrate 1 side and the stress on the third glass substrate 3 side.

Further, the peripheral portion of the second and third glass substrates 2 and 3 may not entirely be bonded by the second adhesive 6, so that portions constituting air passages may be left to exist. By such a construction, it is possible to prevent air bubbles or through-holes which are otherwise likely to form in the second adhesive 6, thereby to improve the adhesive strength between the second and third glass substrates 2 and 3.

Further, while Fig. 8 illustrates a case where the second adhesive is disposed at four portions outside of the effective display region 16, the second adhesive 6 may be disposed to entirely cover the effective display region 16. Fig. 9 is a schematic view illustrating an example wherein the region for disposition of the second adhesive 6 shown in Fig. 8 is broadened to cover the effective display region 16. As shown in Fig. 9, in the case of disposing the second adhesive 6 to cover the effective display region 16, a transparent adhesive material (e.g. a transparent resin) is employed as the second adhesive 6. As descried hereinafter, the third glass substrate 3 will have a function as a capacitance type touch panel having a transparent electrode on at least one substrate surface. In such a case, by disposing the transparent resin to cover the effective display region 16 as in the above example, a transparent resin material or production installation to be used for the touch panel may be used for the production of the liquid crystal display device.

Further, in the case of disposing the second adhesive 6 to cover the effective display region 16, the half-wavelength plate 7 will also be bonded to the glass substrate (here the second glass substrate 2). In such a case, as the half-wavelength plate 7 is bonded to the glass substrate 2, it may not be supported as sandwiched between a pair of glass substrates. That is, the distance between the glass substrate on which the half-wavelength plate 7 is disposed, and the third glass substrate, may be larger than the thickness of the half-wavelength plate 7. Fig. 10 is a schematic view illustrating an example of such a case. In the example shown in Fig. 10, the half-wavelength plate 7 is bonded to the second glass substrate 2 by the second adhesive 6. Here, illustrated is a case where the second adhesive 6 is thinly applied in the region overlapping with the half-wavelength plate 7. Further, it is assumed that the distance between the second and third glass substrates 2 and 3 is prescribed to be $h_1$ by the second adhesive 6 disposed outside of the half-wavelength plate 7. When the thickness of the half-wavelength plate 7 is represented by $h_2$, the distance maybe $h_1>h_2$. In such a case, as shown in Fig. 10, a space 19 will be formed between the glass substrates 2 and 3. Further, the second adhesive 6 may be disposed in the space 19.

Further, as shown in Fig 1, the distance between the glass substrate on which the half-wavelength plate 7 is disposed, and the third glass substrate, may be made to be equal to the thickness of the half-wavelength plate 7.

In the foregoing, a case of forming a retardation layer on the second glass substrate 2 has been described, but the retardation layer 7 may be disposed on a surface on the side opposite to the liquid crystal layer 5, of the first glass substrate 1. An example of such a construction is shown in Fig. 11. With respect to the same constituting elements as the constituting elements shown in Fig. 1, the same symbols as used in Fig. 1 will be used, and their detailed description will be omitted.

With respect to the first glass substrate 1, the second glass substrate 2, the first adhesive 4, the liquid crystal layer 5, the common electrode 21 and each pixel electrode 22, the constructions are the same as in the case where the half-wavelength plate (retardation layer) 7 is formed on the second glass substrate 2, and their description will be omitted. Further, the relation between the phase difference of the retardation layer 7 and the retardation of the liquid crystal layer 5 is also as described above.

In the construction shown in Fig. 11, the half-wavelength plate 7 is formed on the first glass substrate 1. And, the third glass substrate 3 is fixed to the first glass substrate 1 having the half-wavelength plate 7 formed thereon. At that time, the third glass substrate 3 is fixed to face the first glass substrate 1 via the half-wavelength plate 7 interposed. Specifically, the third glass substrate 3 is bonded to the first glass substrate 1 by the second adhesive 6.

In the example shown in Fig. 11, out of the glass substrates 1 and 2, the second glass substrates 2 corresponds to a glass substrate having no half-wavelength plate 7 formed thereon. In this second glass substrate 2, the first polarizing plate 8 is formed on its surface on the side opposite to the liquid crystal layer 5.

Further, the third glass substrate 3 is provided with the second polarizing plate 9 on its surface on the side opposite to the half-wavelength plate 7. Such a construction is the same as the construction shown in Fig. 1. However, in the construction shown in Fig. 11, the polarizing plate on the viewer's side is the first polarizing plate 8, and the polarizing plate on the rear surface side is the second polarizing plate 9. Further, in the same manner as in the case shown in Fig. 1, it is preferred to dispose a transparent electrically-conductive layer 10 between the third glass substrate 3 and the second polarizing plate 9.

Further, also with respect to the mode of the region for disposition of the half-wavelength plate and the second adhesive, and the preferred thickness of the third glass substrate 3, their description will be omitted, as they are as described above.

Now, the relation of the alignment direction during no application of an electric field, the slow axis of the half-wavelength plate 7 and the absorption axes of the respective polarizing plates 8 and 9 in the construction wherein the half-wavelength plate 7 is disposed on the first glass substrate 11, will be described. Such a relation is as described above, but the description will be made to meet the construction shown in Fig. 11. Figs. 12(a) to (d) are, respectively, schematic views illustrating examples of the relation of the alignment direction during no application of an electric field, the slow axis of the retardation layer 7 and the absorption axes of the respective polarizing plates 8 and 9.

Figs. 12 schematically illustrate states of cases wherein the second polarizing plate 9, the third glass substrate 3, the half-wavelength plate 7, the first glass substrate 1, the liquid crystal layer 5, the second glass substrate 2 and the first polarizing plate 8 are observed from the viewer's side. Further, the respective arrows shown in Figs. 12 represent the absorption axes, the alignment direction during no application of an electric field, and the slow axis, in the same manner as in Figs. 4 and 5.

The absorption axis of the first polarizing plate 8 and the absorption axis of the second polarizing plate 9 are made to be perpendicular to each other.

Further, in order to improve the effect to prevent light leakage, the slow axis of the half-wavelength plate 7 is preferably made to be perpendicular or parallel to the alignment direction during no application of an electric field, particularly preferably made to be perpendicular to the alignment direction during no application of an electric field. By making the slow axis to be perpendicular to the alignment direction, it is possible to prevent coloration due to a wavelength dispersion.

Further, it is preferred to satisfy a condition that the slow axis of the half-wavelength plate 7 is parallel with the absorption axis of the second polarizing plate 9, and the alignment direction during no application of an electric field is parallel to the absorption axis of the first polarizing plate 8. Also in this case, it is possible to prevent coloring due to a wavelength dispersion.

The example shown in Fig. 12(a) represents a case wherein the half-wavelength plate 7 is disposed so that the slow axis of the half-wavelength plate 7 becomes perpendicular to the alignment direction during no application of an electric field, the first polarizing plate 8 is disposed so that the absorption axis of the first polarizing plate 8 becomes parallel to the alignment direction during no application of an electric filed, and the second polarizing plate 9 is disposed so that the absorption axis of the second polarizing plate 9 becomes parallel to the slow axis of the half-wavelength plate 7. In such a case, the absorption axes of the two polarizing plates 8 and 9 are perpendicular to each other. It is particularly preferred to dispose the respective elements as shown in Fig. 12(a).

While it is preferred to have satisfied the condition that the slow axis of the half-wavelength plate 7 is parallel to the absorption axis of the second polarizing plate 9, and the alignment direction during no application of an electric field is parallel to the absorption axis of the first polarizing plate 8, such a condition may not be satisfied. Further, the slow axis and the alignment direction during no application of an electric filed may be parallel to each other. Figs. 12(b) and (c) show examples of such cases.

In the example shown in Fig. 12(b), the half-wavelength plate 7 is disposed so that the slow axis of the half-wavelength plate 7 becomes parallel to the alignment direction during no application of an electric field. And, the first polarizing plate 8 is disposed so that the absorption axis of the first polarizing plate 8 becomes perpendicular to the alignment direction during no application of an electric field. Further, the second polarizing plate 9 is disposed so that the absorption axis of the second polarizing plate 9 becomes parallel to the slow axis of the half-wavelength plate 7.

Further, in the example shown in Fig. 12(c), the half-wavelength plate 7 is disposed so that the slow axis of the half-wavelength plate 7 becomes parallel to the alignment direction during no application of an electric field. And, the first polarizing plate 8 is disposed so that the absorption axis of the first polarizing plate 8 becomes parallel to the alignment direction during no application of an electric field. Further, the second polarizing plate 9 is disposed so that the absorption axis of the second polarizing plate 9 becomes perpendicular to the slow axis of the half-wavelength plate 7.

In the example shown in Fig. 12(d), the half-wavelength plate 7 is disposed so that the slow axis of the half-wavelength plate 7 becomes perpendicular to the alignment direction during no application of an electric field. And, the first polarizing plate 8 is disposed so that the absorption axis of the first polarizing plate 8 becomes perpendicular to the alignment direction during no application of an electric field. Further, the second polarizing plate 9 is disposed so that the absorption axis of the second polarizing plate 9 becomes perpendicular to the slow axis of the half-wavelength plate 7.

Even in the cases where the relation of the alignment direction during no application of an electric field, the slow axis and the absorption axes is one exemplified in Figs. 12(b) to (d), the absorption axes of the first and second polarizing plates 8 and 9 are perpendicular to each other. Further, the slow axis of the half-wavelength plate 7 and the alignment direction during no application of an electric filed are perpendicular or parallel to each other.

Further, the change in the polarization state of light passing through the liquid crystal display device is the same as in the case shown in Fig. 6, but it will be described to meet with the construction shown in Fig. 11. Fig. 13 is a schematic view illustrating the change in the polarization state of light passing through the liquid crystal display device. Fig. 13 illustrates a case wherein the alignment direction during no application of an electric field, the slow axis and the respective absorption axes become the same relation as in Fig. 12(a). Further, it is assumed that the liquid crystal display device is not driven, and no electric field is formed between the common electrode 21 and each pixel electrode 22. And, it is assumed that in the liquid crystal display device, a stress is formed in a direction deviated by 45° from the absorption axis of the second polarizing plate 9.

Light linearly polarized in various directions is assumed to have entered into the second polarizing plate 9. When this light passes through the second polarizing plate 9, the polarization state of light becomes linear polarization in a direction perpendicular to the absorption axis of the second polarizing plate 9.

When this linearly polarized light passes through the third glass substrate 3 having a stress formed in a direction at 45° from such a polarization direction, it becomes an elliptically-polarized light.

Further, when this elliptically-polarized light passes through the half-wavelength plate 7, it becomes a reversely rotational elliptically-polarized light.

Then, this light passes through the first glass substrate 1. No stress is formed in the first glass substrate 1. Accordingly, the polarization state does not change as between before and after passing through the first glass substrate 1, and it is an elliptical polarization with rotation in the same direction as the direction after passing through the half-wavelength plate 7.

Then, this elliptically-polarized light passes through the liquid crystal layer 5.

The direction of elliptical polarization of light passing through the liquid crystal layer 5 is reversed to the direction after passing through the first glass substrate 1. That is, the polarization state of light passing through the liquid crystal layer 5 is the same after passing through the third glass substrate 3.

When this light passes through the second glass substrate 2, the polarization state of light becomes the same linear polarization as before passing through the third glass substrate 3.

The direction of this linear polarization is parallel to the absorption axis of the first polarizing plate 8. Therefore, light passing through the second glass substrate 2 will not pass through the first polarizing plate 8.

Therefore, in a normally black liquid crystal display device 15, it is possible to prevent light leakage in a case where a stress is exerted at the time when no electric field is applied.

Further, in a state where the liquid crystal display device is driven to display an image in the effective display region, there will be no problem, since even if a stress is formed, such a stress gives no influence over the display quality.

[EMBODIMENT 2]

In the second embodiment and the third embodiment, a liquid crystal display device is shown whereby it is possible to suppress light leakage in such a state that the entire effective display region becomes black display without application of an electric field to the liquid crystal layer, and the viewing angle during such black display can be widened.

Fig. 14 is a schematic view illustrating an example of the liquid crystal display device of the second embodiment of the present invention. The same constituting elements as in the first embodiment are represented by the same symbols as in Fig. 1, and their description will be omitted.

The liquid crystal display device of the second embodiment is provided with a biaxial retardation film (biaxial film) between one of the first and second polarizing plates 8 and 9, and a glass substrate closest to the polarizing plate. That is, it has a biaxial retardation film 31 between the third transparent substrate 3 and the second polarizing plate 9, or between the first transparent substrate 1 and the first polarizing plate 8. Fig. 14 illustrates a construction wherein a biaxial retardation film 31 is provided between the third transparent substrate 3 and the second polarizing plate 9, but the biaxial retardation film 31 may be disposed between the first glass substrate 1 and the second polarizing plate 8.

The biaxial retardation film 31 is a retardation film having a phase difference not only in one direction in plane but also in the thickness direction and is referred to also as an Nz film.

The refractive index in a slow axis direction of the biaxial retardation film 31 is represented by nx, and the refractive index in a direction parallel to the main surface and perpendicular to the slow axis of the biaxial retardation film 31 is represented by ny. Further, the refractive index in a thickness direction of the biaxial retardation film 31 is represented by nz. Then, the biaxial retardation film 31 satisfies a condition of $nx>nz>ny$.

Further, in the biaxial retardation film, a value of $(nz-nx)/(ny-nx)$ is called an Nz value. The Nz value of the biaxial retardation film 31 disposed in this embodiment ($=(nz-nx)/(ny-nx)$) is preferably in the vicinity of 0.5. Specifically, the Nz value is preferably at least 0.4 and at most 0.6. When the Nz value is in the vicinity of 0.5, it is possible to improve such an effect that the viewing angle can be widened in such a state that the entire effective display region becomes black display.

In Fig. 14, an electrically-conductive layer 10 (see Fig. 1) is not shown, but a transparent electrically-conductive layer may be disposed together with the biaxial retardation film 31 between the third glass substrate 3 and the second polarizing plate 9. Such a transparent electrically-conductive layer may be formed on the third glass substrate 3 side or on the second polarizing plate 9 side, as viewed from the biaxial retardation film 31.

The preferred thickness of the third glass substrate 3, and the mode of disposition regions of the half-wavelength plate and the second adhesive, are the same as in the first embodiment, and their description will be omitted.

Now, the relations of the alignment direction during no application of an electric field, and the slow axis of the half-wavelength plate 7, the absorption axes of the respective polarizing plates 8 and 9 and the slow axis of the biaxial retardation film 31, will be described. Fig. 15 is a schematic view illustrating these relations. Fig. 15 schematically illustrates a state in a case where the first polarizing plate 8, the first glass substrate 1, the liquid crystal layer 5, the second glass substrate 2, the half-wavelength plate 7, the third glass substrate 3, the biaxial retardation film 31 and the second polarizing plate 9 are observed from the viewer's side. The arrows shown in Fig. 15 are the same as in Fig. 4. However, the broken line arrows shown in the biaxial retardation film 31 represent the slow axis of the biaxial retardation film. In the biaxial retardation film 31, two broken line arrows are shown, but the slow axis may be parallel to either one of the two arrows. Further, Fig. 15(a) illustrates a case wherein the biaxial retardation film 31 is disposed between the third glass substrate 3 and the second polarizing plate 9, as shown in Fig. 14. Fig. 15(b) illustrates a case where the biaxial retardation film 31 is disposed between the first glass substrate 1 and the first polarizing plate 8.

The absorption axis of the first polarizing plate 8 and the absorption axis of the second polarizing plate 9 are perpendicular to each other.

Further, in this embodiment, the slow axis of the half-wavelength plate 7 and the alignment direction during no application of an electric field are parallel to each other.

And, it is preferred that the slow axis of the biaxial retardation film 31 is parallel to the absorption axis of one of the first and second polarizing plates 8 and 9. In such a case, it is possible to improve the effect to widen the viewing angle.

In the example shown in Fig. 15(a), the half-wavelength plate 7 is disposed so that the slow axis of the half-wavelength plate 7 becomes parallel to the alignment direction during no application of an electric field. And, the first polarizing plate 8 is disposed so that the absorption axis of the first polarizing plate 8 becomes parallel to the alignment direction during no application of an electric field. Further, the second polarizing plate 9 is disposed so that the absorption axis of the second polarizing plate 9 becomes perpendicular to the slow axis of the half-wavelength plate 7. By such disposition, the absorption axis of the first polarizing plate 8 and the absorption axis of the second polarizing plate 9 will be perpendicular to each other. Further, the biaxial retardation film 31 may be disposed between the third glass substrate 3 and the second polarizing plate 9, so that the slow axis of the biaxial retardation film 31 becomes parallel to the absorption axis of the first polarizing plate 8 or to the absorption axis of the second polarizing plate 9.

In the example shown in Fig. 15(b), the half-wavelength plate 7 is disposed so that the slow axis of the half-wavelength plate 7 becomes parallel to the alignment direction during no application of an electric field. And, the first polarizing plate 8 is disposed so that the absorption axis of the first polarizing plate 8 becomes perpendicular to the alignment direction during no application of an electric field. Further, the second polarizing plate 9 is disposed so that the absorption axis of the second polarizing plate 9 becomes parallel to the slow axis of the half-wavelength plate 7. By such disposition, the absorption axis of the first polarizing plate 8 and the absorption axis of the second polarizing plate 9 will be perpendicular to each other. The biaxial retardation film 31 may be disposed between the first glass substrate 1 and the first polarizing plate 8 so that the slow axis of the biaxial retardation film 31 becomes parallel to the absorption axis of the first polarizing plate 8 or to the absorption axis of the second polarizing plate 9.

Like in the first embodiment, let us consider a case where a bending force is exerted to the liquid crystal display device in such a state that no electric field is applied to the liquid crystal display device, so that a stress is formed in a direction deviated by 45° from the absorption axis of the first polarizing plate 8. At that time, the stresses to be formed in the first to third glass substrates are the same as in the first embodiment. For example, in the third glass substrate 3, a stress to stretch the third glass substrate 3 will be formed, and in the first glass substrate 1, a stress to shrink the first glass substrate 1 will be formed. The second glass substrate 2 contains a neutral plane and may be regarded as having no strain formed. Further, the biaxial retardation film 31 presents no influence to the polarization state of light passing therethrough. Accordingly, even when light enters from the first polarizing plate 8 side at that time, the polarization state of such light changes in the same manner as in the first embodiment (see Fig. 4), whereby the light will not pass through the second polarizing plate 9. That is, in a normally black liquid crystal display device, it is possible to prevent light leakage in a case where a stress is exerted during no application of an electric field.

Further, in this embodiment, the biaxial retardation film 31 satisfying a condition of $nx>nz>ny$ is disposed, whereby it is possible to widen the viewing angle at the time when the liquid crystal display device is not driven, and the entire screen becomes black display. When the Nz value is in the vicinity of 0.5, this effect may further be improved.

The example shown in Fig. 14 illustrates a case where the half-wavelength plate 7 is formed on the second glass substrate 2, but the half-wavelength plate 7 may be disposed on a surface on the side opposite to the liquid crystal layer 5, of the first glass substrate 1. An example of such a construction is shown in Fig. 16. The same constituting elements as in the first embodiment are represented by the same symbols as in Fig. 11, and their description will be omitted.

Also, in the construction wherein the half-wavelength plate 7 is formed on the first glass substrate 1, the liquid crystal display device has a biaxial retardation film 31 between the third transparent substrate 3 and the second polarizing plate 9 or between the first transparent substrate 1 and the first polarizing plate 8. Fig. 16 illustrates a construction wherein a biaxial retardation film 31 is provided between the third transparent substrate 3 and the second polarizing plate 9, but the biaxial retardation film 31 may be disposed between the first glass substrate 1 and the first polarizing plate 8. This biaxial retardation film 31 is the same as the biaxial retardation film 31 in the construction illustrated in Fig. 14.

In Fig. 16, an electrically-conductive layer 10 (see Fig. 11) is not shown, but a transparent electrically-conductive layer may be disposed together with the biaxial retardation film 31 between the third glass substrate 3 and the second polarizing plate 9. Further, the preferred thickness of the third glass substrate 3, and the mode of disposition regions of the half-wavelength plate and the second adhesive, are the same as in the first embodiment, and their description will be omitted.

Like Fig. 15, Fig. 17 is a schematic view illustrating the relations of the alignment direction during no application of an electric field, the slow axis of the half-wavelength plate 7, the absorption axes of the respective polarizing plates 8 and 9, the slow axis of the biaxial retardation film 31. Fig. 17(a) illustrates a case where the biaxial retardation film 31 is disposed between the third glass substrate 3 and the second polarizing plate 9. Fig. 17(b) illustrates a case where the biaxial retardation film 31 is disposed between the first glass substrate 1 and the first polarizing plate 8.

Also in the construction wherein the half-wavelength plate 7 is formed on the first glass substrate 1, the relation of the respective axes, etc. is as described above. That is, the absorption axis of the first polarizing plate 8 and the absorption axis of the second polarizing plate 9 are perpendicular to each other. Further, the slow axis of the half-wavelength plate 7 and the alignment direction during no application of an electric field are parallel to each other. And, the slow axis of the biaxial retardation film 31 is parallel with the absorption axis of one of the first and the second polarizing plates 8 and 9.

In the example shown in Fig. 17(a), the half-wavelength plate 7 is disposed so that the slow axis of the half-wavelength plate 7 becomes parallel to the alignment direction during no application of an electric field. And, the first polarizing plate 8 is disposed so that the absorption axis of the first polarizing plate 8 becomes parallel to the alignment direction during no application of an electric field. Further, the second polarizing plate 9 is disposed so that the absorption axis of the second polarizing plate 9 becomes perpendicular to the slow axis of the half-wavelength plate 7. By such disposition, the absorption axis of the first polarizing plate 8 and the absorption axis of the second polarizing plate 9 will be perpendicular to each other. The biaxial retardation film 31 may be disposed between the third glass substrate 3 and the second polarizing plate 9, so that the slow axis of the biaxial retardation film 31 becomes parallel to the absorption axis of the first polarizing plate 8 or to the absorption axis of the second polarizing plate 9.

In the example shown in Fig. 17(b), the half-wavelength plate 7 is disposed so that the slow axis of the half-wavelength plate 7 becomes parallel to the alignment direction during no application of an electric field. And, the first polarizing plate 8 is disposed so that the absorption axis of the first polarizing plate 8 becomes perpendicular to the alignment direction during no application of an electric field. Further, the second polarizing plate 9 is disposed so that the absorption axis of the second polarizing plate 9 becomes parallel to the slow axis of the half-wavelength plate 7. By such disposition, the absorption axis of the first polarizing plate 8 and the absorption axis of the second polarizing plate 9 will be perpendicular to each other. Further, the biaxial retardation film 31 may be disposed between the second glass substrate 2 and the first polarizing plate 8 so that the slow axis of the biaxial retardation film 31 becomes parallel to the absorption axis of the first polarizing plate 8 or to the absorption axis of the second polarizing plate 9.

As described above, the biaxial retardation film 31 presents no influence to the polarization state of light passing therethrough. Even if light enters from the second polarizing plate 9 side when a bending force is exerted to the liquid crystal display device in such a state that no electric field is applied to the liquid crystal display device, the polarization state of such light changes in the same manner as in the first embodiment (see Fig. 13), whereby the light will not pass through the first polarizing plate 8. That is, in a normally black liquid crystal display device, it is possible to prevent light leakage in a case where a stress is exerted when no electric field is applied.

Further, as the biaxial retardation film 31 is disposed, like in the case of the construction shown in Fig. 14, it is possible to widen the viewing angle when the entire screen becomes black display.

[EMBODIMENT 3]

The third embodiment represents a liquid crystal display device which is capable of obtaining the same effect as in the second embodiment. However, the liquid crystal display device in the third embodiment is provided with two biaxial retardation films.

Fig. 18 is a schematic view illustrating an example of the liquid crystal display device according to the third embodiment of the present invention. The same constituting elements in the first embodiment are represented by the same symbols as in Fig. 1, and their description will be omitted.

The liquid crystal display device of the third embodiment has a first biaxial retardation film 31 a between the first polarizing plate 8 and a glass substrate having no half-wavelength plate 7 provided (the first glass substrate 1 in the example shown in Fig. 18), out of the first and second glass substrates 1 and 2. Further, it has a second biaxial retardation film 31 b between the third glass substrate 3 and the second polarizing plate 9.

The refractive index in the slow axis direction in the first and second biaxial retardation films 31 a and 31 b is represented by nx. And, the refractive index in a direction parallel to the main surface and perpendicular to the slow axis in the first and second biaxial retardation films 31 a and 31 b is represented by ny. And, the refractive index in a thickness direction of the first and second biaxial retardation films 31 a and 31 b is represented nz. Then, the first and second biaxial retardation films 31 a and 31 b satisfy a condition of $nx>nz>ny$.

Further, the Nz value of the first and second biaxial retardation films 31 a and 31 b ($=(nz-nx)/(ny-nx)$) is preferably at least 0.2 and at most 0.4. In a construction wherein two biaxial retardation films 31 a and 31 b are disposed, by adjusting the Nz value to be a value within this range, it is possible to further improve the effect to widen the viewing angle in such a state that the entire effective display region becomes black display. It is particularly preferred that the Nz value of the first and second biaxial retardation films 31 a and 31 b is 0.25.

The preferred thickness of the third glass substrate 3 and the mode of disposition regions for the half-wavelength plate and the second adhesive are the same as in the first embodiment, and their description will be omitted.

Now, the relation of the alignment direction during no application of an electric field, the slow axis of the half-wavelength plate 7, the absorption axes of the respective polarizing plates 8 and 9 and the slow axes of the respective biaxial retardation films 31 a and 31 b, will be described. Fig. 19 is a schematic view illustrating such a relation. Fig. 19 schematically illustrates a state in a case where the first polarizing plate 8, the first biaxial retardation film 31 a, the first glass substrate 1, the liquid crystal layer 5, the second glass substrate 2, the half-wavelength plate 7, the third glass substrate 3, the second biaxial retardation film 31 b and the second polarizing plate 9 are observed from the viewer's side. The arrows shown in Fig. 15 are the same as in Fig. 4. However, the arrows shown in the respective biaxial retardation films 31 a and 31 b represent the slow axes of the biaxial retardation films.

The absorption axis of the first polarizing plate 8 and the absorption axis of the second polarizing plate 9 are perpendicular to each other.

Further, the alignment direction during no application of an electric field is perpendicular to the absorption axis of the first polarizing plate 8 and is also perpendicular to the slow axis of the half-wavelength plate 7. That is, the alignment direction during no application of an electric field is perpendicular to each of the absorption axis of the first polarizing plate 8 and the slow axis of the half-wavelength plate 7.

And, it is preferred that the slow axis of the first biaxial retardation film 31 a is parallel to the absorption axis of the first polarizing plate 8, and the slow axis of the second biaxial retardation film 31 b is parallel to the absorption axis of the second polarizing plate 9. In such a case, it is possible to improve the effect to widen the viewing angle.

In the example shown in Fig. 19, the half-wavelength plate 7 is disposed so that the slow axis of the half-wavelength plate 7 becomes perpendicular to the alignment direction during no application of an electric field. The first polarizing plate 8 is disposed so that the absorption axis of the first polarizing plate 8 becomes perpendicular to the alignment direction during no application of an electric field. Further, the first biaxial retardation film 31 a may be disposed between the first glass substrate 1 and the first polarizing plate 8 so that the slow axis of the first biaxial retardation film 31 a becomes parallel to the absorption axis of the first polarizing plate 8. The second polarizing plate 9 is disposed so that the absorption axis becomes perpendicular to the absorption axis of the first polarizing plate 8. The second biaxial retardation film 31 b may be disposed between the third glass substrate 3 and the second polarizing plate 9 so that the slow axis of the second biaxial retardation film 31 b becomes parallel to the absorption axis of the second polarizing plate 9.

Each biaxial retardation film 31 a or 31 b presents no influence to the polarization state of light passing therethrough. Accordingly, even if light enters from the first polarizing plate 8 side when a bending force is exerted to the liquid crystal display device in such a state that no electric field is applied to the liquid crystal display device, the polarization state of such light changes in the same manner as in the first embodiment (see Fig. 6), and the light will not pass through the second polarizing plate 9. That is, in a normally black liquid crystal display device, it is possible to prevent light leakage in a case where a stress is exerted at the time when no electric field is applied.

Further, as the first and second biaxial retardation films 31 a and 31 b are disposed, it is possible to widen the viewing angle when the liquid crystal display device is not driven and the entire screen becomes black display. When the Nz value is at least 0.2 and at most 0.4, it is possible to further improve this effect.

The example shown in Fig 18 illustrates a case where the half-wavelength plate 7 is formed on the second glass substrate 2, but the half-wavelength plate 7 may be disposed on a surface on the side opposite to the liquid crystal layer 5, of the first glass substrate 1. An example of such a construction is shown in Fig. 20. The same constituting elements as in the first embodiment are represented by the same symbols as in Fig. 11, and their description will be omitted.

Also in the construction wherein the half-wavelength plate 7 is formed on the first glass substrate 1, the liquid crystal display device has a first biaxial retardation film 31 a between the first polarizing plate 8 and the glass substrate having no half-wavelength plate 7 provided, out of the first and second glass substrates 1 and 2. In the example shown in Fig. 20, the second glass substrate 2 corresponds to the glass substrate having no half-wavelength plate 7 provided. Accordingly, it has the first biaxial retardation film 31 a between the second glass substrate 2 and the first polarizing plate 8. Further, it has the second biaxial retardation film 31 b between the third glass substrate 3 and the second polarizing plate 9. The first and second biaxial retardation films 31 a and 31 b are the same as the first and second biaxial retardation films 31 a and 31 b in the construction illustrated in Fig. 18.

The preferred thickness of the third glass substrate 3 and the mode of disposition regions for the half-wavelength plate and the second adhesive are the same as in the first embodiment, and their description will be omitted.

Fig. 21 is a schematic view illustrating the relation of the alignment direction during no application of an electric field, the slow axis of the half-wavelength plate 7, the absorption axes of the respective polarizing plates 8 and 9 and the slow axes of the respective biaxial retardation films 31 a and 31 b.

Also in the construction wherein the half-wavelength plate 7 is formed on the first glass substrate 1, the relation of the respective axes, etc., are as described above. That is, the absorption axis of the first polarizing plate 8 and the absorption axis of the second polarizing plate 9 are perpendicular to each other. And , the alignment direction during no application of an electric field is perpendicular to each of the absorption axis of the first polarizing plate 8 and the slow axis of the half-wavelength plate 7.

Further, it is preferred that the slow axis of the first biaxial retardation film 31 a is parallel to the absorption axis of the first polarizing plate 8, and the slow axis of the second biaxial retardation film 31 b is parallel to the absorption axis of the second polarizing plate 9.

In the example shown in Fig. 21, the half-wavelength plate 7 is disposed so that the slow axis of the half-wavelength plate 7 becomes perpendicular to the alignment direction during no application of an electric field. The first polarizing plate 8 is disposed so that the absorption axis of the first polarizing plate 8 becomes perpendicular to the alignment direction during no application of an electric field. Further, the first biaxial retardation film 31 a may be disposed between the first glass substrate 1 and the first polarizing plate 8 so that the slow axis of the first biaxial retardation film 31 a becomes parallel to the absorption axis of the first polarizing plate 8. The second polarizing plate 9 is disposed so that the absorption axis becomes perpendicular to the absorption axis of the first polarizing plate 8. The second biaxial retardation film 31 b may be disposed between the third glass substrate 3 and the second polarizing plate 9 so that the slow axis of the second biaxial retardation film 31 b becomes parallel to the absorption axis of the second polarizing plate 9.

Even if light enters from the second polarizing plate 9 side when a bending force is exerted to the liquid crystal display device in such a state that no electric field is applied to the liquid crystal display device, the polarization state of such light changes in the same manner as in the first embodiment (see Fig. 13), and the light will not pass through the first polarizing plate 8. That is, in a normally black liquid crystal display device, it is possible to prevent light leakage in a case where a stress is exerted at the time when no electric field is applied.

Further, as two biaxial retardation films 31 a and 31 b are disposed, like in the case of the construction shown in Fig. 18, it is possible to widen the viewing angle when the entire screen becomes black display.

In Figs. 18 and 20, an electrically-conductive layer 10 (see Fig. 1) is not shown, but a transparent electrically-conductive layer may be disposed together with the biaxial retardation film 31 between the third glass substrate 3 and the second polarizing plate 9 also in this embodiment. The transparent electrically-conductive layer may be formed on the third glass substrate 3 side or on the second polarizing plate 9 side as viewed from the biaxial retardation film 31.

Now, a modified example of each of the first to third embodiments will be described. In each of the first to third embodiments, a case is shown where the retardation layer 7 is a half-wavelength plate. However, the retardation layer 7 may be other than a half-wavelength plate.

For example, a second liquid crystal layer may be provided separately from the liquid crystal layer 5, by injecting liquid crystal into a space defined by one of the first and second glass substrates 1 and 2, closer to the third glass substrate 3, the third glass substrate 3 and the second adhesive 6. And, such a second liquid crystal layer may be used as the retardation layer 7.

In the case where the second liquid crystal layer is used as the retardation layer 7 like this, liquid crystal molecules in the second liquid crystal layer are aligned in a certain direction, so that the slow axis of the retardation layer 7 is prescribed to be an axis parallel to the alignment direction of the liquid crystal molecules. Accordingly, alignment films may be provided on the glass substrate close the third glass substrate 3, and rubbing treatment, etc. may be applied to the alignment films, whereby the alignment direction of liquid crystal molecules may be prescribed so that the alignment direction of liquid crystal molecules will be parallel to the slow axis of the retardation layer 7. By prescribing the alignment direction of liquid crystal molecules, it is possible to set the slow axis of a preferred retardation layer 7 in each of the first to third embodiments.

Further, in the case where the second liquid crystal layer is used as the retardation layer 7, the second liquid crystal layer is preferably made of the same material as the liquid crystal layer 5. It is thereby possible to use a common liquid crystal material for the second liquid crystal layer (retardation layer 7) and the liquid crystal layer 5 thereby to make the production of the liquid crystal display device efficient.

Further, at the time of sealing the second liquid crystal layer between the glass substrate close to the third glass substrate 3, and the third glass substrate 3, an inlet to inject liquid crystal may be formed in the second adhesive 6, and after filling the liquid crystal, the inlet may be closed. At that time, the inlet to be formed in the first adhesive 4 to inject the liquid crystal layer 5 and the inlet to be formed in the second adhesive 6 to inject the second liquid crystal layer are preferably formed on the same side of the liquid crystal display device. When such two inlets are formed on the same side, the step of injecting the liquid crystal layer 5 and the step of injecting the second liquid crystal layer to be a retardation layer 7 can be carried out simultaneously, whereby the production of the liquid crystal display device can be made efficient.

Further, an adhesive function may be provided to the retardation layer 7 to be formed between the third glass substrate 3 and the glass substrate close to the glass substrate 3. For example, in order to cover the effective display region, a half-wavelength plate provided with a double-sided adhesive tape may be bonded on the glass substrate close to the third glass substrate 3, and then, the third glass substrate 3 may be bonded to the half-wavelength plate. In such a case, a transparent adhesive material is employed as the second adhesive 6.

Further, the third glass substrate 3 may be a capacitance type touch panel having transparent electrodes on at least one substrate surface. For example, a plurality of transparent electrodes to detect the contact of a finger may be formed by patterning on the third glass substrate 3. Such transparent electrodes may be formed by patterning on each side of the third glass substrate 3. In such a case, a contact position detector (not shown) may be provided which detects the contact position of a finger on the touch panel by a change in the capacitance of a capacitor formed by e.g. the finger and the transparent electrodes.

[EMBODIMENT 4]

Fig. 22 is a schematic view illustrating an example of the liquid crystal display device according to the fourth embodiment. The same constituting elements as in the first embodiment are represented by the same symbols as in Fig. 1, and their detailed description will be omitted. Further, in this embodiment, it is not necessary to use the second adhesive, and the adhesive (sealing material) to bond the first transparent substrate 1 and the second transparent substrate 2 will be referred to simply as an adhesive 4.
The liquid crystal display device 45 according to the fourth embodiment comprises the first transparent substrate 1, the second transparent substrate 2, the adhesive 4, the liquid crystal layer 5, the retardation layer 51, the first polarizing plate 8 and the second polarizing plate 9. Also in this embodiment, description will be made with reference to a case where the first transparent substrate 1 and the second transparent substrate 2 are the glass substrates. Further, the glass substrate on the side opposite to the viewer's side is the first glass substrate 1, and the glass substrate on the viewer's side is the second glass substrate 2.
The first adhesive 4 bonds the first and second glass substrates 1 and 2 along their peripheral portions. And, liquid crystal is filled into a space defined by the first and second glass substrates 1 and 2 and the first adhesive 4, and the liquid crystal layer 5 is sealed in this space. As a result, the liquid crystal layer 5 is sandwiched between the glass substrates 1 and 2.
On the first glass substrate 1, the polarizing plate 8 is formed on its surface on the side opposite to the liquid crystal layer 5. In this embodiment, the polarizing plate 8 formed on the first glass substrate 1 will be referred to as the first polarizing plate.
Further, on the second glass substrate 2, the polarizing plate 9 is formed on its surface on the side opposite to the liquid crystal layer 5. In this embodiment, the polarizing plate 9 formed on the second glass substrate 2 will be referred to as the second polarizing plate. The second polarizing plate 9 is disposed so that the absorption axis of the second polarizing plate 9 itself becomes perpendicular to the absorption axis of the first polarizing plate 8. And, the alignment direction during no application of an electric field is set to be perpendicular to one of the absorption axis of the first polarizing plate 8 and the absorption axis of the second polarizing plate 9 and to be parallel to the other one.
Further, the liquid crystal display device 45 according to this embodiment is also a normally black IPS mode liquid crystal display device, and a common electrode 21 and a pixel electrode 22 (see Fig. 3) disposed for every pixel are formed on one of the first and second glass substrates 1 and 2. The mode for disposition of the common electrode 21 and the pixel electrode 22, and the change in the alignment direction of liquid crystal molecules by an application of an electric field between the common electrode 21 and the pixel electrode 22, are the same as in the first embodiment, and their description will be omitted.
Further, in this embodiment, the retardation layer 51 is formed between the liquid crystal layer 5 and at least one of the first and second glass substrates 1 and 2. That is, the retardation layer 51 is formed on each of the first and second glass substrates 1 and 2 or on one of them. And, the retardation layer 51 is disposed on a surface on the liquid crystal layer side, of the glass substrate on which the retardation layer 51 is to be formed. Fig. 22 illustrates a construction wherein the retardation layer 51 is formed on the second glass substrate 2.
Fig. 23 shows other examples for disposition of the retardation layer 51. Fig. 23(a) illustrates a construction wherein the retardation layer 51 is formed on the first glass substrate 1. Further, Fig. 23(b) illustrates a construction wherein the retardation layer 51 a is on the first glass substrate 1, and the retardation layer 52b is formed on the second glass substrate 2. In this embodiment, as illustrated in Fig. 23(b), the retardation layer 51 may be divided into a plurality of retardation layers.
As a whole, the retardation layer 51 imparts to transmitted light a phase difference corresponding to a half-wavelength of the transmitted light. That is, as shown in Figs. 22 and 23(a), in a case where the retardation layer 51 is a single layer, such a single retardation layer 51 imparts to transmitted light a phase difference corresponding to a half-wavelength. Therefore, in a case where the retardation layer 51 is a single layer, a single half-wavelength plate may be used as the retardation layer 51.
Whereas, in a case where the retardation layer is divided into a plurality of layers as shown in Fig. 23(b), the sum of phase differences imparted to the transmitted light by the respective layers may be a half-wavelength of the transmitted light. In a case where the retardation layer is divided into a plurality of layers like this, such individual layers may be made of retardation films, so that the sum of phase differences of the respective retardation films becomes a half-wavelength of the transmitted light. Fig. 23(b) illustrates a case where the retardation layer 51 is divided into two layers 51 a and 51 b, but the retardation layer 51 may be divided into three or more layers. For example, such layers may be made of three or more retardation films. In this respect, the same applies also to a case where the retardation layer 51 is formed on only one of the glass substrates. For example, in the construction illustrated in Fig. 22 or 23(a), as the retardation layer 51, a plurality of retardation films may be laminated for use instead of using a single half-wavelength plate.

The sum of phase differences imparted to transmitted light by the retardation layer 51 should be within a range of at least 50% and at most 150% of the retardation of the liquid crystal layer 5. For example, the retardation of the liquid crystal layer 5 may be prescribed so that this condition is satisfied. The above "sum" means, when the retardation layer 51 is a single layer, the phase difference of such a single layer, and, when the retardation layer 51 is divided into a plurality of layers, the sum of phase differences of such a plurality of layers.

Further, the retardation layer 51 is disposed in a region enclosed by the adhesive 4. Therefore, the retardation layer 51 does not reach the end of the glass substrate on which the retardation layer 51 is disposed. As a result, it is possible to certainly seal the liquid crystal layer 5 by the glass substrates 1 and 2 and the adhesive 4.

Further, the liquid crystal display device 45 is provided with alignment layers 52 which regulate the alignment direction of liquid crystal molecules in the liquid crystal layer 5 in such a state that no electric field is applied between each pixel electrode 22 and the common electrode 21. The alignment layers 52 are formed to constitute the uppermost layers on the liquid crystal layer 5 side of the first and second glass substrates 1 and 2. That is, the alignment layers 52 are formed to contact the liquid crystal layer 5. In Figs. 1, 11, 14, 16, 18 and 20, the alignment layers 52 are not shown, but also in each of the first to third embodiments, the alignment layers are formed as the uppermost layers on the liquid crystal layer 5 side of the first and second glass substrates 1 and 2, respectively.

The alignment layer 52 (see Fig. 22) is formed to constitute the uppermost layer on the liquid crystal layer 5 side, of the glass substrate, and accordingly, the retardation layer 51 is present between the alignment layer 52 and the glass substrate surface. At that time, so long as the retardation layer 51 is disposed between the alignment layer 52 and the glass substrate surface, sequence at the time of lamination is not particularly limited. For example, a color filter (not shown) is to be formed on the glass substrate on its liquid crystal layer 5 side, either the color filter or the retardation layer may be formed first on the glass substrate.

The alignment layer 52 may be formed, for example, by disposing an alignment film on the liquid crystal layer side of the glass substrate and applying rubbing treatment to the alignment film. Or, it may be formed on the surface of the retardation plate (retardation layer 51) by applying rubbing treatment to a surface of the retardation film (e.g. the half-wavelength plate) to be used as the retardation layer 51. If the alignment layer 52 is formed by applying rubbing treatment to the retardation film like this, it becomes unnecessary to provide an alignment film, and thus it is possible to reduce the production cost of the liquid crystal display device.

The following description will be made with reference to a case where the retardation layer 51 is made of a single half-wavelength plate. By using a single half-wavelength plate as the retardation layer 51 like this, it is possible to reduce the production cost by reducing the number of components constituting the liquid crystal display device. Further, in such a case, the half-wavelength plate 51 is formed on one of the two glass substrates 1 and 2, as shown in Fig. 22 or 23(a). And, by applying rubbing treatment on a surface to contact the liquid crystal layer 5, of the half-wavelength plate 51, an alignment layer 52 may be formed on the surface of the half-wavelength plate 51. In such a case, the disposition region of the alignment layer 52 will coincide with the disposition region of the half-wavelength plate 51.

In a case where an alignment film is formed, and rubbing treatment is applied to the alignment film to form an alignment layer 52, such an alignment film may be formed so that the disposition region of the alignment film includes the disposition region of the half-wavelength plate 51, and rubbing treatment may be applied to the entire alignment film. In such a case, the disposition region of the alignment layer 52 includes the disposition region of the half-wavelength plate 51.

Further, it is preferred that the disposition region of the half-wavelength plate 51 includes the effective display region 16 (see Fig. 2). Or, the disposition region of the half-wavelength plate 51 may coincide with the effective display region 16. In either case, the half-wavelength plate 51 is superposed on the effective display region 16, whereby it is possible to prevent light leakage over the entire effective display region 16.

Fig. 24 is a schematic view illustrating the relation of the alignment direction during no application of an electric field, the slow axis of the retardation layer (the half-wavelength plate 7 in this example) and the absorption axes of the respective polarizing plates 8 and 9. Fig. 24 schematically illustrates the state of a case where the first polarizing plate 8, the first glass substrate 1, the liquid crystal layer 5, the half-wavelength plate 51, the second glass substrate 2, and the second polarizing plate 9 are observed from the viewer’s side. Like in the case of Fig. 4, etc., the arrows shown in the polarizing plates 8 and 9 represent the absorption axes, the arrow shown in the liquid crystal layer 5 represents the alignment direction during no application of an electric field, and the arrow shown in the half-wavelength plate 51 represents the slow axis.

As shown in Fig. 24, the absorption axis of the first polarizing plate 8 and the absorption axis of the second polarizing plate 9 are perpendicular to each other. The alignment direction during no application of an electric field is perpendicular to one of the absorption axis of the first polarizing plate 8 and the absorption axis of the second polarizing plate 9 and parallel to the other one.

Further, the slow axis of the half-wavelength plate 51 is perpendicular or parallel to the alignment direction during no application of an electric field. The example shown in Fig. 24 represents a case where the half-wavelength plate 51 is disposed so that the slow axis of the half-wavelength plate 51 becomes perpendicular to the alignment direction during no application of an electric field. It is preferred that the slow axis of the half-wavelength plate and the alignment direction during no application of an electric field are perpendicular to each other like this. In the case where both are perpendicular to each other, it is possible to suppress coloration due to wavelength dispersion, as compared with the case where both are parallel to each other. However, even by a construction wherein the slow axis and the alignment direction during no application of an electric field are parallel to each other, it is possible to prevent light leakage in a case where a stress is exerted at the time when no electric field is applied.

Further, Fig. 24 illustrates a case where the first polarizing plate 8 and the second polarizing plate 9 are disposed so that the absorption axis of the first polarizing plate 8 becomes parallel to the alignment direction during no application of an electric field, and the absorption axis of the second polarizing plate 9 becomes perpendicular to the alignment direction during no application of an electric field. At that time, the absorption axis of the first polarizing plate 8 and the absorption axis of the second polarizing plate 9 are perpendicular to each other.

Fig. 25 is a schematic view illustrating an example of the change in the polarization state of light passing through the liquid crystal display device according to the fourth embodiment. It is assumed that the liquid crystal display device is not driven and no electric filed is applied between the common electrode 21 and each pixel electrode 22. And, it is assumed that in the liquid crystal display device, a stress is formed in a direction deviated by 45° from the absorption axis of the first polarizing plate 8. In Fig. 25, the arrows shown in the glass substrates 1 and 2 represent the stress directions. For example, in the second glass substrate 2, a stress to stretch the second glass substrate 2 is formed, and in the first glass substrate 1, a stress to shrink the first glass substrate 1 is formed.

It is assumed that light linearly polarized in various directions has entered into the first polarizing plate 8. When this light passes through the first polarizing plate 8, the polarization state of the light becomes linear polarization in a direction perpendicular to the absorption axis of the first polarizing plate 8.

When this linearly polarized light passes through the first glass substrate 1 in which a stress is formed in a direction at 45° from the polarization direction, it becomes elliptically-polarized light.

Further, when this elliptically-polarized light passes through the liquid crystal layer 5, it becomes elliptically-polarized light with the rotation reversed.

Further, this elliptically-polarized light passes through the half-wavelength plate 51. The direction of the elliptical polarization of light passed through the half-wavelength plate 51 is reversed to the direction when passed through the liquid crystal layer 5. That is, the polarization state of light passed through the half-wavelength plate 51 is the same as when passed through the first glass substrate 1.

When this light passes through the second glass substrate 2, the polarization state of light becomes the same linear polarization as before passing through the first glass substrate 1.

The direction of this linear polarization is parallel to the absorption axis of the second polarizing plate 9. Therefore, the light passed through the second glass substrate 2 will not pass through the second polarizing plate 9.

Thus, in a normally black liquid crystal display device 15, it is possible to prevent light leakage in a case where a stress is exerted at the time when no electric field is applied.

The foregoing description has been made with reference to a case where the half-wavelength plate (retardation layer) 51 is formed on the second glass substrate 2, but also in a case where the half-wavelength plate 51 is formed on the first glass substrate 1, the change in the polarization state of light is the same as describe above, and it is possible to prevent light leakage. Further, also in a case where the retardation layer 51 is divided into a plurality of layers, and such layers are disposed on each of the glass substrates 1 and 2, it is possible to prevent light leakage.

Further, even if the retardation layer 51 is formed between the first and second glass substrates 1 and 2, there will be no influence to the image at the time of displaying the image in the effective display region by driving the liquid crystal display device. Further, in such a state that an image is displayed by driving the liquid crystal display device, even if a stress is formed, such will not influence the display quality. Therefore, in the following description of Figs. 26 and 27, a case where no stress is formed will be described.

Fig. 26 is a schematic view illustrating a comparison of changes in polarization state of transmitted light during halftone display as between a case where the retardation layer 51 is formed and a case where the retardation layer 51 is not formed. Fig. 26(a) illustrates a case where the retardation layer 51 is formed, and Fig. 26(b) illustrates a case where the retardation layer 51 is not formed. Further, in Fig. 26, the broken line arrow in the liquid crystal layer 5 represents the alignment direction during no application of an electric field, and the solid line arrow represents the alignment direction during the halftone display. That is, it shows a state where an electric field corresponding to the halftone is applied between the common electrode and each pixel electrode, and liquid crystal molecules are deviated at 22.5° from the alignment direction during no application of an electric filed.

In this example, no stress is formed in the glass substrates 1 and 2, whereby the glass substrates 1 and 2 present no influence to the polarization state of transmitted light. Thus, the polarization state of light after passing through the first glass substrate 1 becomes linear polarization in a direction perpendicular to the absorption axis of the first polarizing plate 8. And when this linearly polarized light passes through the liquid crystal layer 5, only its direction changes, while it remains to be linearly polarized. When this linearly polarized light passes through the retardation layer 51 (see Fig. 26(a)), only its direction changes axisymmetrically based on the axis perpendicular to the slow axis of the retardation layer 51, while it remains to be linearly polarized.

Accordingly, as between a case where the retardation layer 51 is present and a case where the retardation layer 51 is not present, the polarization state of light entering into the second glass substrate 2 is not changed to be a linearly polarized, while only the polarizing direction is axisymmetrically different based on the axis perpendicular to the slow axis of the retardation layer 51 (see Figs. 26(a) and (b)).

Thus, the amount of linearly polarized light passing through the second polarizing plate 9 does not change irrespective of the presence or absence of the retardation layer 51. This means that provision of the retardation layer 51 does not influence the halftone display.

Fig. 27 is a schematic view illustrating a comparison of changes in the polarization state of transmitted light during white display as between a case where the retardation layer 51 is formed and a case where the retardation layer 51 is not formed. Fig. 27(a) illustrates a case where the retardation layer 51 is formed, and Fig. 27(b) illustrates a case where the retardation layer 51 is not formed. Further, in Fig. 27, the broken line arrow in the liquid crystal layer 5 represents the alignment direction during no application of an electric field, and the solid line arrow in the liquid crystal layer 5 represents the alignment direction during the white display. That is, it illustrates a state where an electric field corresponding to the white display is applied between the common electrode and each pixel electrode, and liquid crystal molecules are deviated at 45° from the alignment direction during no application of an electric field.

The polarization state of light entering into the liquid crystal layer 5 is the same as in the case shown in Fig. 26 and becomes linear polarization in a direction perpendicular to the absorption axis of the first polarizing plate 8 irrespective of the presence or absence of the retardation layer 51. When this linearly polarized light passes through the liquid crystal layer 5, it changes so that its direction becomes parallel to the alignment direction during no application of an electric field, while it remains to be linearly polarized. Even when this light passes through the retardation layer 51, the polarization state will not change. Accordingly, irrespective of the presence or absence of the retardation layer 51, light passed through the liquid crystal layer 5 will pass, as it is, through the second glass substrate 2 and the second polarizing plate 9. This means that provision of the retardation layer 51 does not influence the white display.

Thus, even if the retardation layer 51 is formed between the glass substrates 1 and 2, there will be no influence to the display image at the time of driving the liquid crystal display device.

[EMBODIMENT 5]

The fifth embodiment and the sixth embodiment show liquid crystal display devices which provide an effect to prevent light leakage in such a state that no electric field is applied to the liquid crystal layer, and the entire effective display region becomes black display, and which are capable of widening the viewing angle during such black display.

Fig. 28 is a schematic view illustrating an example of the liquid crystal display device according to the fifth embodiment of the present invention. The same constituting elements as in the fourth embodiment are represented by the same symbols as in Fig. 22, and their description will be omitted.

The liquid crystal display device according to the fifth embodiment has a biaxial retardation film 31 between the first glass substrate 1 and the first polarizing plate 8, or between the second glass substrate 2 and the second polarizing plate 9. Fig. 28 illustrates a construction wherein the biaxial retardation film 31 is provided between the second glass substrate 2 and the second polarizing plate 9, but the biaxial retardation film 31 may be disposed between the first glass substrate 1 and the second polarizing plate 8.

The biaxial retardation film 31 is the same as the biaxial retardation film in the second embodiment. That is, it satisfies the condition of nx>nz>ny. Further, the Nz value of the biaxial retardation film 31 (=(nz-nx)/(ny-nx)) is preferably in the vicinity of 0.5. Specifically, the Nz value is preferably at least 0.4 and at most 0.6. When the Nz value is in the vicinity of 0.5, it is possible to improve the effect to widen the viewing angle in such a state that the entire effective display region becomes black display.

The mode of disposition regions of the adhesive 4, the retardation layer 51 and the alignment film 52 is the same as in the fourth embodiment, and its description will be omitted.

The following description will be made with reference to a case where the retardation layer 51 is a half-wavelength plate.

The relation of the alignment direction during no application of an electric field, the slow axis of the half-wavelength plate 51, the absorption axes of the respective polarizing plates 8 and 9, and the slow axis of the biaxial retardation film 31 will be described. Fig. 29 schematically illustrates a state of a case where the first polarizing plate 8, the first glass substrate 1, the liquid crystal layer 5, the half-wavelength plate 51, the second glass substrate 2, the biaxial retardation film 31 and the second polarizing plate 9 are observed from the viewer's side. The arrows shown in Fig. 29 are the same as in Fig. 24. The broken line arrow shown in the biaxial retardation film 31 represents the slow axis of the biaxial retardation film. In the biaxial retardation film 31, two broken line arrows are shown, but the slow axis may be parallel to one of these two arrows. Further, Fig. 29(a) illustrates a case where the biaxial retardation film 31 is disposed between the second glass substrate 2 and the second polarizing plate 9, as shown in Fig. 28. Fig. 29(b) illustrates a case where the biaxial retardation film 31 is disposed between the first glass substrate 1 and the first polarizing plate 8.

The absorption axis of the first polarizing plate 8 and the absorption axis of the second polarizing plate 9 are perpendicular to each other. And, the alignment direction during no application of an electric field is perpendicular to one of the absorption axis of the first polarizing plate 8 and the absorption axis of the second polarizing plate 9 and parallel to the other.

Further, in this embodiment, the slow axis of the half-wavelength plate 51 and the alignment direction during no application of an electric field, are parallel to each other.

And, the slow axis of the biaxial retardation film 31 is preferably parallel to the absorption axis of one of the first and second polarizing plates 8 and 9. In such a case, it is possible to further improve the effect to widen the viewing angle.

In the example shown in Fig. 29(a), the half-wavelength plate 51 is disposed so that the slow axis of the half-wavelength plate 51 becomes parallel to the alignment direction during no application of an electric field. And, Fig. 29 (a) illustrates a case where the first polarizing plate 8 and the second polarizing plate 9 are disposed so that the absorption axis of the first polarizing plate 8 becomes parallel to the alignment direction during no application of an electric field, and the absorption axis of the second polarizing plate 9 becomes perpendicular to the alignment direction during no application of an electric field. At that time, the absorption axis of the first polarizing plate 8 and the absorption axis of the second polarizing plate 9 are perpendicular to each other. The biaxial retardation film 31 may be disposed between the second glass substrate 2 and the second polarizing plate 9 so that the slow axis of the biaxial retardation film 31 becomes parallel to the absorption axis of the first polarizing plate 8 or to the absorption axis of the second polarizing plate 9.

In the example shown in Fig. 29(b), the half-wavelength plate 51 is disposed so that the slow axis of the half-wavelength plate 51 becomes parallel to the alignment direction during no application of an electric field. And, Fig. 29 (b) illustrates a case where the first polarizing plate 8 and the second polarizing plate 9 are disposed so that the absorption axis of the first polarizing plate 8 becomes perpendicular to the alignment direction during no application of an electric field, and the absorption axis of the second polarizing plate 9 becomes parallel to the alignment direction during no application of an electric field. At that time, the absorption axis of the first polarizing plate 8 and the absorption axis of the second polarizing plate 9 are perpendicular to each other. The biaxial retardation film 31 may be disposed between the first glass substrate 1 and the first polarizing plate 8 so that the slow axis of the biaxial retardation film 31 becomes parallel to the absorption axis of the first polarizing plate 8 or to the absorption axis of the second polarizing plate 9.

Fig. 29 illustrates a case where the half-wavelength plate (retardation layer) 51 is formed on the second glass substrate 2, but in each of Figs. 29(a) and (b), the half-wavelength plate 51 may be formed on the first glass substrate 1. Even in such a case, the direction of the slow axis of the half-wavelength plate 51 may be parallel to the alignment direction during no application of an electric field. Further, in each of Figs. 29(a) and (b), the retardation layer 51 may be made of a plurality of retardation films, and some retardation films may be formed on the first glass substrate 1, and other retardation films may be formed on the second glass substrate 2. In such a case, the slow axes of the plurality of retardation films constituting the retardation layer 51 may all be made to be parallel to the alignment direction during no application of an electric field.

In the same manner as in the fourth embodiment, let us consider a case where a stress is formed in a direction deviated by 45° from the absorption axis of the first polarizing plate 8 by a bending force exerted to the liquid crystal display device in such a state that no electric field is applied to the liquid crystal display device. At that time, the stresses formed in the first and second glass substrates 1 and 2 are the same as in fourth embodiment (see Fig. 25). Further, the biaxial retardation film 31 presents no influence to the polarization state of light passing therethrough. Thus, even if light enters from the first polarizing plate 8 side, the polarization state of such light changes in the same manner as in the fourth embodiment (see Fig. 25), and such light will not pass through the second polarizing plate 9. That is, in a normally black liquid crystal display device, it is possible to prevent light leakage in a case where a stress is exerted at the time when no electric field is applied.

Further, in this embodiment, the biaxial retardation film 31 which satisfies the condition of $nx>nz>ny$, is disposed, whereby it is possible to widen the viewing angle at the time when the liquid crystal display device is not driven and the entire screen becomes black display. When the Nz value is in the vicinity of 0.5, it is possible to further improve such an effect.

[EMBODIMENT 6]

The sixth embodiment shows a liquid crystal display device capable of obtaining the same effect as in the fifth embodiment. However, the liquid crystal display device according to the sixth embodiment is provided with two biaxial retardation films.

Fig. 30 is a schematic view illustrating an example of the liquid crystal display device according to the sixth embodiment of the present invention. The same constituting elements as in the fourth embodiment are represented by the same symbols as in Fig. 22, and their description will be omitted.

The liquid crystal display device according to the sixth embodiment has a first biaxial retardation film 31 a between the first glass substrate 1 and the first polarizing plate 8. Further, it has a second biaxial retardation film 31 b between the second glass substrate 2 and the second polarizing plate 9.

The first and second biaxial retardation films 31 a and 31 b are the same as two biaxial retardation films 31 a and 31 b in the third embodiment, respectively. That is, the first and second biaxial retardation films 31 a and 31 b satisfy the condition of nx>nz>ny.

Further, the Nz value of the first and second biaxial retardation films 31 a and 31 b (=(nz-nx)/(ny-nx)) is preferably at least 0.2 and at most 0.4. By the construction wherein two biaxial retardation films 31 a and 31 b are disposed, by adjusting the Nz value to be a value within this range, it is possible to further improve the effect to widen the viewing angle in such a state that the entire effective display region becomes black display. It is particularly preferred that the Nz value of the biaxial retardation films 31 a and 31 b is 0.25.

The mode of disposition regions for the adhesive 4, the retardation layer 51 and the alignment films 52 is the same as in the fourth embodiment, and its description will be omitted.

However, in the sixth embodiment, the retardation layer 51 is formed on one of the first and second glass substrates 1 and 2. That is, in a case where the retardation layer 51 is made of a single half-wavelength plate, such a half-wavelength plate is disposed on one of the glass substrates. Or in a case where the retardation layer 51 is made of a plurality of retardation films, such a plurality of retardation films are all disposed on one of the glass substrates 1 and 2. Thus, the sixth embodiment will not take such a construction that among the plurality of retardation films to constitute the retardation layer 51, some of them are disposed on the first glass substrate 1 and other retardation films are disposed on the second glass substrate 2.

The following description will be made with reference to a case where the retardation layer 51 is a half-wavelength plate.

Now, the relation of the alignment direction during no application of an electric field, the slow axis of the half-wavelength plate 51, the absorption axes of the respective polarizing plates 8 and 9 and the slow axes of the respective biaxial retardation films 31 a and 31 b will be described. Fig. 31 is a schematic view illustrating such a relation. Fig. 31 schematically illustrates a state of a case where the first polarizing plate 8, the first biaxial retardation film 31 a, the first glass substrate 1, the liquid crystal layer 5, the half-wavelength plate 51, the second glass substrate 2, the second biaxial retardation film 31 b and the second polarizing plate 9 are observed from the viewer's side. The arrows shown in Fig. 31 are the same as in Fig. 24. However, the arrows shown in the respective biaxial retardation films 31 a and 31 b represent the slow axes of the biaxial retardation films. Further, Fig. 31 (a) illustrates a case where the half-wavelength plate 51 is disposed on the second glass substrate 2. Fig. 31 (b) illustrates a case where the half-wavelength plate 51 is disposed on the first glass substrate 1.

The absorption axis of the first polarizing plate 8 and the absorption axis of the second polarizing plate 9 are perpendicular to each other. And, the alignment direction during no application of an electric field becomes perpendicular to one of the absorption axis of the first polarizing plate 8 and the absorption axis of the second polarizing plate 9 and parallel to the other one.

Further, in this embodiment, the slow axis of the half-wavelength plate 51 and the alignment direction during no application of an electric field are perpendicular to each other.

And, it is preferred that the slow axis of the first biaxial retardation film 31 a is parallel to the absorption axis of the first polarizing plate 8, and the slow axis of the second biaxial retardation film 31 b is parallel to the absorption axis of the second polarizing plate 9. In such a case, it is possible to improve the effect to widen the viewing angle.

In the example shown in Fig. 31 (a), the half-wavelength plate 51 is disposed on the second glass substrate 2 so that the slow axis of the half-wavelength plate 51 becomes perpendicular to the alignment direction during no application of an electric field. And, Fig. 29(a) illustrates a case where the first polarizing plate 8 and the second polarizing plate 9 are disposed so that the absorption axis of the first polarizing plate 8 becomes perpendicular to the alignment direction during no application of an electric field, and the absorption axis of the second polarizing plate 9 becomes parallel to the alignment direction during no application of an electric field. At that time, the absorption axis of the first polarizing plate 8 and the absorption axis of the second polarizing plate 9 are perpendicular to each other. The first biaxial retardation film 31 a may be disposed between the first glass substrate 1 and the first polarizing plate 8 so that the slow axis of the first biaxial retardation film 31 a becomes parallel to the absorption axis of the first polarizing plate 8. The second biaxial retardation film 31 b may be disposed between the second glass substrate 2 and the second polarizing plate 9 so that the slow axis of the second biaxial retardation film 31 b becomes parallel to the absorption axis of the second polarizing plate 9.

In the example shown in Fig. 31 (b), the half-wavelength plate 51 is disposed on the first glass substrate 1 so that the slow axis of the half-wavelength plate 51 becomes perpendicular to the alignment direction during no application of an electric field. And, Fig. 29(b) illustrates a case where the first polarizing plate 8 and the second polarizing plate 9 are disposed so that the absorption axis of the first polarizing plate 8 becomes parallel to the alignment direction during no application of an electric field, and the absorption axis of the second polarizing plate 9 becomes perpendicular to the alignment direction during no application of an electric field. At that time, the absorption axis of the first polarizing plate 8 and the absorption axis of the second polarizing plate 9 are perpendicular to each other. The first biaxial retardation film 31 a may be disposed between the first glass substrate 1 and the first polarizing plate 8 so that the slow axis of the first biaxial retardation film 31 a becomes parallel to the absorption axis of the first polarizing plate 8. The second biaxial retardation film 31 b may be disposed between the second glass substrate 2 and the second polarizing plate 9 so that the slow axis of the second biaxial retardation film 31 b becomes parallel to the absorption axis of the second polarizing plate 9.

The respective biaxial retardation films 31 a and 31 b present no influence to the polarization state of light passing therethrough. Therefore, even if light enters from the first polarizing plate 8 side when a bending force is exerted to the liquid crystal display device in such a state that no electric filed is applied to the liquid crystal display device, the polarization state of such light changes in the same manner as in the fourth embodiment, and the light will not pass through the second polarizing plate 9. That is, in a normally black liquid crystal display device, it is possible to prevent light leakage in a case where a stress is exerted at the time when no electric field is applied. In this respect, the same merit is obtainable either by the construction shown in Fig. 31 (a) or by the construction shown in Fig. 31 (b).

Further, as the first and second biaxial retardation films 31 a and 31 b are disposed, it is possible to widen the viewing angle at the time when the liquid crystal display device is not driven and the entire screen becomes black display. When the Nz value is at least 0.2 and at most 0.4, it is possible to further improve this effect.

Further, Fig. 31 illustrates an example of a case where the retardation layer 51 is made of a half-wavelength plate, but in the construction shown in Fig. 31, instead of the half-wavelength plate 51, a plurality of retardation films may be used. However, each of the slow axes of the respective retardation films is made to be perpendicular to the alignment direction during no application of an electric field. Further, the plurality of retardation films to constitute the retardation layer 51, are disposed on only one of the glass substrates.

Further liquid crystal display devices as defined in the following (1) to (37) are disclosed.

(1) A liquid crystal display device comprising a first transparent substrate, a second transparent substrate, a first adhesive to bond the first and second transparent substrates along their peripheral portions, and a liquid crystal layer sealed between the first and second transparent substrates by the first and second transparent substrates and the first adhesive, wherein one of the first and second transparent substrates has, on its liquid crystal layer side, a common electrode set up commonly for respective pixels and a pixel electrode set up independently for every pixel, and liquid crystal molecules in the liquid crystal layer are aligned in parallel to the first and second transparent substrates in such a state that no electric field is applied between the common electrode and each pixel electrode, and change their alignment direction in a plane parallel to the first and second transparent substrates when an electric field is applied in parallel to the first and second transparent substrates by the common electrode and the pixel electrode; and further comprising a third transparent substrate which is fixed by a second adhesive to the second transparent substrate on the side opposite to the liquid crystal layer, and a retardation layer to impart to transmitted light a phase difference corresponding to a half wavelength of the transmitted light, between the second and third transparent substrates, wherein the first transparent substrate has a first polarizing plate on the side opposite to the liquid crystal layer, and the third transparent substrate has a second polarizing plate on the side opposite to the retardation layer, so that the absorption axis is perpendicular to the absorption axis of the first polarizing plate.

(2) The liquid crystal display device according to (1), wherein the slow axis of the retardation layer is perpendicular or parallel to the alignment direction of liquid crystal molecules in the liquid crystal layer in such a state that no electric field is applied between the common electrode and each pixel electrode.

(3) The liquid crystal display device according to (1) or (2), wherein the slow axis of the retardation layer is parallel to the absorption axis of the second polarizing plate, and the alignment direction of liquid crystal molecules in the liquid crystal layer in such a state that no electric field is applied between the common electrode and each pixel electrode, is parallel to the absorption axis of the first polarizing plate.

(4) The liquid crystal display device according to any one of (1) to (3), wherein the phase difference of the retardation layer is at least 50% and at most 150% of the retardation of the liquid crystal layer.

(5) The liquid crystal display device according to any one of (1) to (4), wherein the disposition region of the retardation layer coincides with the effective display region which is a collection of regions of pixels corresponding to the respective pixel electrodes, or is larger than the effective display region.

(6) The liquid crystal display device according to any one of (1) to (5), wherein the first and second transparent substrates have common thickness, Young's modulus and photoelastic coefficient, and when the thickness of the first and second transparent substrates is represented by $d_1$, the Young's modulus of the first and second transparent substrates is represented by $E_1$, the photoelastic coefficient of the first and second transparent substrates is represented by $C_1$, the thickness of the third transparent substrate is represented by $d_3$, the Young's modulus of the third transparent substrate is represented by $E_3$, and the photoelastic coefficient of the third transparent substrate is represented by $C_3$, the following formula is satisfied:

$$d_3 < d_1 \left\{ \sqrt{\left(\frac{C_1}{C_3} - 1\right)^2 + \frac{4 C_1 E_1}{C_3 E_3}} + \frac{C_1}{C_3} - 1 \right\}$$

(7) The liquid crystal display device according to any one of (1) to (6), wherein the first and second transparent substrates have common thickness, Young's modulus and photoelastic coefficient, and when the thickness of the first and second transparent substrates is represented by $d_1$, the Young's modulus of the first and second transparent substrates is represented by $E_1$, the photoelastic coefficient of the first and second transparent substrates is represented by $C_1$, the thickness of the third transparent substrate is represented by $d_3$, the Young's modulus of the third transparent substrate is represented by $E_3$, and the photoelastic coefficient of the third transparent substrate is represented by $C_3$, the following formula is satisfied:

$$d_3 = \frac{d_1}{2} \left\{ \sqrt{\left(\frac{C_1}{C_3} - 2\right)^2 + \frac{8 C_1 E_1}{C_3 E_3}} + \frac{C_1}{C_3} - 2 \right\}$$

(8) The liquid crystal display device according to any one of (1) to (7), wherein an effective display region as a collection of regions of pixels corresponding to respective pixel electrodes, is rectangular, the second adhesive is disposed at least in a region outside of each side of the effective display region, and the length of the second adhesive disposed along each side in the region outside of each side of the effective display region, is at least 1/2 of the length of the side of the effective display region corresponding to such a disposition position.
(9) The liquid crystal display device according to (8), wherein the second adhesive is transparent and is disposed to cover the effective display region between the transparent substrate provided with the retardation layer and the third transparent substrate.
(10) The liquid crystal display device according to (9), wherein the distance between the transparent substrate provided with the retardation layer and the third transparent substrate, is larger than the thickness of the retardation layer.
(11) The liquid crystal display device according to any one of (1) to (10), wherein the retardation layer is a half-wavelength plate.
(12) The liquid crystal display device according to any one of (1) to (7), wherein the retardation layer is a second liquid crystal layer sealed by the second and third transparent substrates and the second adhesive, wherein the alignment direction of liquid crystal molecules is prescribed.
(13) The liquid crystal display device according to (12), wherein the second liquid crystal layer as the retardation layer is a liquid crystal layer made of the same material as the liquid crystal layer sealed between the first and second transparent substrates.
(14) The liquid crystal display device according to (12) or (13), wherein an inlet for the liquid crystal layer sealed between the first and second transparent substrates and an inlet for the second liquid crystal layer, are provided on the same side of the liquid crystal display device itself.
(15) The liquid crystal display device according to any one of (1) to (14), wherein the second adhesive is photo-curable.
(16) The liquid crystal display device according to any one of (1) to (15), wherein the second adhesive is an adhesive made of the same material as the first adhesive to bond the first and second transparent substrates along their peripheral portions.
(17) The liquid crystal display device according to any one of (1) to (16), wherein the third transparent substrate is a touch panel having a transparent electrode on at least one side thereof.
(18) The liquid crystal display device according to any one of (1) to (17), which has a transparent electrically-conductive layer between the third transparent substrate and the second polarizing plate.
(19) The liquid crystal display device according to any one of (1) to (18), which has a biaxial retardation film between the third transparent substrate and the second polarizing plate, or between the first transparent substrate and the first polarizing plate, wherein when the refractive index in a slow axis direction of the biaxial retardation film is represented by nx, the refractive index in a direction parallel to the main surface and perpendicular to the slow axis of the biaxial retardation film is represented by ny, and the refractive index in a thickness direction of the biaxial retardation film is represented by nz, nx>nz>ny is satisfied, and the slow axis of the retardation layer is parallel to the alignment direction of liquid crystal molecules in the liquid crystal layer in such a state that no electric field is applied between the common electrode and each pixel electrode.

(20) The liquid crystal display device according to (19), wherein the slow axis of the biaxial retardation film is parallel to the absorption axis of one of the first and second polarizing plates.

(21) The liquid crystal display device according to (19) or (20), wherein the value of (nz-nx)/(ny-nx) is at least 0.4 and at most 0.6.

(22) The liquid crystal display device according to any one of (1) to (21), which has a first biaxial retardation film between the first transparent substrate and the first polarizing plate and has a second biaxial retardation film between the third transparent substrate and the second polarizing plate, wherein when the refractive index in a slow axis direction of the first and second biaxial retardation films is represented by nx, the refractive index in a direction parallel to the main surface and perpendicular to the slow axis of the first and second biaxial retardation films is represented by ny, and the refractive index in a thickness direction of the first and second biaxial retardation films is represented by nz, nx>nz>ny is satisfied, and the alignment direction of liquid crystal molecules in the liquid crystal layer in such a state that no electric field is applied between the common electrode and each pixel electrode, is perpendicular to each of the absorption axis of the first polarizing plate and the slow axis of the retardation layer.

(23) The liquid crystal display device according to (22), wherein the slow axis of the first biaxial retardation film is parallel to the absorption axis of the first polarizing plate, and the slow axis of the second biaxial retardation film is parallel to the absorption axis of the second polarizing plate.

(24) The liquid crystal display device according to (22) or (23), wherein the value of (nz-nx)/(ny-nx) is at least 0.1 and at most 0.4.

(25) A liquid crystal display device comprising a first transparent substrate, a second transparent substrate, an adhesive to bond the first and second transparent substrates along their peripheral portions, and a liquid crystal layer sealed between the first and second transparent substrates by the first and second transparent substrates and the adhesive, wherein one of the first and second transparent substrates has, on its liquid crystal layer side, a common electrode set up commonly for respective pixels and a pixel electrode set up independently for every pixel, liquid crystal molecules in the liquid crystal layer are aligned in parallel to the first and second transparent substrates in such a state that no electric field is applied between the common electrode and each pixel electrode, and change their alignment direction in a plane parallel to the first and second transparent substrates when an electric field is applied in parallel to the first and second transparent substrates by the common electrode and the pixel electrode, the first transparent substrate has a first polarizing plate, and the second transparent substrate has a second polarizing plate so that the absorption axis is perpendicular to the absorption axis of the first polarizing plate; and further comprising a retardation layer to impart a phase difference to transmitted light, between at least one of the first and second transparent substrates, and the liquid crystal layer, wherein the sum of phase differences imparted to the transmitted light by the retardation layer is a phase difference of a half-wavelength of the transmitted light, the alignment direction of liquid crystal molecules in the liquid crystal layer in such a state that no electric field is applied between the common electrode and each pixel electrode, is perpendicular to an absorption axis of one of the first and second polarizing plates, and the slow axis of the retardation layer is perpendicular or parallel to the alignment direction of the liquid crystal molecules.

(26) The liquid crystal display device according to (25), wherein the sum of phase differences imparted to the transmitted light by the retardation layer is at least 50% and at most 150% of the retardation of the liquid crystal layer.

(27) The liquid crystal display device according to (25) or (26), wherein the retardation layer is one or more retardation films.

(28) The liquid crystal display device according to any one of (25) to (27), which has an alignment layer to prescribe the alignment direction of liquid crystal molecules in the liquid crystal layer in such a state that no electric field is applied between the common electrode and each pixel electrode, as the uppermost layer on the liquid crystal layer side, of each of the first and second transparent substrates.

(29) The liquid crystal display device according to (28), wherein the retardation layer is a half-wavelength plate, the half-wavelength plate is disposed between one of the first and second transparent substrates, and the liquid crystal layer, and the alignment layer is formed on the surface in contact with the liquid crystal layer, of the half-wavelength plate.

(30) The liquid crystal display device according to (28) or (29), wherein the disposition region of the alignment layer includes the disposition region of the retardation layer, or coincides with the disposition region of the retardation layer.

(31) The liquid crystal display device according to any one of (25) to (30), wherein the retardation layer is disposed in a region enclosed by the adhesive, and the disposition region of the retardation layer coincides with the effective display region which is a collection of regions of pixels corresponding to the respective pixel electrodes, or is larger than the effective display region.

(32) The liquid crystal display device according to (25), which has a biaxial retardation film between the first transparent substrate and the first polarizing plate, or between the second transparent substrate and the second polarizing plate, wherein when the refractive index in a slow axis direction of the biaxial retardation film is represented by nx, the refractive index in a direction parallel to the main surface and perpendicular to the slow axis of the biaxial retardation film is represented by ny, and the refractive index in a thickness direction of the biaxial retardation film is represented by nz, nx>nz>ny is satisfied, and the slow axis of the retardation layer is parallel to the alignment direction of liquid crystal molecules in the liquid crystal layer in such a state that no electric filed is applied between the common electrode and each pixel electrode.

(33) The liquid crystal display device according to (32), wherein the slow axis of the biaxial retardation film is parallel to the absorption axis of one of the first and second polarizing plates.

(34) The liquid crystal display device according to (32) or (33), wherein the value of (nz-nx)/(ny-nx) is at least 0.4 and at most 0.6.

(35) The liquid crystal display device according to (25), which has a first biaxial retardation film between the first transparent substrate and the first polarizing plate and has a second biaxial retardation film between the second transparent substrate and the second polarizing plate, wherein when the refractive index in a slow axis direction of the first and second biaxial retardation films is represented by nx, the refractive index in a direction parallel to the main surface and perpendicular to the slow axis of the first and second biaxial retardation films, is represented by ny, and the refractive index in a thickness direction of the first and second biaxial retardation films is represented by nz, nx>nz>ny is satisfied, the retardation layer is formed on one of the first and second transparent substrates, and the slow axis of the retardation layer is perpendicular to the alignment direction of liquid crystal molecules in the liquid crystal layer in such a state that no electric filed is applied between the common electrode and each pixel electrode.

(36) The liquid crystal display device according to (35), wherein the slow axis of the first biaxial retardation film is parallel to the absorption axis of the first polarizing plate, and the slow axis of the second biaxial retardation film is parallel to the absorption axis of the second polarizing plate.

(37) The liquid crystal display device according to (35) or (36), wherein the value of (nz-nx)/(ny-nx) is at least 0.1 and at most 0.4.

INDUSTRIAL APPLICABILITY

The present invention is suitably applicable to a normally black IPS mode liquid crystal display device.

REFERENCE SYMBOLS

| | |
|---|---|
| 1: | First glass substrate (first transparent substrate) |
| 2: | Second glass substrate (second transparent substrate) |
| 3: | Third glass substrate (third transparent substrate) |
| 4: | Adhesive (first adhesive) |
| 5: | Liquid crystal layer |
| 6: | Second adhesive |
| 7, 51: | Retardation layer |
| 8: | First polarizing plate |
| 9: | Second polarizing plate |
| 31: | Biaxial retardation film |
| 52: | Alignment layer |

## Claims

**1.** A liquid crystal display device comprising:

a first transparent substrate (1),
a second transparent substrate (2),

an adhesive (4) to bond the first and second transparent substrates along their peripheral portions, and
a liquid crystal layer (5) sealed between the first and second transparent substrates by the first and second transparent substrates and the adhesive (4), wherein:

one of the first and second transparent substrates has, on its liquid crystal layer side, a common electrode set up commonly for respective pixels and a pixel electrode set up independently for every pixel,
liquid crystal molecules in the liquid crystal layer (5) are aligned in parallel to the first and second transparent substrates in such a state that no electric field is applied between the common electrode and each pixel electrode, and change their alignment direction in a plane parallel to the first and second transparent substrates when an electric field is applied in parallel to the first and second transparent substrates by the common electrode and the pixel electrode,
the first transparent substrate (1) has a first polarizing plate (8), and
the second transparent substrate (2) has a second polarizing plate (9) so that the absorption axis is perpendicular to the absorption axis of the first polarizing plate (8); and further comprising:

a retardation layer (51) to impart a phase difference to transmitted light, between at least one of the first and second transparent substrates, and the liquid crystal layer (5), wherein:

the sum of phase differences imparted to the transmitted light by the retardation layer (51) is a phase difference of a half-wavelength of the transmitted light,
the alignment direction of liquid crystal molecules in the liquid crystal layer (5) in such a state that no electric field is applied between the common electrode and each pixel electrode, is perpendicular to an absorption axis of one of the first and second polarizing plates,
**characterised in that**
the liquid crystal display device has a biaxial retardation film (31) between the first transparent substrate (1) and the first polarizing plate (8), or between the second transparent substrate (2) and the second polarizing plate (9), wherein when the refractive index in a slow axis direction of the biaxial retardation film (31) is represented by nx, the refractive index in a direction parallel to the main surface and perpendicular to the slow axis of the biaxial retardation film (31) is represented by ny, and the refractive index in a thickness direction of the biaxial retardation film (31) is represented by nz, nx>nz>ny is satisfied, and the slow axis of the retardation layer (51) is parallel to the alignment direction of liquid crystal molecules in the liquid crystal layer (5) in such a state that no electric field is applied between the common electrode and each pixel electrode.

**2.** The liquid crystal display device according to claim 1, wherein the slow axis of the biaxial retardation film (31) is parallel to the absorption axis of one of the first and second polarizing plates.

**3.** The liquid crystal display device according to claim 1 or 2, wherein the value of (nz-nx)/(ny-nx) is at least 0.4 and at most 0.6.

**4.** A liquid crystal display device comprising:

a first transparent substrate (1),
a second transparent substrate (2),
an adhesive (4) to bond the first and second transparent substrates along their peripheral portions, and
a liquid crystal layer (5) sealed between the first and second transparent substrates by the first and second transparent substrates and the adhesive (4), wherein:

one of the first and second transparent substrates has, on its liquid crystal layer side, a common electrode set up commonly for respective pixels and a pixel electrode set up independently for every pixel,
liquid crystal molecules in the liquid crystal layer (5) are aligned in parallel to the first and second transparent substrates in such a state that no electric field is applied between the common electrode and each pixel electrode, and change their alignment direction in a plane parallel to the first and second transparent substrates when an electric field is applied in parallel to the first and second transparent substrates by the common electrode and the pixel electrode,
the first transparent substrate (1) has a first polarizing plate (8), and
the second transparent substrate (2) has a second polarizing plate (9) so that the absorption axis is perpendicular to the absorption axis of the first polarizing plate (8); and further comprising:

a retardation layer (51) to impart a phase difference to transmitted light, between at least one of the first and second transparent substrates, and the liquid crystal layer (5), wherein:

the sum of phase differences imparted to the transmitted light by the retardation layer (51) is a phase difference of a half-wavelength of the transmitted light,
the alignment direction of liquid crystal molecules in the liquid crystal layer (5) in such a state that no electric field is applied between the common electrode and each pixel electrode, is perpendicular to an absorption axis of one of the first and second polarizing plates,
**characterised in that**
the liquid crystal display device has a first biaxial retardation film (31a) between the first transparent substrate (1) and the first polarizing plate (8) and has a second biaxial retardation film (31 b) between the second transparent substrate (2) and the second polarizing plate (9), wherein when the refractive index in a slow axis direction of the first and second biaxial retardation films is represented by nx, the refractive index in a direction parallel to the main surface and perpendicular to the slow axis of the first and second biaxial retardation films, is represented by ny, and the refractive index in a thickness direction of the first and second biaxial retardation films is represented by nz, nx>nz>ny is satisfied, the retardation layer (51) is formed on one of the first and second transparent substrates, and the slow axis of the retardation layer (51) is perpendicular to the alignment direction of liquid crystal molecules in the liquid crystal layer (5) in such a state that no electric field is applied between the common electrode and each pixel electrode.

5. The liquid crystal display device according to claim 4, wherein the slow axis of the first biaxial retardation film (31 a) is parallel to the absorption axis of the first polarizing plate (8), and the slow axis of the second biaxial retardation film (31 b) is parallel to the absorption axis of the second polarizing plate (9).

6. The liquid crystal display device according to claim 4 or 5, wherein the value of (nz-nx)/(ny-nx) is at least 0.1 and at most 0.4.

7. The liquid crystal display device according to any of the proceeding claims, which has an alignment layer (52) to prescribe the alignment direction of liquid crystal molecules in the liquid crystal layer (5) in such a state that no electric field is applied between the common electrode and each pixel electrode, the alignment layer (52) being formed on the surface on the liquid crystal layer side of each of the first and second transparent substrates.

8. The liquid crystal display device according to Claim 7, wherein the retardation layer (51) is a half-wavelength plate, the half-wavelength plate is disposed between one of the first and second transparent substrates, and the liquid crystal layer (5), and
the alignment layer (52) is formed on the surface in contact with the liquid crystal layer (5), of the half-wavelength plate.

9. The liquid crystal display device according to any of the proceeding claims, wherein the sum of phase differences imparted to the transmitted light by the retardation layer (51) is at least 50% and at most 150% of the retardation of the liquid crystal layer (5).

10. The liquid crystal display device according to claim 7, wherein the disposition region of the alignment layer (52) includes the disposition region of the retardation layer (51), or coincides with the disposition region of the retardation layer (51).

11. The liquid crystal display device according to any of the proceeding claims, wherein the retardation layer (51) is disposed in a region enclosed by the adhesive (4), and the disposition region of the retardation layer (51) coincides with the effective display region which is a collection of regions of pixels corresponding to the respective pixel electrodes, or is larger than the effective display region.

**Patentansprüche**

1. Eine Flüssigkristallanzeigenvorrichtung, die Folgendes umfasst:

ein erstes durchsichtiges Substrat (1),
ein zweites durchsichtiges Substrat (2),

ein Klebemittel (4), um die transparenten Substrate eins und zwei entlang ihrer peripheren Abschnitte zu binden, und
eine Flüssigkristall-Schicht (5), die zwischen dem ersten und zweiten transparenten Substrat versiegelt wird durch das erste und das zweite transparente Substrat und dem Klebemittel (4), wobei:

ein Substrat unter den transparenten Substraten eins und zwei, auf der Seite der Flüssigkristallschicht, eine gemeinsame Elektrode aufweist, die gemeinsam für die jeweiligen Pixel eingerichtet wird, und eine Pixel-Elektrode, die für jedes Pixel einzeln eingerichtet wird,
die Flüssigkristallmoleküle in der Flüssigkristall-Schicht (5) zu den transparenten Substraten eins und zwei in einem derartigen Zustand parallel ausgerichtet sind, dass kein elektrisches Feld zwischen der gemeinsamen Elektrode und jeder Pixel-Elektrode angelegt wird, und wobei sie die Richtung ihrer Ausrichtung in einer Ebene verändern, die parallel zu den transparenten Substraten eins und zwei ist, wenn durch die gemeinsame Elektrode und jede Pixel-Elektrode ein elektrisches Feld parallel zu den transparenten Substraten eins und zwei angelegt wird,
das erste transparente Substrat (1) eine erste polarisierende Platte (8) aufweist, und
das zweite transparente Substrat (2) eine zweite polarisierende Platte (9) derart aufweist, dass die Absorptionsachse zur Absorptionsachse der ersten polarisierenden Platte (8) senkrecht steht; und des Weiteren umfassend:

eine Verzögerungsschicht (51), um dem Durchlicht eine Phasendifferenz zu vermitteln, zwischen mindestens einem der transparenten Substrate eins und zwei und der Flüssigkristall-Schicht (5), wobei:

die Summe der Phasendifferenzen, die dem Durchlicht durch die Verzögerungsschicht (51) vermittelt werden, einer Phasendifferenz einer halben Wellenlänge des Durchlichts entspricht,
die Ausrichtung der Flüssigkristallmoleküle in der Flüssigkristall-Schicht (5) in einem Zustand, bei dem kein elektrisches Feld zwischen der gemeinsamen Elektrode und jeder Pixel-Elektrode angelegt wird, senkrecht ist zur Absorptionsachse von einer der polarisierenden Platten eins und zwei,
**dadurch gekennzeichnet, dass**
die Flüssigkristallanzeigenvorrichtung zwischen dem ersten transparenten Substrat (1) und der ersten polarisierenden Platte (8) oder zwischen dem zweiten transparenten Substrat (2) und der zweiten polarisierenden Platte (9) eine biaxiale Verzögerungsfolie (31) aufweist, wobei wenn der Brechungsindex in einer langsamen Achsenrichtung der biaxialen Verzögerungsfolie (31) durch nx dargestellt wird, der Brechungsindex in einer Richtung parallel zur Hauptoberfläche und senkrecht zur langsamen Achsenrichtung der biaxialen Verzögerungsfolie (31) durch ny dargestellt wird und der Brechungsindex in Richtung einer Dicke der biaxialen Verzögerungsfolie (31) durch nz dargestellt wird, dann wird nx>nz>ny erfüllt, und die langsame Achsenrichtung der biaxialen Verzögerungsschicht (51) ist parallel zur Ausrichtung der Flüssigkristallmoleküle in der Flüssigkristall-Schicht (5) in einem Zustand, bei dem kein elektrisches Feld zwischen der gemeinsamen Elektrode und jeder Pixel-Elektrode angelegt wird.

**2.** Die Flüssigkristallanzeigenvorrichtung nach Anspruch 1, wobei die langsame Achsenrichtung der biaxialen Verzögerungsfolie (31) zur Absorptionsachse von einer der polarisierenden Platten eins und zwei parallel ist.

**3.** Die Flüssigkristallanzeigenvorrichtung nach Anspruch 1 oder 2, wobei der Wert von (nz-nx)/(ny-nx) mindestens 0,4 und höchstens 0,6 entspricht.

**4.** Eine Flüssigkristallanzeigenvorrichtung, die Folgendes umfasst:

ein erstes durchsichtiges Substrat (1),
ein zweites durchsichtiges Substrat (2),
ein Klebemittel (4), um die transparenten Substrate eins und zwei entlang ihrer peripheren Abschnitte zu binden, und
eine Flüssigkristall-Schicht (5), die zwischen dem ersten und zweiten transparenten Substrat versiegelt wird durch das erste und das zweite transparente Substrat und dem Klebemittel (4), wobei:

ein Substrat unter den transparenten Substraten eins und zwei, auf der Seite der Flüssigkristallschicht, eine gemeinsame Elektrode aufweist, die gemeinsam für die jeweiligen Pixel eingerichtet wird, und eine Pixel-Elektrode, die für jedes Pixel einzeln eingerichtet wird,

die Flüssigkristallmoleküle in der Flüssigkristall-Schicht (5) zu den transparenten Substraten eins und zwei in einem derartigen Zustand parallel ausgerichtet sind, dass kein elektrisches Feld zwischen der gemeinsamen Elektrode und jeder Pixel-Elektrode angelegt wird, und wobei sie die Richtung ihrer Ausrichtung in einer Ebene verändern, die parallel zu den transparenten Substraten eins und zwei ist, wenn durch die gemeinsame Elektrode und jede Pixel-Elektrode ein elektrisches Feld parallel zu den transparenten Substraten eins und zwei angelegt wird,
das erste transparente Substrat (1) eine erste polarisierende Platte (8) aufweist, und
das zweite transparente Substrat (2) eine zweite polarisierende Platte (9) derart aufweist, dass die Absorptionsachse zur Absorptionsachse der ersten polarisierenden Platte (8) senkrecht steht; und des Weiteren umfassend:

eine Verzögerungsschicht (51), um dem Durchlicht eine Phasendifferenz zu vermitteln, zwischen mindestens einem der transparenten Substrate eins und zwei und der Flüssigkristall-Schicht (5), wobei:

die Summe der Phasendifferenzen, die dem Durchlicht durch die Verzögerungsschicht (51) vermittelt werden, einer Phasendifferenz einer halben Wellenlänge des Durchlichts entspricht,
die Ausrichtung der Flüssigkristallmoleküle in der Flüssigkristall-Schicht (5) in einem Zustand, bei dem kein elektrisches Feld zwischen der gemeinsamen Elektrode und jeder Pixel-Elektrode angelegt wird, senkrecht ist zur Absorptionsachse von einer der polarisierenden Platten eins und zwei,
**dadurch gekennzeichnet, dass**
die Flüssigkristallanzeigenvorrichtung zwischen dem ersten transparenten Substrat (1) und der ersten polarisierenden Platte (8) eine erste biaxiale Verzögerungsfolie (31 a) aufweist und zwischen dem zweiten transparenten Substrat (2) und der zweiten polarisierenden Platte (9) eine zweite biaxiale Verzögerungsfolie (31 b) aufweist, wobei wenn der Brechungsindex in einer langsamen Achsenrichtung der ersten und zweiten biaxialen Verzögerungsfolie durch nx dargestellt wird, der Brechungsindex in einer Richtung parallel zur Hauptoberfläche und senkrecht zur langsamen Achsenrichtung der ersten und zweiten biaxialen Verzögerungsfolie durch ny dargestellt wird und der Brechungsindex in Richtung einer Dicke der ersten und zweiten biaxialen Verzögerungsfolie durch nz dargestellt wird, dann wird $nx>nz>ny$ erfüllt, und die Verzögerungsschicht (51) wird auf einem der transparenten Substrate eins und zwei gebildet, und die langsame Achsenrichtung der biaxialen Verzögerungsschicht (51) ist senkrecht zur Ausrichtung der Flüssigkristallmoleküle in der Flüssigkristall-Schicht (5) in einem Zustand, bei dem kein elektrisches Feld zwischen der gemeinsamen Elektrode und jeder Pixel-Elektrode angelegt wird.

**5.** Die Flüssigkristallanzeigenvorrichtung nach Anspruch 4, wobei die langsame Achse der ersten biaxialen Verzögerungsfolie (31a) zur Absorptionsachse der ersten polarisierenden Platte (8) parallel ist, und die langsame Achse der zweiten biaxialen Verzögerungsfolie (31 b) zur Absorptionsachse der zweiten polarisierenden Platte (9) parallel ist.

**6.** Die Flüssigkristallanzeigenvorrichtung nach Anspruch 4 oder 5, wobei der Wert von $(nz-nx)/(ny-nx)$ mindestens 0,1 und höchstens 0,4 entspricht.

**7.** Die Flüssigkristallanzeigenvorrichtung nach einem der vorhergehenden Ansprüche, die eine Ausrichtungsschicht (52) aufweist, um die Ausrichtung der Flüssigkristallmoleküle in der Flüssigkristall-Schicht (5) in einem Zustand, bei dem kein elektrisches Feld zwischen der gemeinsamen Elektrode und jeder Pixel-Elektrode angelegt wir, vorzugeben, wobei die Ausrichtungsschicht (52) auf der Oberfläche von jedem der transparenten Substrate eins und zwei, auf der Seite der Flüssigkristallschicht gebildet wird.

**8.** Die Flüssigkristallanzeigenvorrichtung nach Anspruch 7, wobei die Verzögerungsschicht (51) ein $\lambda/2$-Plättchen (*half-wavelength plate*) ist,
das $\lambda/2$-Plättchen zwischen einem der transparenten Substrate eins und zwei und der Flüssigkristallschicht (5) angeordnet wird, und
die Ausrichtungsschicht (52) auf der Oberfläche des $\lambda/2$-Plättchens, in Kontakt mit der Flüssigkristallschicht (5) gebildet wird.

**9.** Die Flüssigkristallanzeigenvorrichtung nach einem der vorhergehenden Ansprüche, wobei die Summe der Phasendifferenzen, die dem Durchlicht durch die Verzögerungsschicht (51) vermittelt werden, mindestens 50% und höchstens 150% der Verzögerung der Flüssigkristallschicht (5) entspricht.

**10.** Die Flüssigkristallanzeigenvorrichtung nach Anspruch 7, wobei der Anordnungsbereich der Ausrichtungsschicht (52) den Anordnungsbereich der Verzögerungsschicht (51) beinhaltet, oder mit dem Anordnungsbereich der Verzögerungsschicht (51) übereinstimmt.

**11.** Die Flüssigkristallanzeigenvorrichtung nach einem der vorhergehenden Ansprüche, wobei die Verzögerungsschicht (51) in einem Bereich angeordnet wird, die vom Klebemittel (4) umschlossen wird, und wobei der Anordnungsbereich der Verzögerungsschicht (51) mit dem wirksamen Bereich der Anzeige übereinstimmt, der eine Sammlung aus Pixelbereichen ist, die den jeweiligen Pixelelektroden entsprechen, oder größer als der wirksame Bereich der Anzeige ist.

## Revendications

**1.** Un dispositif d'affichage à cristaux liquides comprenant :

un premier substrat transparent (1),
un deuxième substrat transparent (2),
un adhésif (4) pour créer un lien entre les substrats transparents premier et deuxième le long de leurs portions périphériques, et
une couche de cristaux liquides (5) scellée entre les substrats transparents premier et deuxième par les substrats transparents premier et deuxième et l'adhésif (4), sachant que :

l'un parmi les substrats transparents premier et deuxième présente de son côté de la couche de cristaux liquides une électrode commune mise en place conjointement pour les pixels respectifs, et une électrode mise en place indépendamment pour chaque pixel,
les molécules de cristal liquide dans la couche de cristaux liquides (5) sont alignées parallèlement aux substrats transparents premier et deuxième dans un état tel qu'aucun champ électrique n'est appliqué entre l'électrode commune et chaque électrode de pixel, et elles changent leur direction d'alignement dans un plan parallèle aux substrats transparents premier et deuxième quand un champ électrique est appliqué parallèlement aux substrats transparents premier et deuxième par l'électrode commune et l'électrode de pixel,
le premier substrat transparent (1) présente une première plaque de polarisation (8), et que
le deuxième substrat transparent (2) présente une deuxième plaque de polarisation (9), de manière que l'axe d'absorption est perpendiculaire à l'axe d'absorption de la première plaque de polarisation (8) ; et comprenant en outre :

une couche de retardement (51), pour conférer une différence de phase à la lumière transmise, entre au moins une parmi les substrats transparents premier et deuxième et la couche de cristaux liquides (5), sachant que :

la somme des différences de phase conférées à la lumière transmise par la couche de retardement (51) est une différence de phase d'une demi longueur d'onde de la lumière transmise,
la direction d'alignement des molécules de cristal liquide dans la couche de cristaux liquides (5) dans un état tel qu'aucun champ électrique n'est appliqué entre l'électrode commune et chaque électrode de pixel est perpendiculaire à un axe d'absorption d'un parmi les plaques de polarisation première et deuxième,
**caractérisé en ce que**
le dispositif d'affichage à cristaux liquides présente un film de retardement biaxial (31) entre le premier substrat transparent (1) et la première plaque de polarisation (8) ou bien entre le deuxième substrat transparent (2) et la deuxième plaque de polarisation (9), sachant que quand l'indice de réfraction dans une direction d'axe lent du film de retardement biaxial (31) est représenté par nx, et que l'indice de réfraction dans une direction parallèle à la surface principale et perpendiculaire à l'axe lent du film de retardement biaxial (31) est représenté par ny, et que l'indice de réfraction dans une direction d'épaisseur du film de retardement biaxial (31) est représenté par nz, alors nx>nz>ny est satisfaite, et l'axe lent de la couche de retardement (51) est parallèle à la direction d'alignement des molécules de cristal liquide dans la couche de cristaux liquides (5) dans un état tel qu'aucun champ électrique n'est appliqué entre l'électrode commune et chaque électrode de pixel.

**2.** Le dispositif d'affichage à cristaux liquides d'après la revendication 1, sachant que l'axe lent du film de retardement biaxial (31) est parallèle à l'axe d'absorption d'une parmi les plaques de polarisation première et deuxième.

**3.** Le dispositif d'affichage à cristaux liquides d'après la revendication 1 ou 2, sachant que la valeur de (nz-nx)/(ny-nx) correspond au moins à 0,4 et au plus à 0,6.

**4.** Un dispositif d'affichage à cristaux liquides comprenant :

un premier substrat transparent (1),
un deuxième substrat transparent (2),
un adhésif (4) pour créer un lien entre les substrats transparents premier et deuxième le long de leurs portions périphériques, et
une couche de cristaux liquides (5) scellée entre les substrats transparents premier et deuxième par les substrats transparents premier et deuxième et l'adhésif (4), sachant que :

l'un parmi les substrats transparents premier et deuxième présente de son côté de la couche de cristaux liquides une électrode commune mise en place conjointement pour les pixels respectifs, et une électrode mise en place indépendamment pour chaque pixel,
les molécules de cristal liquide dans la couche de cristaux liquides (5) sont alignées parallèlement aux substrats transparents premier et deuxième dans un état tel qu'aucun champ électrique n'est appliqué entre l'électrode commune et chaque électrode de pixel, et elles changent leur direction d'alignement dans un plan parallèle aux substrats transparents premier et deuxième quand un champ électrique est appliqué parallèlement aux substrats transparents premier et deuxième par l'électrode commune et l'électrode de pixel,
le premier substrat transparent (1) présente une première plaque de polarisation (8), et que
le deuxième substrat transparent (2) présente une deuxième plaque de polarisation (9), de manière que l'axe d'absorption est perpendiculaire à l'axe d'absorption de la première plaque de polarisation (8) ; et comprenant en outre :

une couche de retardement (51), pour conférer une différence de phase à la lumière transmise, entre au moins une parmi les substrats transparents premier et deuxième et la couche de cristaux liquides (5), sachant que :

la somme des différences de phase conférées à la lumière transmise par la couche de retardement (51) est une différence de phase d'une demi longueur d'onde de la lumière transmise,
la direction d'alignement des molécules de cristal liquide dans la couche de cristaux liquides (5) dans un état tel qu'aucun champ électrique n'est appliqué entre l'électrode commune et chaque électrode de pixel est perpendiculaire à un axe d'absorption d'un parmi les plaques de polarisation première et deuxième,
**caractérisé en ce que**
le dispositif d'affichage à cristaux liquides présente un premier film de retardement biaxial (31 a) entre le premier substrat transparent (1) et la première plaque de polarisation (8) et présente un deuxième film de retardement biaxial (31 b) entre le deuxième substrat transparent (2) et la deuxième plaque de polarisation (9), sachant que quand l'indice de réfraction dans une direction d'axe lent des films de retardement biaxial premier et deuxième est représenté par nx, et que l'indice de réfraction dans une direction parallèle à la surface principale et perpendiculaire à l'axe lent des films de retardement biaxial premier et deuxième est représenté par ny, et que l'indice de réfraction dans une direction d'épaisseur des films de retardement biaxial premier et deuxième est représenté par nz, alors nx>nz>ny est satisfaite, et l'axe lent de la couche de retardement (51) est formé sur un parmi les substrats transparents premier et deuxième, et l'axe lent de la couche de retardement (51) est perpendiculaire à la direction d'alignement des molécules de cristal liquide dans la couche de cristaux liquides (5) dans un état tel qu'aucun champ électrique n'est appliqué entre l'électrode commune et chaque électrode de pixel.

**5.** Le dispositif d'affichage à cristaux liquides d'après la revendication 4, sachant que l'axe lent du premier film de retardement biaxial (31 a) est parallèle à l'axe d'absorption de la première plaque de polarisation (8), et que l'axe lent du deuxième film de retardement biaxial (31 b) est parallèle à l'axe d'absorption de la deuxième plaque de polarisation (9).

6. Le dispositif d'affichage à cristaux liquides d'après la revendication 4 ou 5, sachant que la valeur de (nz-nx)/(ny-nx) correspond au moins à 0,1 et au plus à 0,4.

7. Le dispositif d'affichage à cristaux liquides d'après une des revendications précédentes, qui présente une couche d'alignement (52) pour imposer la direction d'alignement des molécules de cristal liquide dans la couche de cristaux liquides (5) dans un état tel qu'aucun champ électrique n'est appliqué entre l'électrode commune et chaque électrode de pixel, la couche d'alignement (52) étant formée sur la surface du côté de la couche de cristaux liquides de chacun parmi les substrats transparents premier et deuxième.

8. Le dispositif d'affichage à cristaux liquides d'après la revendication 7 , sachant que la couche de retardement (51) est une lame demi-onde,
la lame demi-onde est disposée entre un parmi les substrats transparents premier et deuxième et la couche de cristaux liquides (5), et que
la couche d'alignement (52) est formée sur la surface en contact avec la couche de cristaux liquides (5), de la lame demi-onde.

9. Le dispositif d'affichage à cristaux liquides d'après une des revendications précédentes, sachant que la somme des différences de phase conférées à la lumière transmise par la couche de retardement (51) correspond au moins à 50% et au plus à 150% du retardement de la couche de cristaux liquides (5).

10. Le dispositif d'affichage à cristaux liquides d'après la revendication 7 , sachant que la zone de disposition de la couche d'alignement (52) inclut la zone de disposition de la couche de retardement (51), ou coïncide avec la zone de disposition de la couche de retardement (51).

11. Le dispositif d'affichage à cristaux liquides d'après une des revendications précédentes, sachant que la couche de retardement (51) est disposé dans une zone confinée par l'adhésif (4), et que la zone de disposition de la couche de retardement (51) coïncide avec la zone d'affichage effective qui est un ensemble de zones de pixels correspondant aux électrodes de pixels respectives, ou est plus grande que la zone d'affichage effective.

Fig. 1

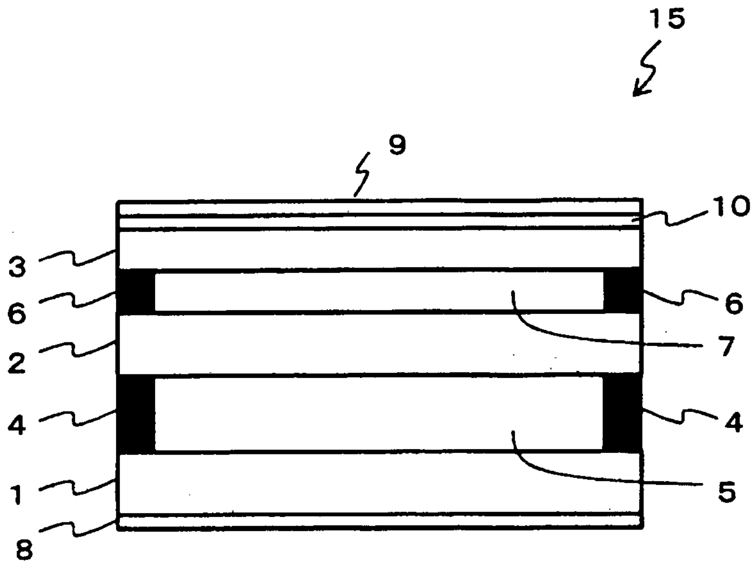


Fig. 2

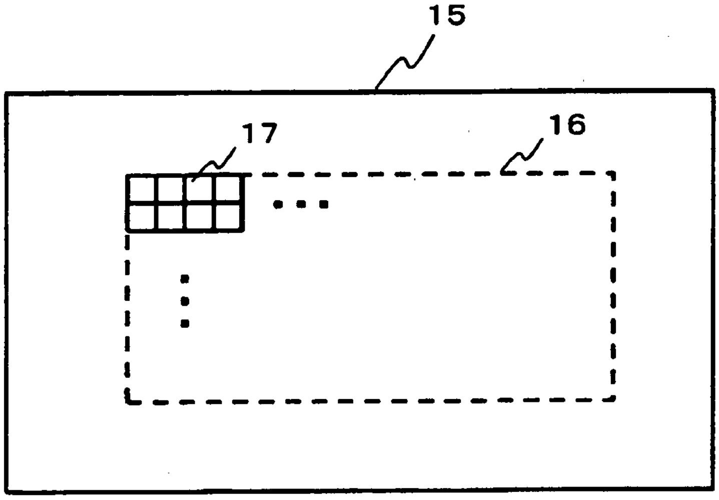

Fig. 3

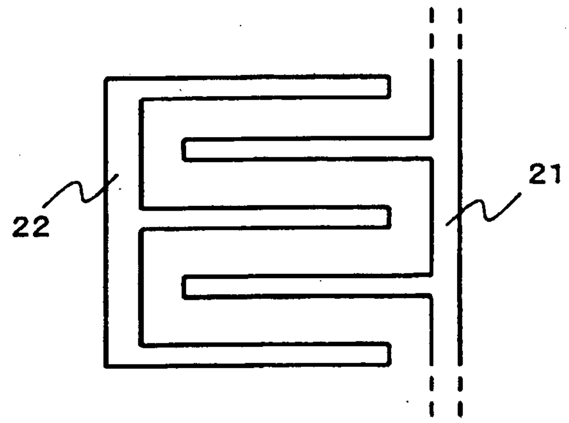


Fig. 4

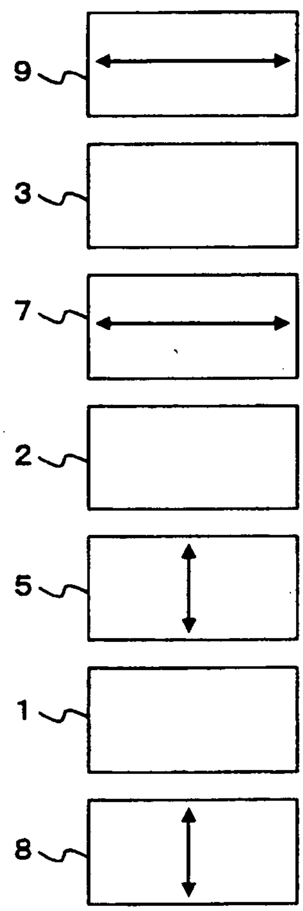

Fig. 5

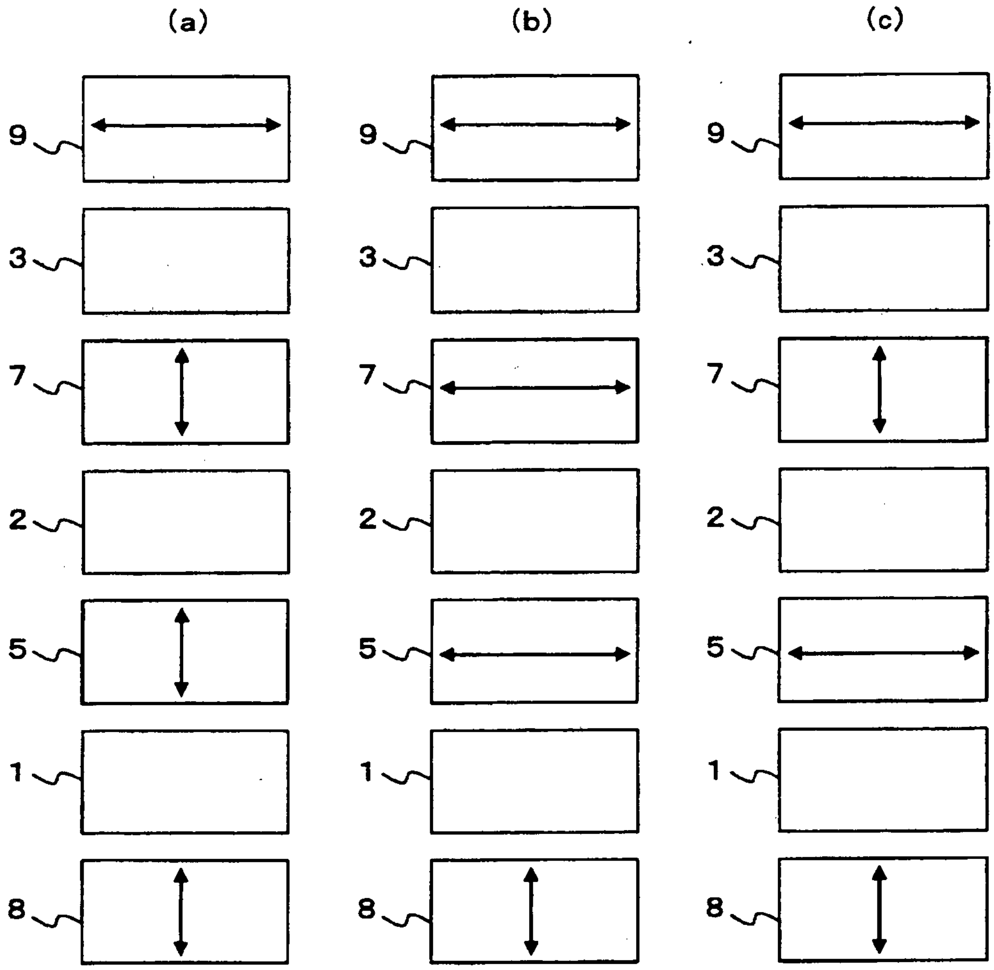

Fig. 6

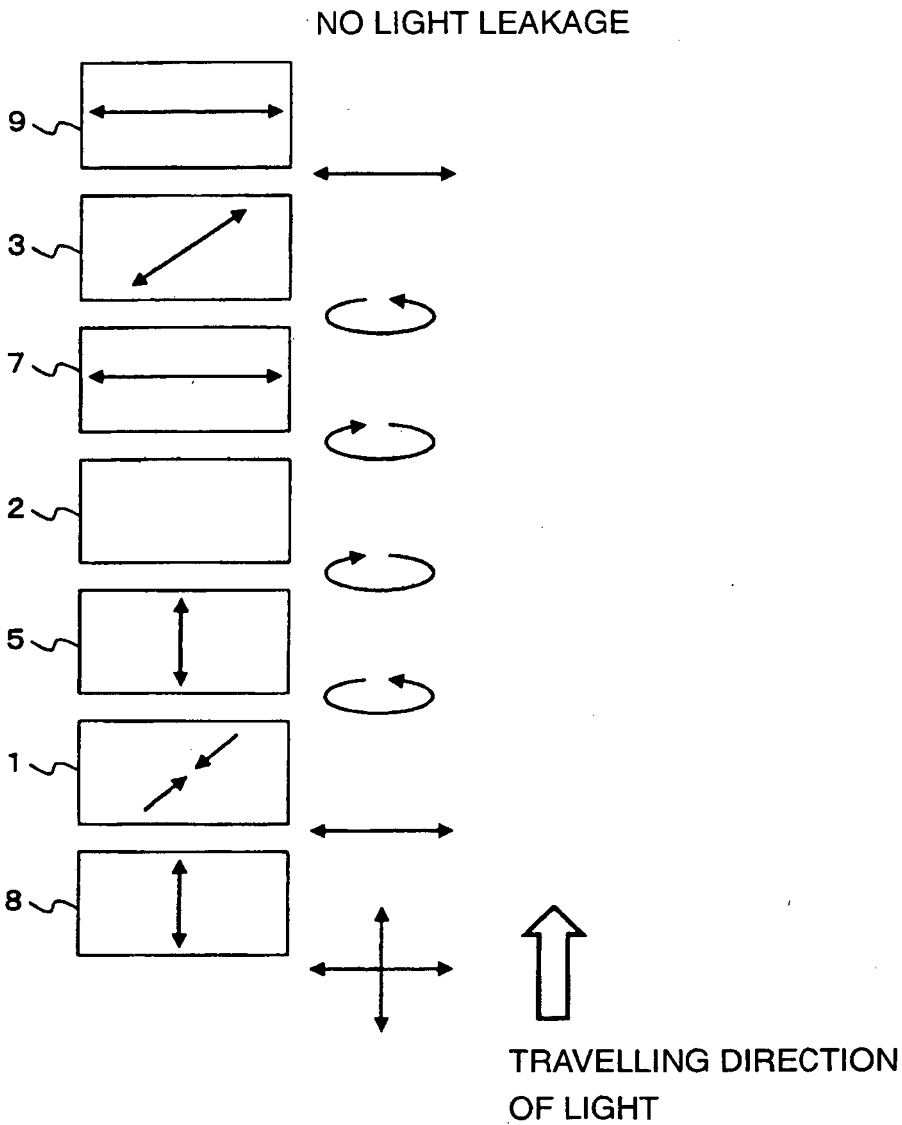

Fig. 7

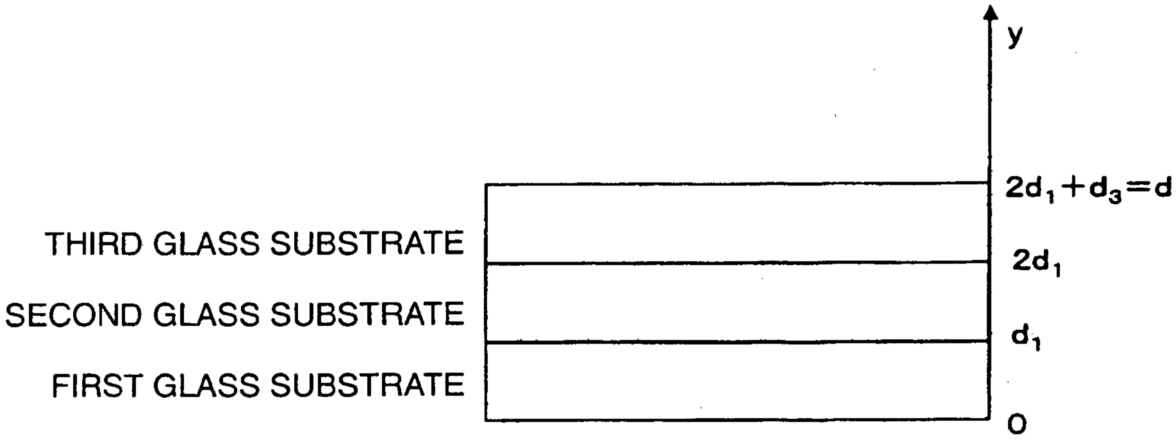
y
2d1+d3=d
THIRD GLASS SUBSTRATE
2d1
SECOND GLASS SUBSTRATE
d1
FIRST GLASS SUBSTRATE
0

Fig. 8

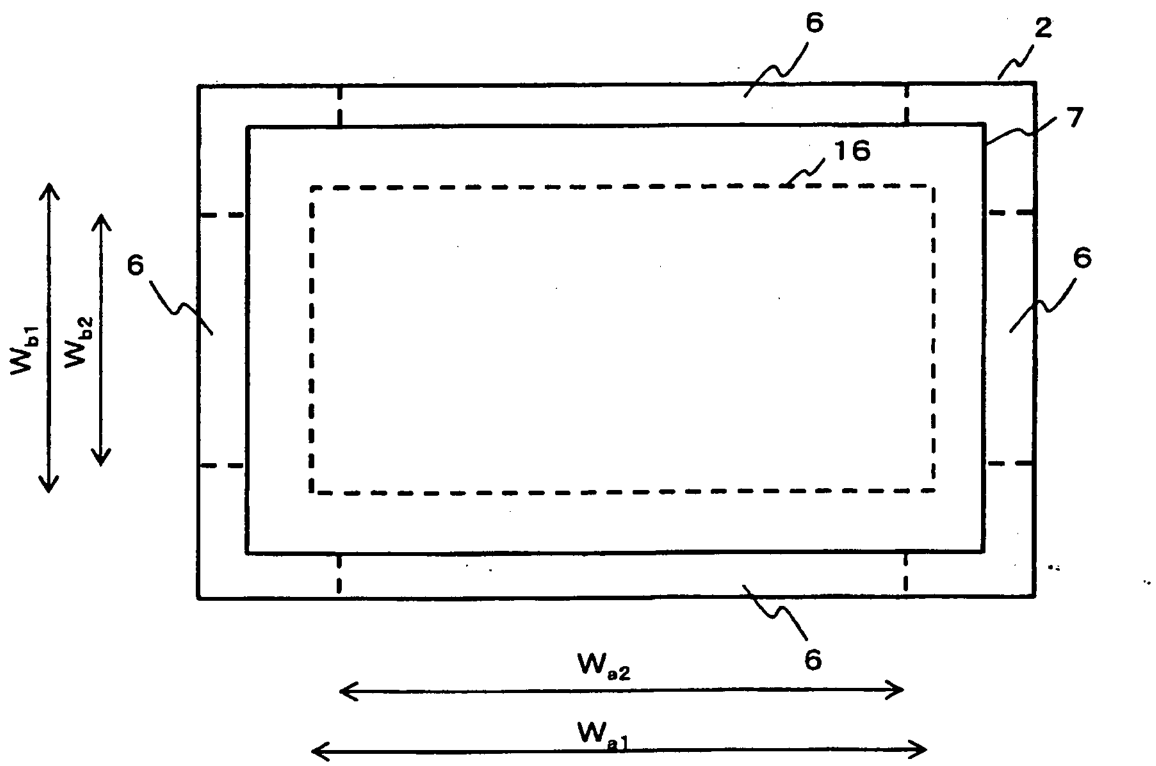
6
2
7
16
6
6
Wb1
Wb2
6
Wa2
Wa1

Fig. 9

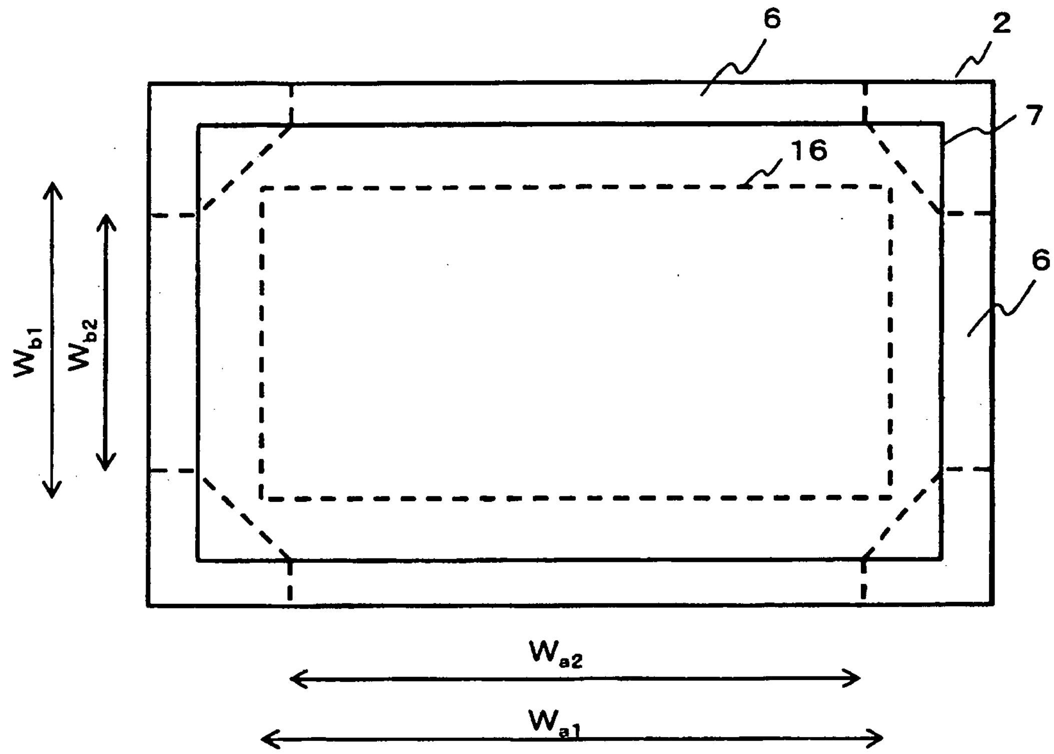

Fig. 10

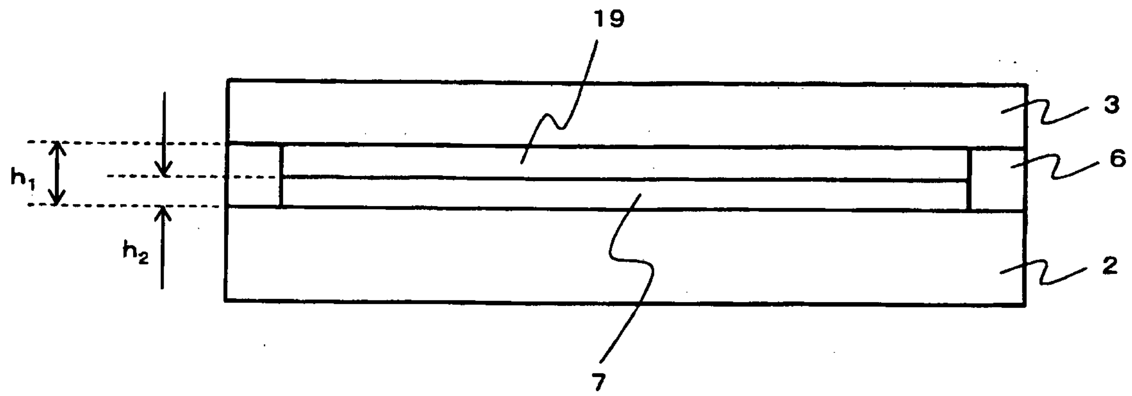


Fig. 11

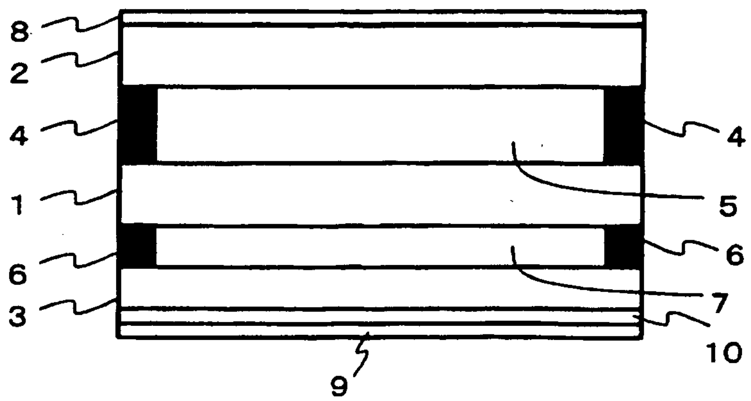

Fig. 12

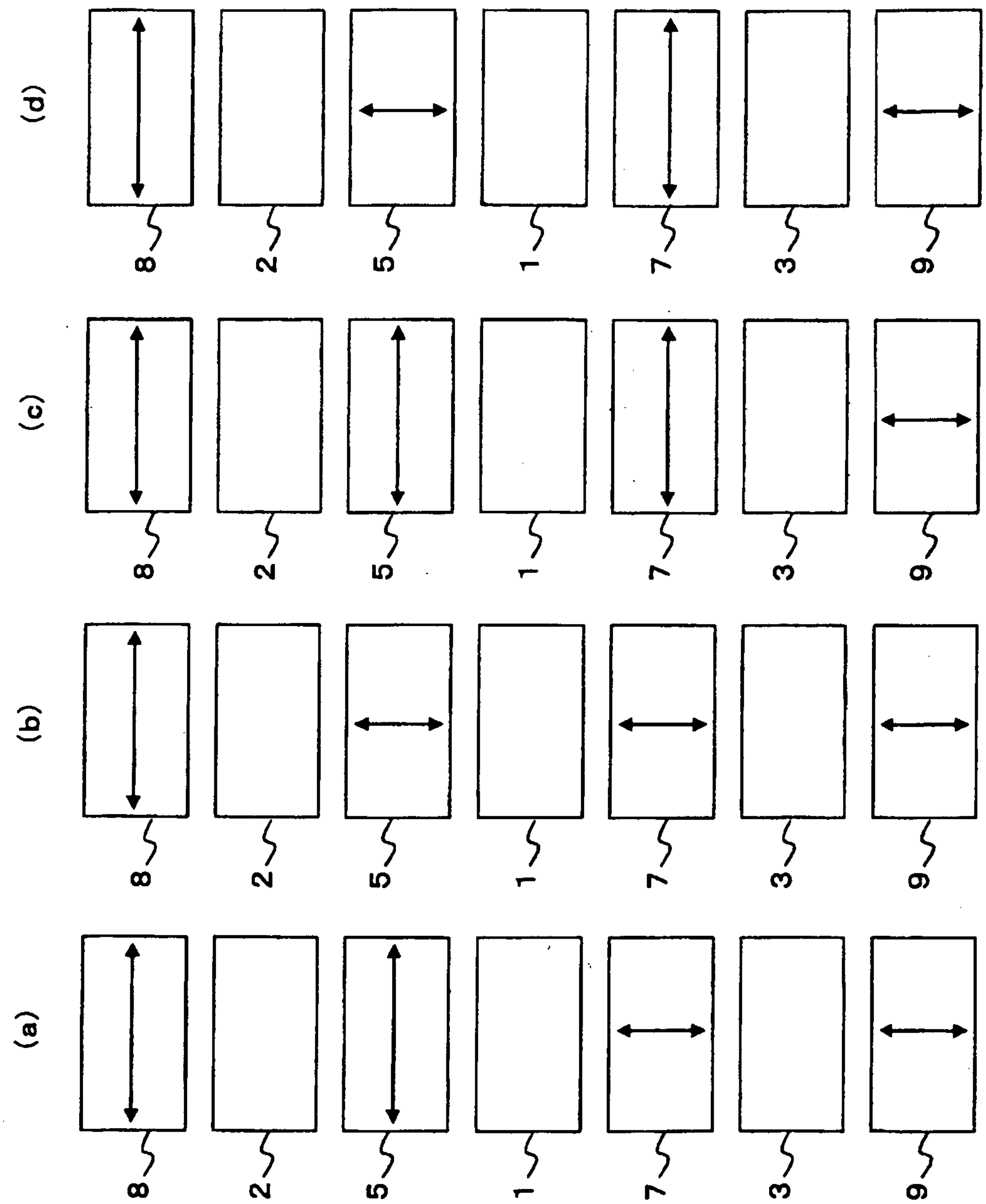

Fig. 13

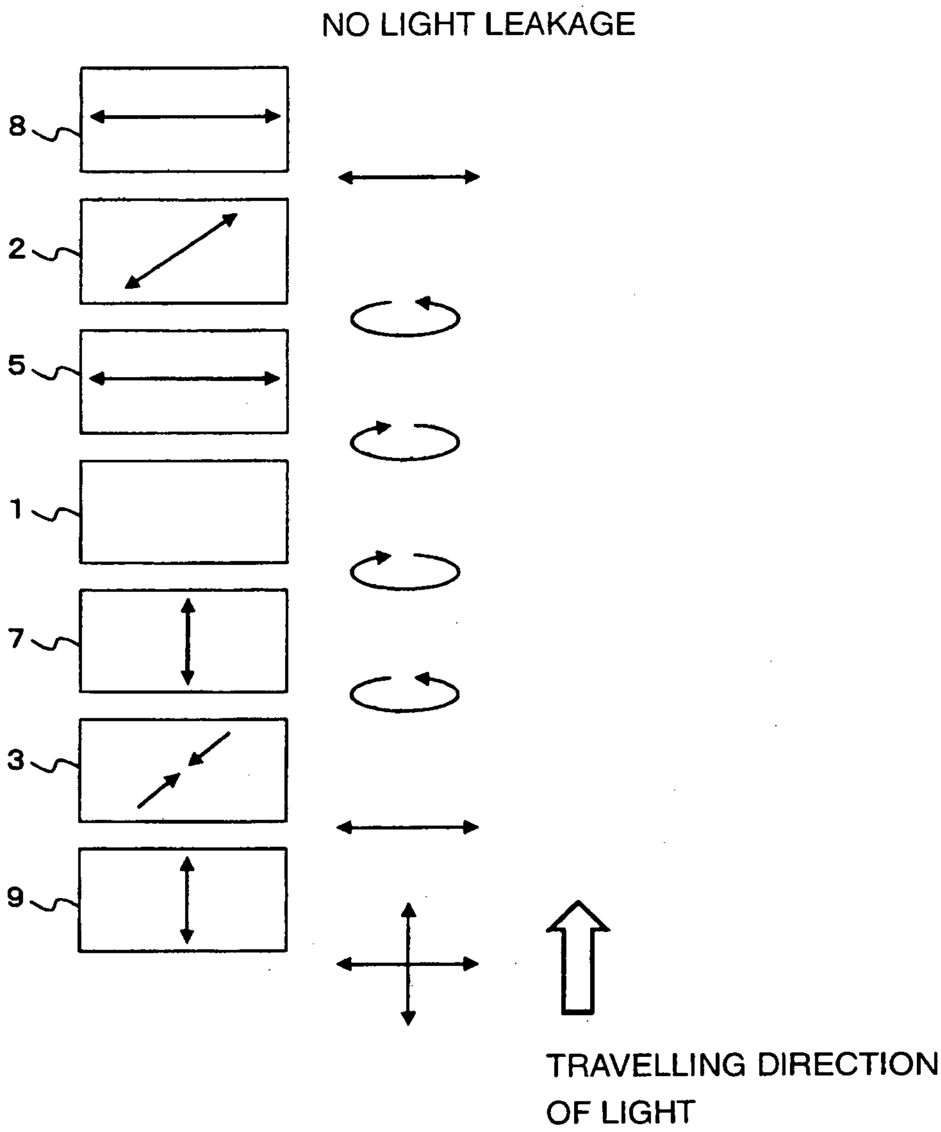

Fig. 14

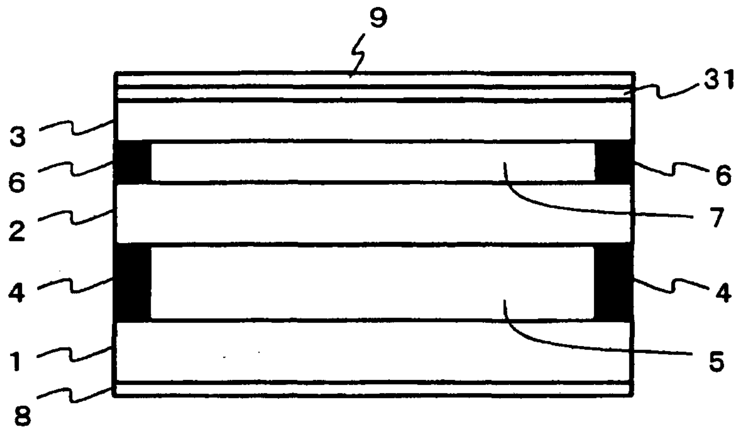


Fig. 15

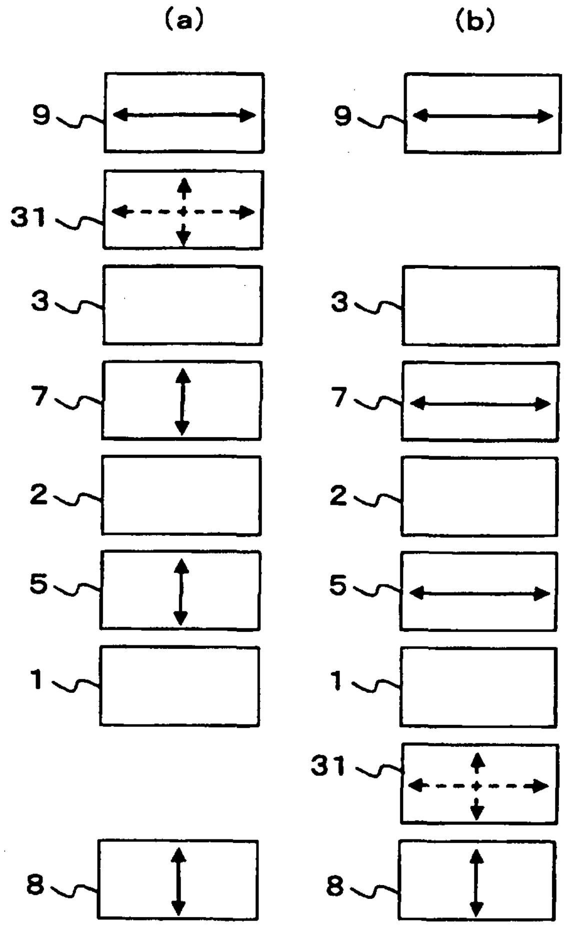

Fig. 16

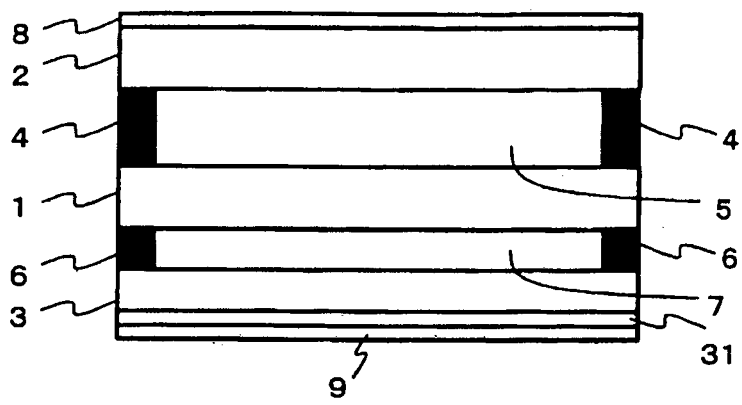


Fig. 17

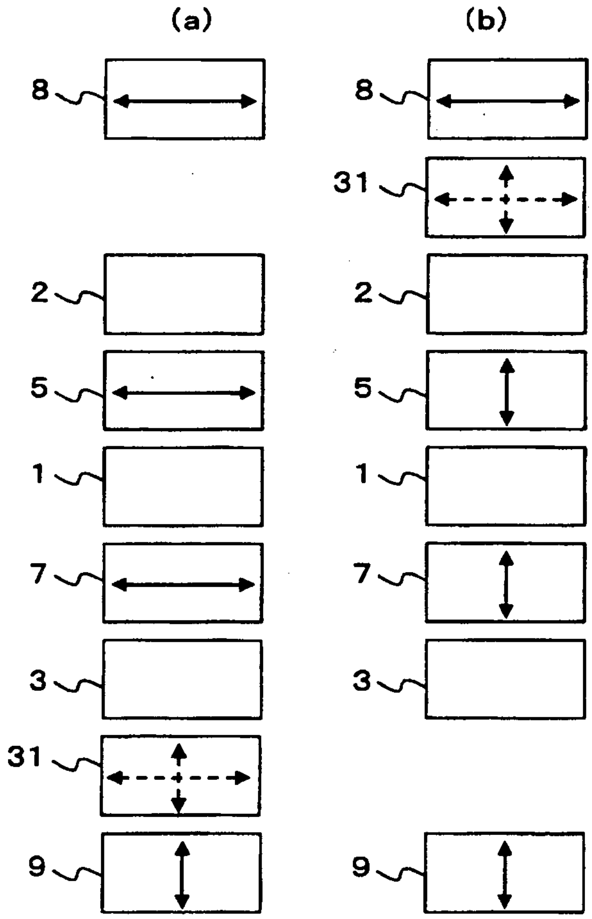

Fig. 18

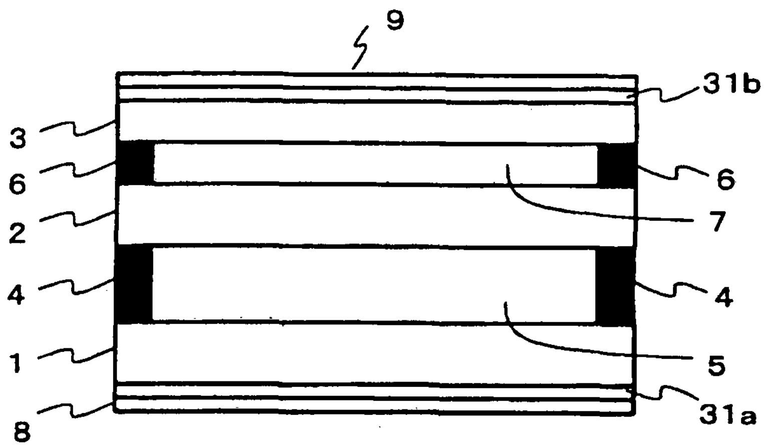


Fig. 19

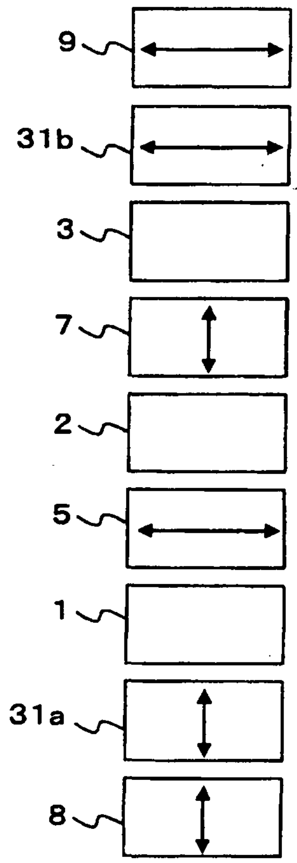

Fig. 20

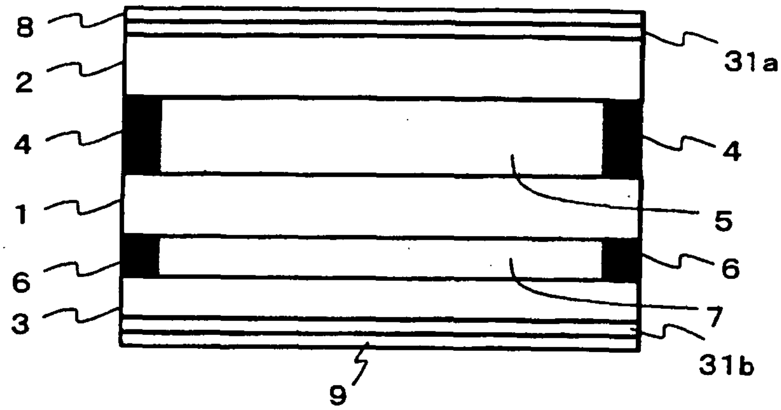


Fig. 21

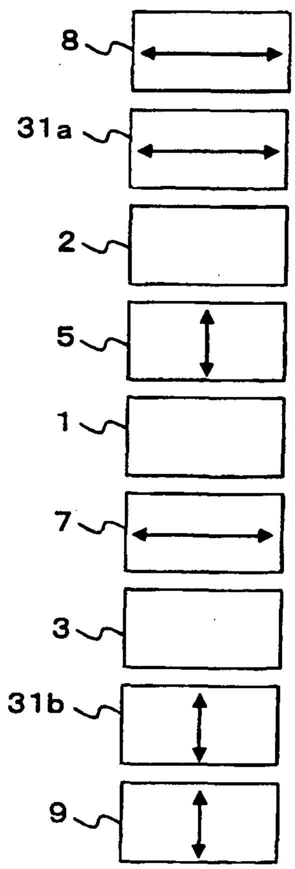

Fig. 22

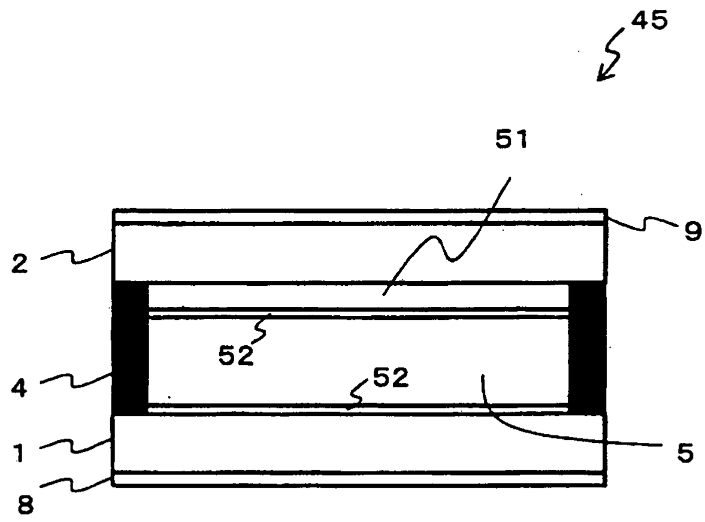


Fig. 23

(a)

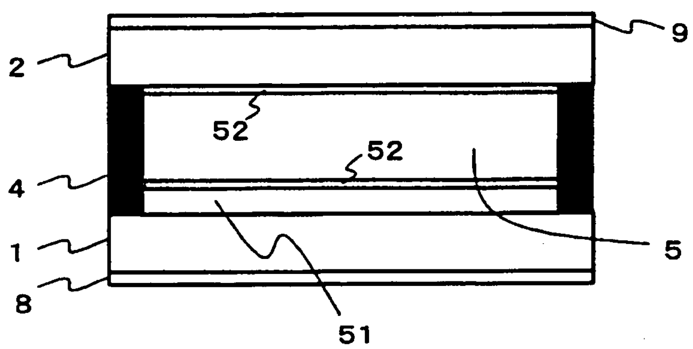


(b)

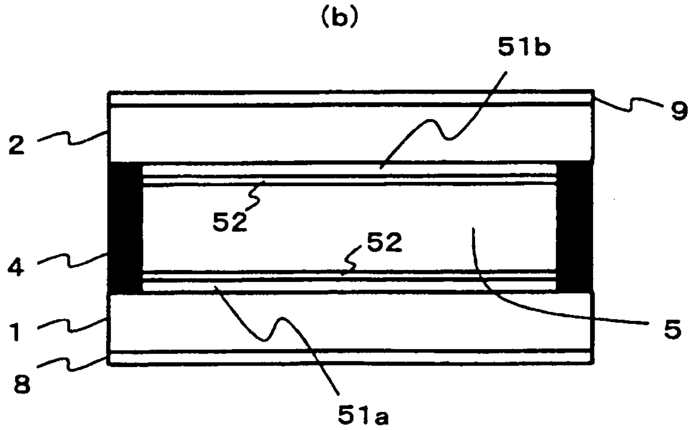

Fig. 24

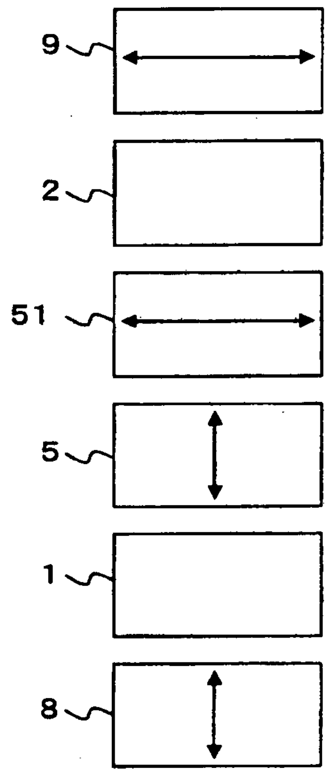

Fig. 25

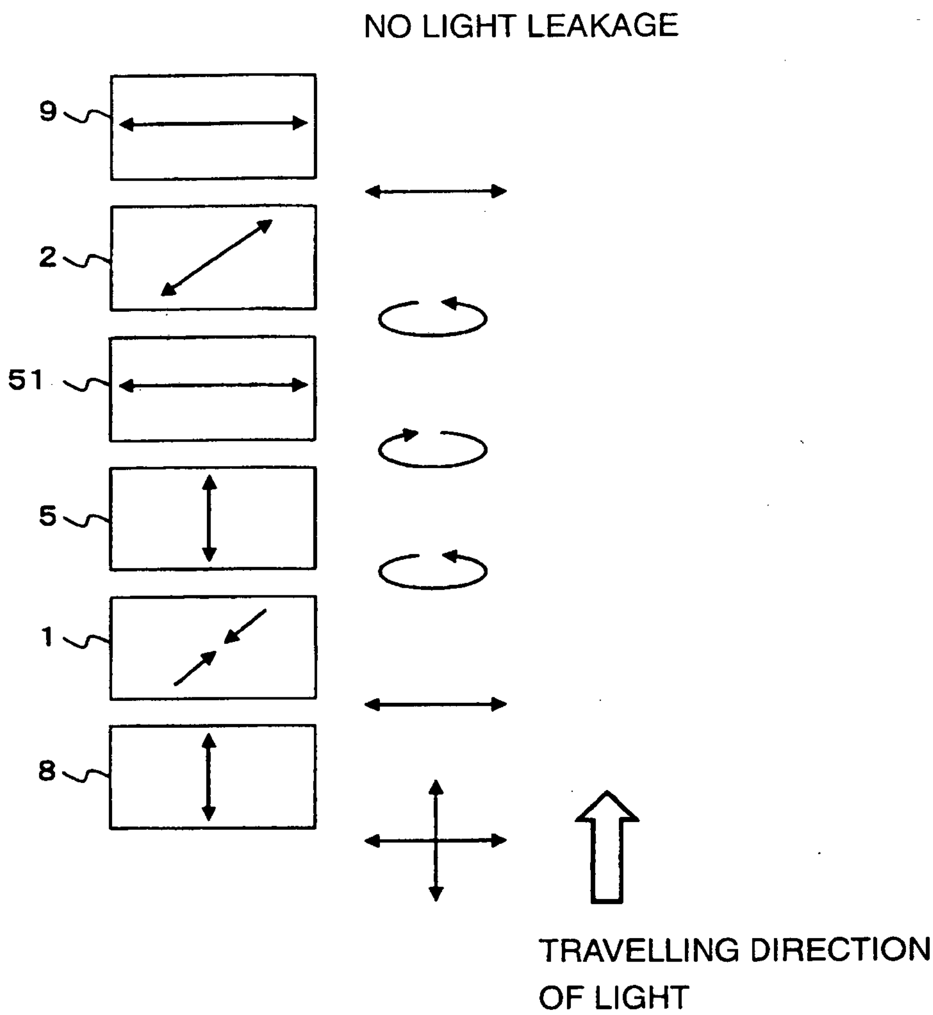

Fig. 26

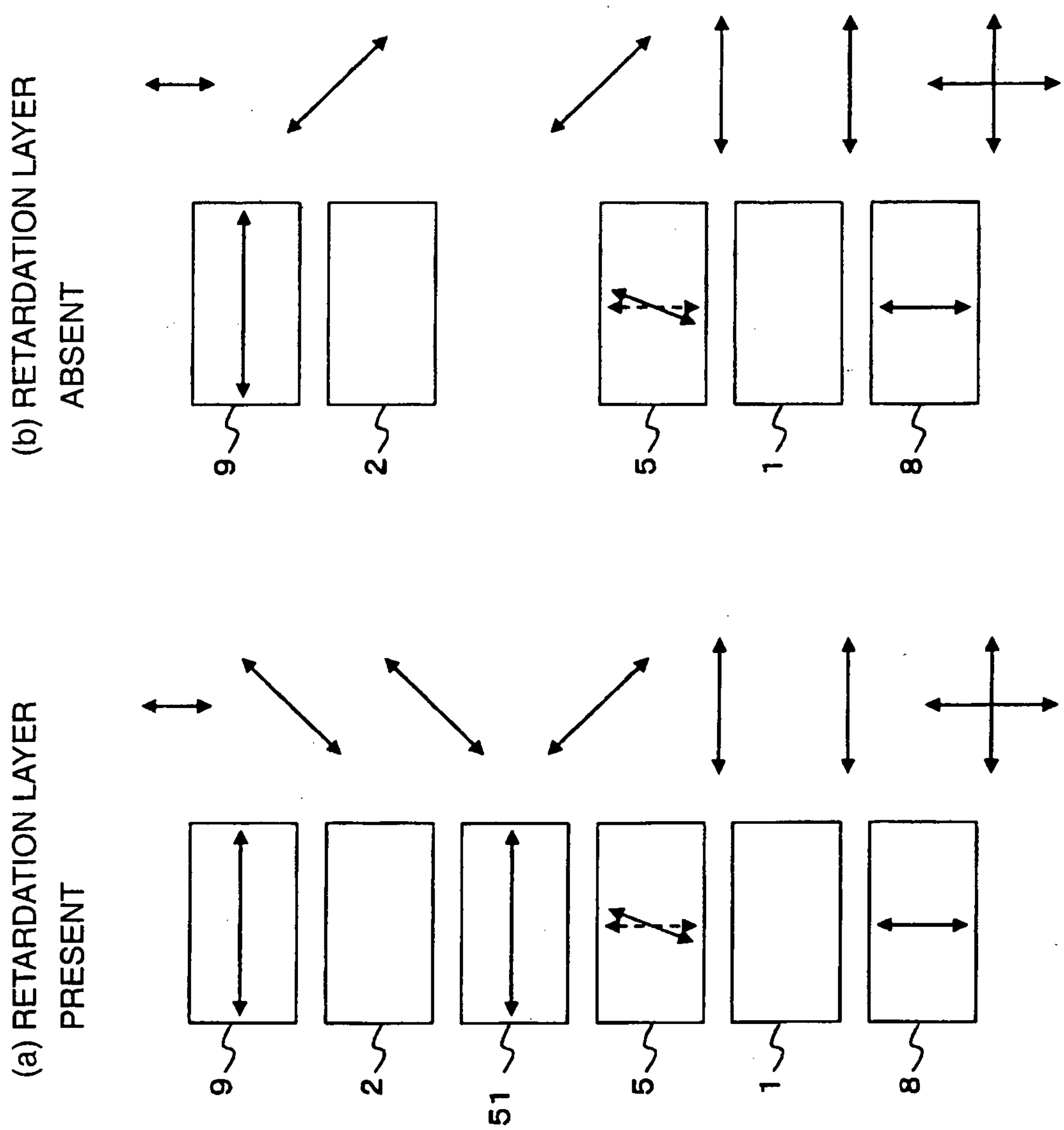
(b) RETARDATION LAYER ABSENT
9
2
5
1
8
(a) RETARDATION LAYER PRESENT
9
2
51
5
1
8

Fig. 27

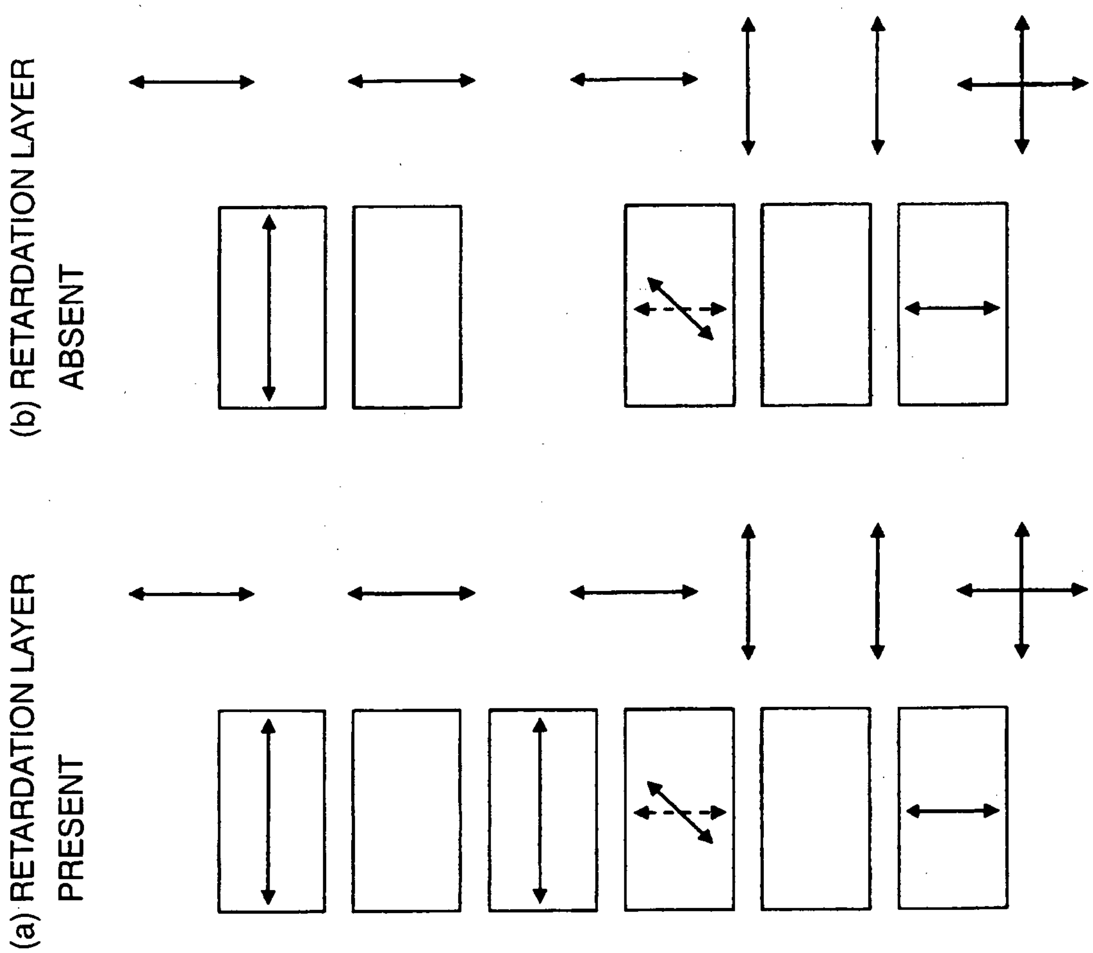

Fig. 28

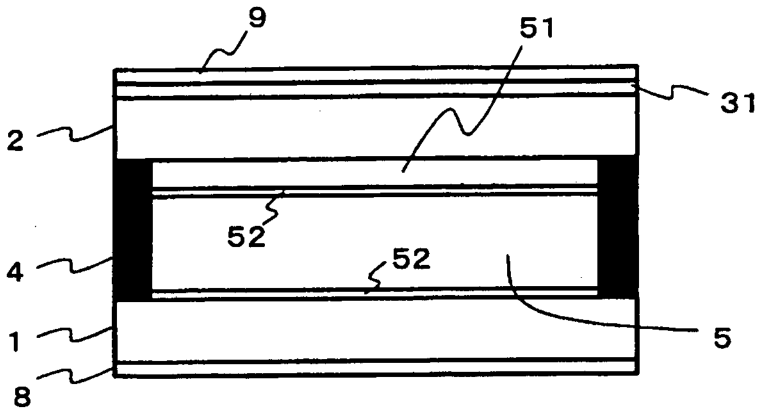


Fig. 29

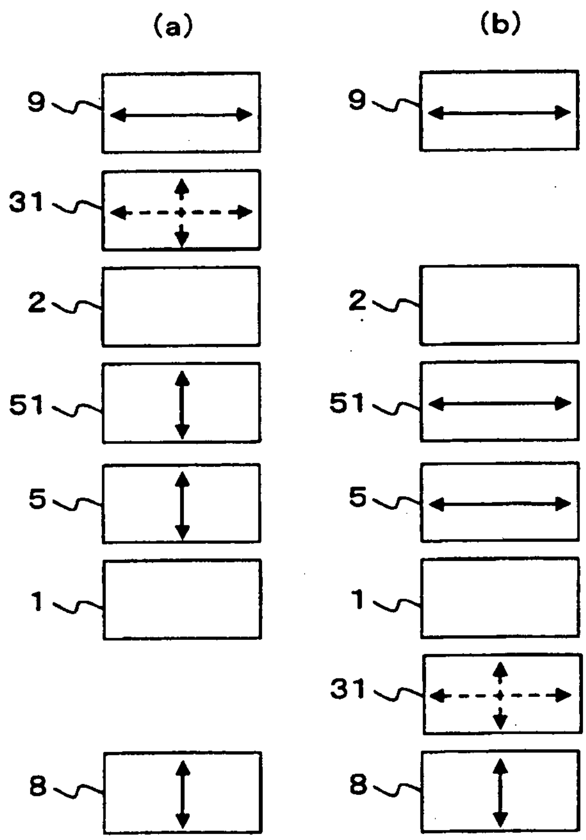

Fig. 30

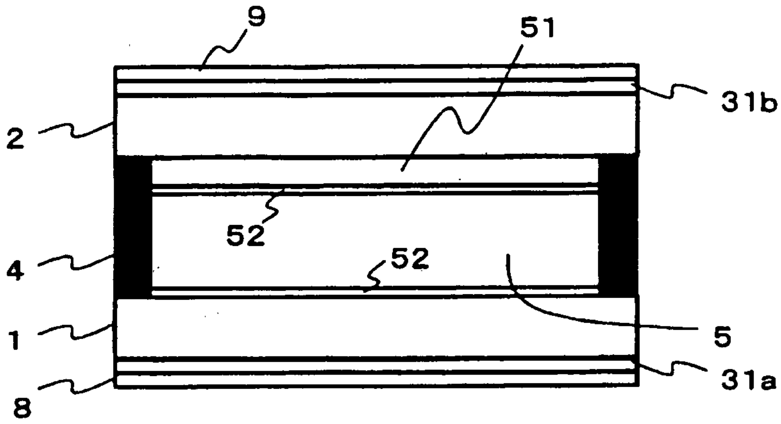


Fig. 31

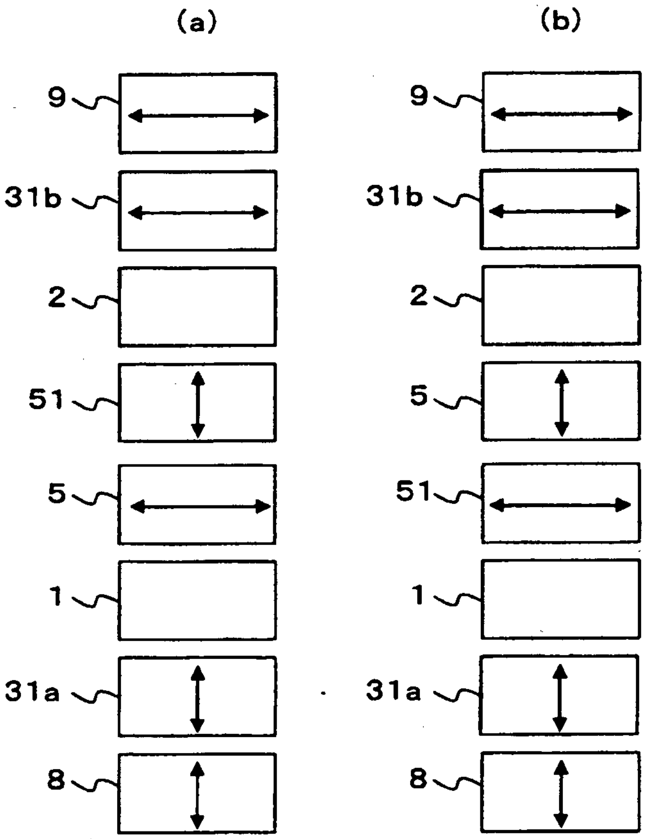

Fig. 32

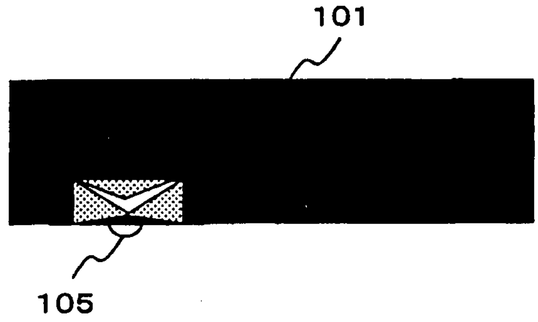
101
105

Fig. 33

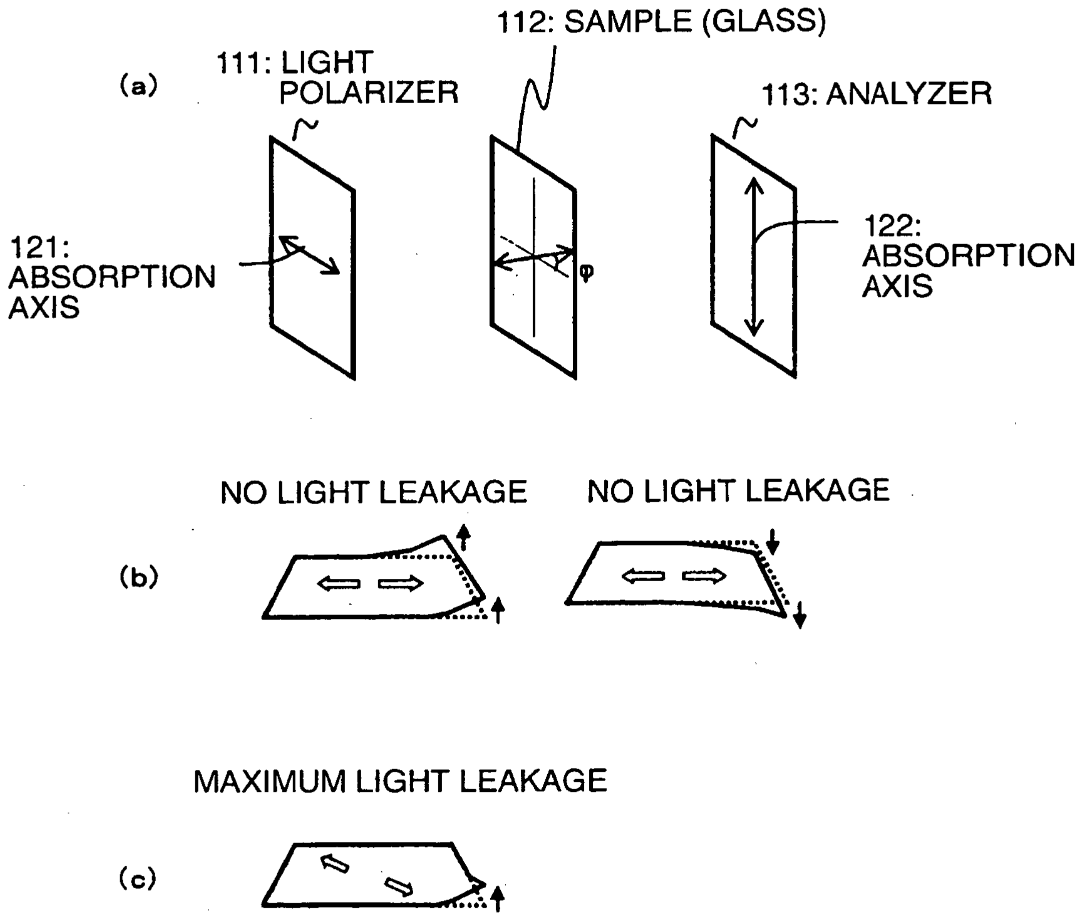
(a)
111: LIGHT POLARIZER
112: SAMPLE (GLASS)
113: ANALYZER
121: ABSORPTION AXIS
122: ABSORPTION AXIS
φ
(b)
NO LIGHT LEAKAGE
NO LIGHT LEAKAGE
(c)
MAXIMUM LIGHT LEAKAGE

Fig. 34

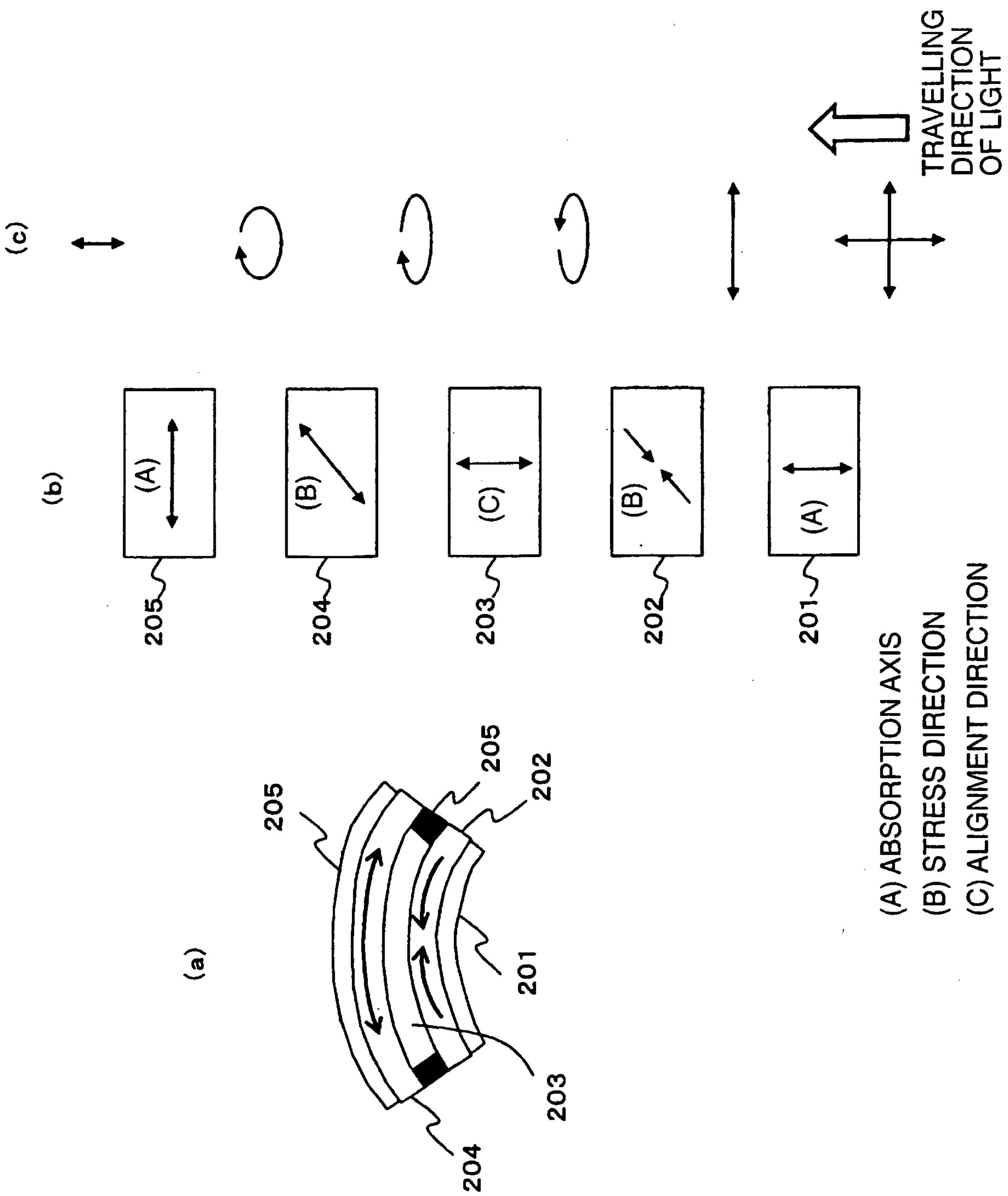
(a)
(b)
(c)
201
202
203
204
205
(A)
(B)
(C)
TRAVELLING DIRECTION OF LIGHT
(A) ABSORPTION AXIS
(B) STRESS DIRECTION
(C) ALIGNMENT DIRECTION

Fig. 35

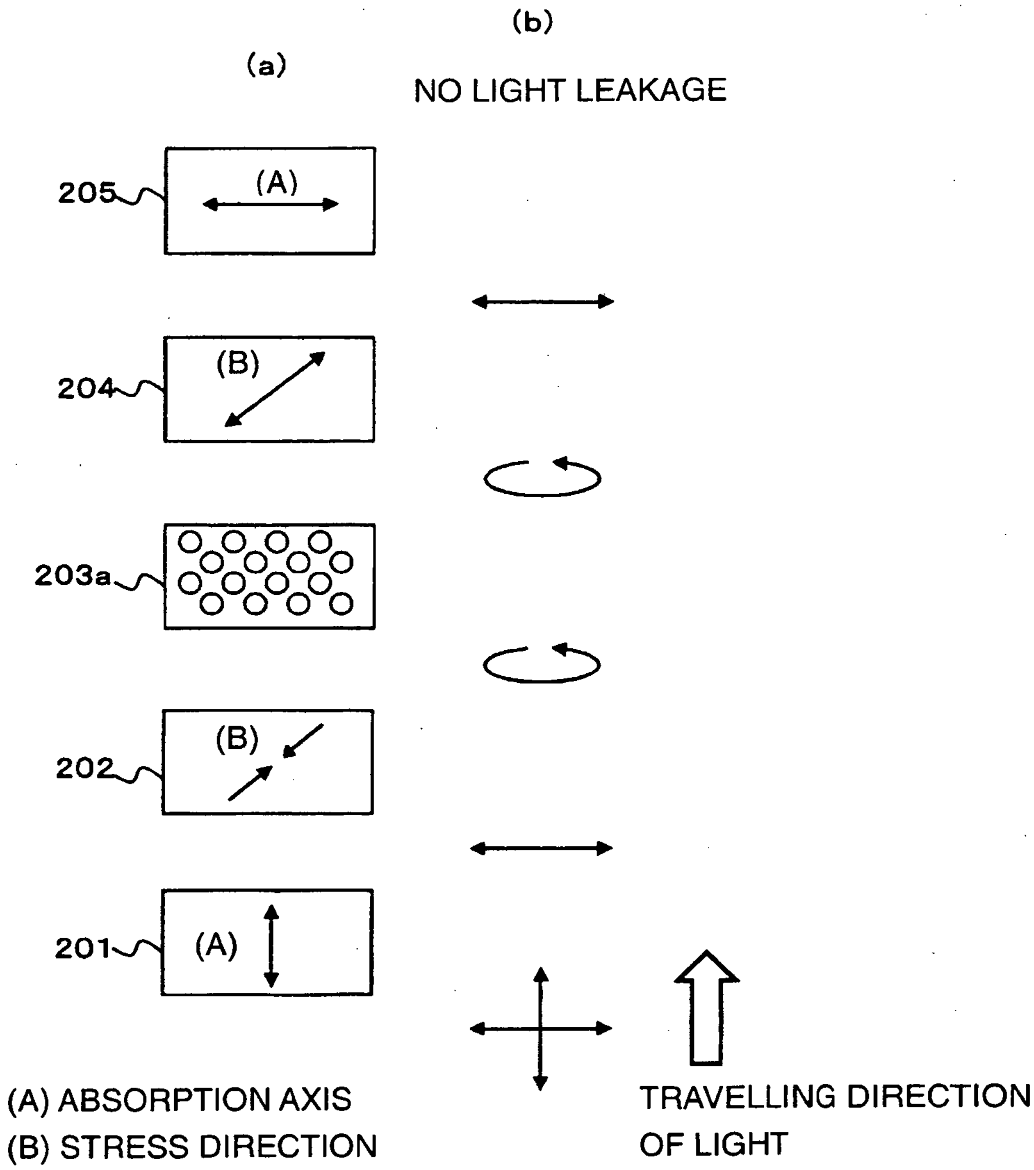
(a)
(b)
NO LIGHT LEAKAGE
205
(A)
204
(B)
203a
202
(B)
201
(A)
(A) ABSORPTION AXIS
(B) STRESS DIRECTION
TRAVELLING DIRECTION
OF LIGHT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006313263 A
- JP 2008116731 A
- JP 2758864 B
- US 2009262288 A1


### Non-patent literature cited in the description


- **Y. SAITOH ; S. KIMURA ; K. FUKASAWA ; H. SHIMIZU.** Optically Compensated In-Plane-Switching-Mode TFT-LCD Panel. *SID Symposium Digest of Technical Papers,* 1998, vol. 29
- **D. KAJITA ; I. HIYAMA ; Y. UTSUMI.** Optically Compensated IPS-LCD for TV Applications. *SID Symposium Digest 2005,* 2005, 1160-1163
- *STRESS OF SYNTHETIC CROSS-SECTIONAL MEMBER,* 07 September 2010, www.e-sunagawa.net/tei01/TEN/pdf/TENno14.pdf>